(19)

Europäisches
Patentamt
European
Patent Office
Office européen
des brevets

(11)　**EP 4 321 978 A1**

(12)　**EUROPEAN PATENT APPLICATION**
published in accordance with Art. 153(4) EPC

(43) Date of publication:
**14.02.2024　Bulletin 2024/07**

(21) Application number: **22794515.1**

(22) Date of filing: **02.04.2022**

(51) International Patent Classification (IPC):
***G06F 3/0481*** (2022.01)

(52) Cooperative Patent Classification (CPC):
**G06F 3/0481; G06F 3/04817; G06F 3/0482;
G06F 3/04842; G06F 3/0486; G06F 9/451**

(86) International application number:
**PCT/CN2022/085006**

(87) International publication number:
**WO 2022/228043 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:　**30.04.2021　CN 202110483897
18.05.2021　CN 202110540296**

(71) Applicant: **Huawei Technologies Co., Ltd.
Shenzhen, Guangdong 518129 (CN)**

(72) Inventor: **LI, Wei
Shenzhen, Guangdong 518129 (CN)**

(74) Representative: **Huawei European IPR
Huawei Technologies Duesseldorf GmbH
Riesstraße 25
80992 München (DE)**

(54)　**DISPLAY METHOD, ELECTRONIC DEVICE, STORAGE MEDIUM AND PROGRAM PRODUCT**

(57)　A display method, an electronic device, a storage medium, and a program product are provided, to manage windows to avoid desktop disorder and a window cascade. The display method includes: displaying a window of a first application at a first position on a display; receiving a first display operation used to display a second application; and in response to the first display operation, displaying the window of the first application and a window of the second application on the display in a tiled manner, where the window of the first application is adjusted to be displayed at a second position, the first position is different from the second position, and the tiled manner means that the displayed windows of the applications do not overlap each other.

FIG. 4(a)

TO
FIG. 4(b)

EP 4 321 978 A1

FIG. 4(b)

FIG. 4(c)

FIG. 4(d)

## Description

This application claims priority to Chinese Patent Application No. 202110483897.8, filed with the China National Intellectual Property Administration on April 30, 2021 and entitled "DISPLAY METHOD AND APPARATUS THEREOF", and to Chinese Patent Application No. 202110540296.6, filed with the China National Intellectual Property Administration on May 18, 2021 and entitled "DISPLAY METHOD AND APPARATUS THEREOF", which are incorporated herein by reference in their entireties.

## TECHNICAL FIELD

This application relates to the field of electronic device technologies, and in particular, to a display method, an electronic device, a storage medium, and a program product.

## BACKGROUND

With continuous development of electronic device technologies, a size of a display of an electronic device is increasingly large, and more applications are installed on the electronic device. To meet a personalized requirement of a user, more electronic devices support a multi-task multi-window display mode. To be specific, one display can simultaneously run and display a plurality of applications. In the multi-task multi-window display mode, windows of all applications are freely displayed on a desktop. In other words, sizes and positions of the windows are random, and different windows may be displayed in a cascade manner. Consequently, the entire desktop of the display is disordered, and the user needs to frequently switch windows and spend a lot of time in finding a target window.

## SUMMARY

In view of the foregoing content, it is necessary to provide a display method, an electronic device, a storage medium, and a program product, to manage windows to avoid desktop disorder and a window cascade.

According to a first aspect, an embodiment of this application provides a display method. The method includes: displaying a window of a first application at a first position on a display; receiving a first display operation used to display a second application; and in response to the first display operation, displaying the window of the first application and a window of the second application on the display in a tiled manner, where the window of the first application is adjusted to be displayed at a second position, the first position is different from the second position, and the tiled manner means that the displayed windows of the applications do not overlap each other.

According to the first aspect of this application, when the window of the first application is already displayed, the position of the window of the first application may be adjusted, and the window of the first application and the window of the second application are displayed on the display in the tiled manner. The windows may be appropriately organized and displayed on the display, so that the windows are displayed more flexibly. In addition, the windows are displayed on the display in the tiled manner, so that desktop disorder and a window cascade are avoided, a desktop is more aesthetic, and user comfort is improved.

According to some embodiments of this application, the method further includes: if a focusing operation used to focus on a displayed window of an application is received, in response to the focusing operation, displaying the focused window of the application on the display in a close-to-full-screen size, and displaying a displayed window of the other application in a scaled-down form, where the displayed windows of the applications do not overlap each other, the focused window of the application is an activated window, and the displayed window that is of the other application and that is displayed in the scaled-down form is an inactivated window.

In this application, the window of the application is focused on, so that a user can focus on the application, and interference of the user by the other application is avoided as much as possible, thereby improving work efficiency. The focused window of the application is an activated window, and the window of the other application is an inactivated window, so that impact caused by a misoperation of the user can be avoided. The window of the other application is displayed in the scaled-down form for the user to perform a subsequent operation.

According to some embodiments of this application, the method further includes: receiving an activation operation used to activate the window that is of the application and that is displayed in the scaled-down form; and in response to the activation operation, enabling the focused window of the application and the activated window of the application to exchange relative positions on the display.

In this application, the window that is of the application and that is displayed in the scaled-down form is activated, so that a focused application may be switched, and a subsequent operation may be performed.

According to some embodiments of this application, the method further includes: if a first maximization operation used to maximize a displayed window of an application is received, in response to the first maximization operation, displaying a maximized window of the application on the display in a full-screen size, and hiding a displayed window of the other application.

In this application, the displayed window of the application is maximized, so that the user can conveniently view information about the application, and the user can focus more on the application.

According to some embodiments of this application, the method further includes: receiving a second display operation used to display a current application; and in response to the second display operation, displaying the current application on the maximized window of the application in a form of a floating window.

In this application, the current application is displayed, so that when the maximized application is displayed, the application displayed in the form of a floating window may be further viewed, and it may be avoided as much as possible that the window of the maximized application is blocked when the application is displayed in a form of a large window.

According to some embodiments of this application, the method further includes: receiving an operation performed on the displayed maximized window of the application; and in response to the operation, hiding the displayed floating window of the current application.

In this application, the floating window is hidden when the operation is performed on the maximized window of the application, so that the user can focus on the maximized application during the operation, and the floating window is prevented from blocking the maximized window of the application.

According to some embodiments of this application, the method further includes: receiving a second maximization operation used to maximize the displayed floating window of the current application; and in response to the second maximization operation, displaying a maximized floating window of the current application on the display in the full-screen size, and hiding a displayed window of the other application.

In this application, the application displayed in the floating window is maximized, and the maximized application may be switched.

According to some embodiments of this application, the hiding a displayed window of other application includes: displaying a floating ball of the other displayed application on the maximized window of the application.

In this application, the floating ball of the other displayed application is displayed on the maximized window of the application, so that the other application can be simultaneously displayed, thereby facilitating a subsequent operation performed by the user on the other application.

According to some embodiments of this application, the method further includes: if a retrieval operation used to retrieve a previously hidden application is received, in response to the retrieval operation, displaying a floating ball of the previously hidden application on a displayed window of an application.

In this application, the floating ball of the previously hidden application is displayed on the displayed window of the application, so that the user can be notified of the previously hidden application.

According to some embodiments of this application, the method further includes: receiving a selection operation used to select a floating ball of an application; and in response to the selection operation, hiding a last displayed window of an application in the displayed windows of the applications, and displaying, on the display in a tiled manner, a displayed window of the other application and a window of the application corresponding to the selected floating ball, where a position of the window of the other application is adjusted for display.

In this application, the last displayed window of the application is hidden, the position of the displayed window of the other application is adjusted, and the displayed window of the other application and the window of the application corresponding to the selected floating ball are displayed in the tiled manner, so that the hidden window of the application can be retrieved.

According to some embodiments of this application, the displaying the window of the first application and a window of the second application on the display in a tiled manner, where the window of the first application is adjusted to be displayed at a second position, and the first position is different from the second position includes: if remaining space on the display meets a display condition of the second application, adjusting a first margin parameter between the window of the first application and an edge of the display, and displaying the window of the first application and the window of the second application based on an adjusted first margin parameter, where the remaining space on the display is space in which no window is displayed on the display.

In this application, the margin parameter between the window of the first application and the edge of the display is adjusted based on the remaining space and the window of the second application, so that the display position of the first application can be adjusted, and the window of the first application and the window of the second application can be displayed on the display in the tiled manner.

According to some embodiments of this application, the method further includes: adjusting a distance parameter between the windows of the first applications. The displaying the window of the first application and the window of the second application based on an adjusted first margin parameter includes: displaying the windows of the first applications and the window of the second application based on the adjusted first margin parameter and an adjusted distance parameter.

In this application, the distance parameter between the windows of the first applications is adjusted, so that when there are a plurality of first applications, the windows may also be managed.

According to some embodiments of this application, the displaying the window of the first application and the window of the second application includes: displaying the window of the first application and the window of the second application in a specific arrangement sequence based on an opening sequence of the applications, where the arrangement sequence includes one of a left-to-right sequence and a right-to-left sequence.

In this application, the window of the first application and the window of the second application are displayed in the specific arrangement sequence based on the opening sequence of the applications, so that the desktop is more aesthetic and not messy, and user comfort can be further improved.

According to some embodiments of this application, the method further includes: if the remaining space on the display does not meet the display condition of the second application, hiding a window of a first application that is first displayed in the windows of the first applications, adjusting a second margin parameter between a window of another first application and the edge of the display, and displaying the window of the another first application and the window of the second application based on an adjusted second margin parameter, where the displayed windows of the applications do not overlap each other.

In this application, if the remaining space on the display does not meet the display condition of the second application, the second application may still be displayed on the display, and the another first application in the first applications may be simultaneously displayed for the user to perform an operation. This has high flexibility, and effectively improves user experience.

According to some embodiments of this application, the window of the application includes a horizontal window and a vertical window, and the displayed windows of the applications on the display have a plurality of display manners based on different arrangements of the horizontal window and the vertical window on the display. The method further includes: switching a display manner of the displayed windows of the applications from a first display manner to a second display manner, where the first display manner and the second display manner each are any one of the plurality of display manners, and the first display manner is different from the second display manner.

In this application, the window of the application includes the horizontal window and the vertical window, so that a display manner in a case in which the horizontal window and the vertical window are mixed is provided.

According to some embodiments of this application, the displaying the window of the first application and a window of the second application on the display in a tiled manner, where the window of the first application is adjusted to be displayed at a second position, and the first position is different from the second position includes: if remaining space on the display meets a display condition of the second application, maintaining a first margin parameter between the window of the first application and an edge of the display; adjusting a width of the window of the first application; and displaying the window of the first application and the window of the second application based on the maintained first margin parameter between the window of the first application and the edge of the display and an adjusted width of the window of the first application, where the remaining space on the display is space in which no window is displayed on the display.

In this application, the width of the window of the first application is adjusted based on the remaining space and the window of the second application, so that the display position of the first application can be adjusted, and the window of the first application and the window of the second application can be displayed on the display in the tiled manner.

According to some embodiments of this application, the method further includes: maintaining a distance parameter between the windows of the first applications. The displaying the window of the first application and the window of the second application based on the maintained first margin parameter between the window of the first application and the edge of the display and an adjusted width of the window of the first application includes: displaying the windows of the first applications and the window of the second application based on the maintained first margin parameter between the window of the first application and the edge of the display, the maintained distance parameter between the windows of the first applications, and the adjusted width of the window of the first application.

In this application, the distance parameter between the windows of the first applications is maintained, so that when there are a plurality of first applications, the windows may also be managed.

According to some embodiments of this application, the method further includes: adjusting a height of the window of the first application. The displaying the window of the first application and the window of the second application based on the maintained first margin parameter between the window of the first application and the edge of the display and an adjusted width of the window of the first application includes: displaying the window of the first application and the window of the second application based on the maintained first margin parameter between the window of the first application and the edge of the display, an adjusted height of the window of the first application, and the adjusted width of the window of the first application.

In this application, the height of the window of the first application is adjusted when the width of the first application is adjusted, so that the display position of the first application can still be adjusted when the window does not support free scaling, and the window of the first application and the window of the second application are displayed on the display in the tiled manner.

According to some embodiments of this application, the method further includes: if the remaining space on the display does not meet the display condition of the second application, hiding a window of a first application that is first displayed in the windows of the first applications, maintaining a second margin parameter between a window of another first application and the edge of the display, adjusting a width of the window of the another first application, and displaying the window of the first application and the window of the second application based on the maintained second margin parameter between the window of the another first application and the edge of the display and an adjusted width of the window of the another first application, where the displayed windows of the applications do not overlap each other.

In this application, if the remaining space on the display does not meet the display condition of the second application, the width of the window of the first application is adjusted, so that the second application may still be displayed on the display, and the another first application in the first applications may be simultaneously displayed for the user to perform an operation. This has high flexibility, and effectively improves user experience.

According to a second aspect, an embodiment of this application provides an electronic device, including a processor, a memory, and a display. The memory is configured to store computer-executable instructions, and when the electronic device runs, the processor executes the computer-executable instructions, so that the electronic device performs the following operations: displaying a window of a first application at a first position on a display; receiving a first display operation used to display a second application; and in response to the first display operation, displaying the window of the first application and a window of the second application on the display in a tiled manner, where the window of the first application is adjusted to be displayed at a second position, the first position is different from the second position, and the tiled manner means that the displayed windows of the applications do not overlap each other.

According to some embodiments of this application, the processor executes the computer instructions, so that the electronic device further performs the following operations: if a focusing operation used to focus on a displayed window of an application is received, in response to the focusing operation, displaying the focused window of the application on the display in a close-to-full-screen size, and displaying a displayed window of the other application in a scaled-down form, where the displayed windows of the applications do not overlap each other, the focused window of the application is an activated window, and the displayed window that is of the other application and that is displayed in the scaled-down form is an inactivated window.

According to some embodiments of this application, the processor executes the computer instructions, so that the electronic device further performs the following operations: receiving an activation operation used to activate the window that is of the application and that is displayed in the scaled-down form; and in response to the activation operation, enabling the focused window of the application and the activated window of the application to exchange relative positions on the display.

According to some embodiments of this application, the processor executes the computer instructions, so that the electronic device further performs the following operation: if a first maximization operation used to maximize a displayed window of an application is received, in response to the first maximization operation, displaying a maximized window of the application on the display in a full-screen size, and hiding a displayed window of the other application.

According to some embodiments of this application, the processor executes the computer instructions, so that the electronic device further performs the following operations: receiving a second display operation used to display a current application; and in response to the second display operation, displaying the current application on the maximized window of the application in a form of a floating window.

According to some embodiments of this application, the processor executes the computer instructions, so that the electronic device further performs the following operations: receiving an operation performed on the displayed maximized window of the application; and in response to the operation, hiding the displayed floating window of the current application.

According to some embodiments of this application, the processor executes the computer instructions, so that the electronic device further performs the following operations: receiving a second maximization operation used to maximize the displayed floating window of the current application; and in response to the second maximization operation, displaying a maximized floating window of the current application on the display in the full-screen size, and hiding a displayed window of the other application.

According to some embodiments of this application, the processor executes the computer instructions, so that the electronic device further performs the following operation: displaying a floating ball of the another displayed application on the maximized window of the application.

According to some embodiments of this application, the processor executes the computer instructions, so that the electronic device further performs the following operation: if a retrieval operation used to retrieve a previously hidden application is received, in response to the retrieval operation, displaying a floating ball of the previously hidden application on a displayed window of an application.

According to some embodiments of this application, the processor executes the computer instructions, so that the electronic device further performs the following operations: receiving a selection operation used to select a floating ball of an application; and in response to the selection operation, hiding a last displayed window of an application in the displayed windows of the applications, and displaying, on the display in a tiled manner, a displayed window of the other application and a window of the application corresponding to the selected floating ball, where a position of the window of the other application is adjusted for display.

According to some embodiments of this application, the processor executes the computer instructions, so that the electronic device further performs the following operations: if remaining space on the display meets a display condition of the second application, adjusting a first margin parameter between the window of the first application and an edge of the display, and displaying the window of the first application and the window of the second application based on an adjusted first margin parameter, where the remaining space on the display is space in which no window is displayed on the display.

According to some embodiments of this application, the processor executes the computer instructions, so that the electronic device further performs the following operations: adjusting a distance parameter between the windows of the first applications; and displaying the windows of the first applications and the window of the second application based on the adjusted first margin parameter and an adjusted distance parameter.

According to some embodiments of this application, the processor executes the computer instruction, so that the electronic device further performs the following operation: displaying the window of the first application and the window of the second application in a specific arrangement sequence based on an opening sequence of the applications, where the arrangement sequence includes one of a left-to-right sequence and a right-to-left sequence.

According to some embodiments of this application, the processor executes the computer instructions, so that the electronic device further performs the following operations: if the remaining space on the display does not meet the display condition of the second application, hiding a window of a first application that is first displayed in the windows of the first applications, adjusting a second margin parameter between a window of another first application and the edge of the display, and displaying the window of the another first application and the window of the second application based on an adjusted second margin parameter, where the displayed windows of the applications do not overlap each other.

According to some embodiments of this application, the window of the application includes a horizontal window and a vertical window, and the displayed windows of the applications on the display have a plurality of display manners based on different arrangements of the horizontal window and the vertical window on the display. The processor executes the computer instructions, so that the electronic device further performs the following operations: switching a display manner of the displayed windows of the applications from a first display manner to a second display manner, where the first display manner and the second display manner each are any one of the plurality of display manners, and the first display manner is different from the second display manner.

According to a third aspect, an embodiment of this application further provides a computer storage medium. The computer storage medium includes computer instructions, and when the computer instructions are run on an electronic device, the electronic device is enabled to perform the display method according to any one of the possible implementations of the first aspect.

According to a fourth aspect, an embodiment of this application further provides a computer program product. When program code included in the computer program product is executed by a processor in an electronic device, the display method according to any one of the possible implementations of the first aspect is implemented.

For detailed descriptions of the second aspect to the fourth aspect and various implementations thereof in this application, refer to detailed descriptions of the first aspect and the various implementations thereof. In addition, for beneficial effect of the second aspect to the fourth aspect and the various implementations thereof, refer to the analysis of beneficial effect of the first aspect and the various implementations thereof. Details are not described herein again.

## BRIEF DESCRIPTION OF DRAWINGS

FIG. 1 is a schematic diagram of a hardware structure of an electronic device according to an embodiment of this application;

FIG. 2 is a schematic diagram of a software structure of an electronic device according to an embodiment of this application;

FIG. 3 is a schematic diagram of a user interface according to an embodiment of this application;

FIG. 4(a) to FIG. 4(d) are a schematic diagram of some application interfaces according to an embodiment of this application;

FIG. 5A is a schematic diagram of an area occupied by a window in available desktop space according to an embodiment of this application;

FIG. 5B is a schematic diagram in which windows are tiled in available desktop space according to an embodiment of this application;

FIG. 5C is a schematic diagram in which windows are tiled in available desktop space and on a desktop of a terminal according to an embodiment of this application;

FIG. 5D is another schematic diagram in which windows are tiled in available desktop space according to an embodiment of this application;

FIG. 5E is another schematic diagram in which windows are tiled in available desktop space according to an embodiment of this application;

FIG. 6(a) to FIG. 6(c) are a schematic diagram of some other application interfaces according to an embodiment of this application;

FIG. 7(a) to FIG. 7(j) are a schematic diagram of ten display manners of a window according to an embodiment of this application;

FIG. 8(a) to FIG. 8(d) are a schematic diagram of switching a display manner of a window according to an embodiment of this application;

FIG. 9(a) and FIG. 9(b) are a schematic diagram of switching an application interface to a focus mode according to an embodiment of this application;

FIG. 10(a) and FIG. 10(b) are a schematic diagram of some other application interfaces according to an embodiment of this application;

FIG. 11(a) and FIG. 11(b) are a schematic diagram of some other application interfaces according to an embodiment of this application;

FIG. 12(a) and FIG. 12(b) are a schematic diagram of switching an application interface to a full-screen mode according to an embodiment of this application;

FIG. 13(a) and FIG. 13(b) are a schematic diagram of some other application interfaces according to an embodiment of this application;

FIG. 14(a) and FIG. 14(b) are a schematic diagram of some other application interfaces according to an embodiment of this application;

FIG. 15(a) and FIG. 15(b) are a schematic diagram of some other application interfaces according to an embodiment of this application;

FIG. 16(a) to FIG. 16(c) are a schematic diagram of switching an application interface to a retrieval mode according to an embodiment of this application;

FIG. 17 is a flowchart of a display method according to an embodiment of this application; and

FIG. 18 is a schematic block diagram of an electronic device according to an embodiment of this application.

## DESCRIPTION OF EMBODIMENTS

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, the words such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

Unless otherwise defined, all technical and scientific terms used in this specification have same meanings as those usually understood by a person skilled in the art of this application. Terms used in the specification of this application are merely for the purpose of describing specific embodiments, but are not intended to limit this application. It should be understood that, in this application, unless otherwise specified, "a plurality of" means two or more, and "and/or" includes any or all combinations of one or more of associated listed items.

An area division management manner is provided in the conventional technology. A user needs to divide a desktop into different areas in advance, so that when a plurality of applications are started, a window of each application may be displayed in one area based on a window opening sequence. In this way, a plurality of windows can be displayed simultaneously without blocking each other. However, this requires the user to perform an operation to divide the windows and perform an operation to display the windows in the areas. Therefore, a usage barrier for the user is high. In addition, after the desktop is divided, the areas are fixed, and therefore flexibility is insufficient. In this case, the windows cannot be dynamically and adaptively adjusted for display based on different requirements of the user.

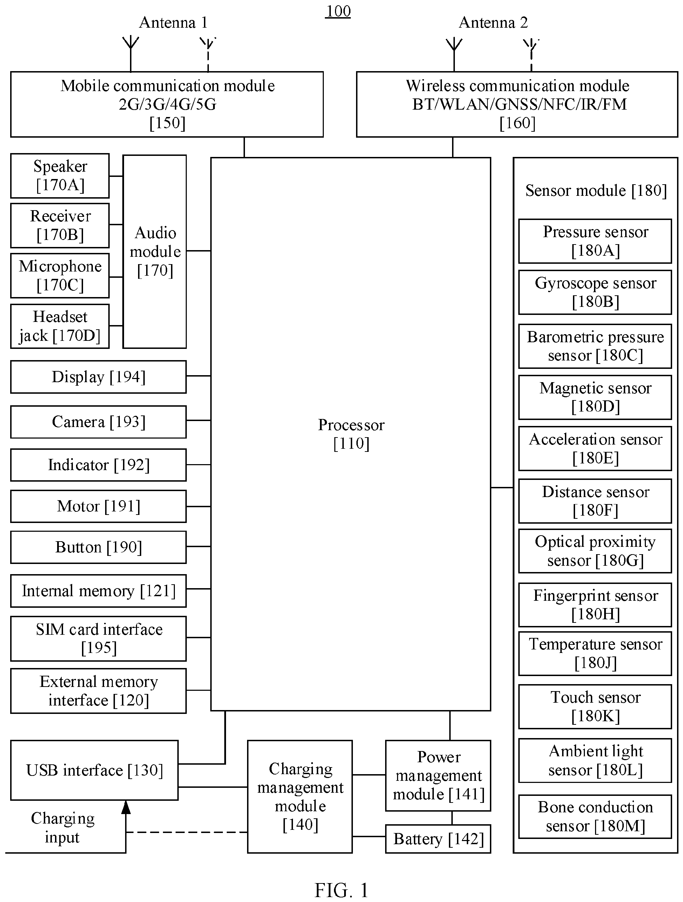

FIG. 1 is a schematic diagram of a hardware structure of an electronic device according to an embodiment of this application. FIG. 1 is a schematic diagram of a structure of an electronic device 100. The electronic device 100 may include at least one of a mobile phone, a tablet computer, a desktop computer, a laptop computer, a handheld computer, a notebook computer, an ultra-mobile personal computer (ultra-mobile personal computer, UMPC), a netbook, a personal digital assistant (personal digital assistant, PDA), a smart television, a cellular phone, and the like. A specific type of the electronic device 100 is not particularly limited in embodiments of this application.

The electronic device 100 may include a processor 110, an external memory interface 120, an internal memory 121, a universal serial bus (universal serial bus, USB) connector 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The processor may generate an operation control signal based on an instruction operation code and a time sequence signal to complete control of instruction fetching and instruction execution.

A memory may be further disposed in the processor 110, and is configured to store instructions and data. In some embodiments, the memory in the processor 110 may be a cache. The memory may store instructions or data just used or frequently used by the processor 110. If the processor 110 needs to use the instructions or the data, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The processor 110 may be connected to modules such as a touch sensor, an audio module, a wireless communication module, a display, and a camera by using at least one of the interfaces.

It may be understood that an interface connection relationship between the modules shown in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The USB connector 130 is an interface that conforms to a USB standard specification, may be configured to connect the electronic device 100 and a peripheral device, and may be specifically a mini USB connector, a micro USB connector, a USB type-C connector, or the like. The USB connector 130 may be configured to connect to a charger, so that the charger charges the electronic device 100; may be configured to connect to another electronic device to transmit data between the electronic device 100 and the another electronic device; and may also be configured to connect to a headset, and output an audio stored in the electronic device through the headset. The connector may be further configured to connect to another electronic device, for example, a VR device. In some embodiments, the universal serial bus standard specification may be USB1.x, USB2.0, USB3.x, and USB4.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to be connected to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), Bluetooth low energy (Bluetooth low energy, BLE), an ultra-wideband (ultra-wideband, UWB), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another electronic device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or more displays 194.

The electronic device 100 may implement a photographing function by using the camera module 193, the ISP, the video codec, the GPU, the display 194, the application processor AP, the neural-network processing unit NPU, and the like.

The camera module 193 may be configured to collect color image data and depth data of a photographed object. The ISP may be configured to process the color image data collected by the camera module 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera module 193.

In some embodiments, the camera module 193 may include a color camera module and a 3D sensing module.

In some embodiments, a light-sensitive element of a camera of the color camera module may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV.

In some embodiments, the 3D sensing module may be a time of light (time of flight, TOF) 3D sensing module or a structured light (structured light) 3D sensing module. Structured light 3D sensing is an active depth sensing technology, and basic components of the structured light 3D sensing module may include an infrared (Infrared) transmitter, an IR camera module, and the like. A working principle of the structured light 3D sensing module is to first transmit a light spot of a specific pattern (pattern) to a photographed object, and then receive coding of the light spot of the pattern (light coding) on a surface of the object, to compare the light spot with an original projected light spot in terms of a similarity and a difference, and calculate three-dimensional coordinates of the object according to a trigonometric principle. The three-dimensional coordinates include a distance between the electronic device 100 and the photographed object. TOF 3D sensing may be an active depth sensing technology, and basic components of the TOF 3D sensing module may include an infrared (Infrared) transmitter, an IR camera module, and the like. A working principle of the TOF 3D sensing module is to calculate a distance (namely, a depth) between the TOF 3D sensing module and a photographed object by using an infrared refraction time, to obtain a 3D depth-of-field image.

The structured light 3D sensing module may be further applied to fields such as facial recognition, somatic game console, and industrial machine vision detection. The TOF 3D sensing module may be further applied to fields such as a game console and augmented reality (augmented reality, AR)/virtual reality (virtual reality, VR).

In some other embodiments, the camera module 193 may alternatively include two or more cameras. The two or more cameras may include a color camera, and the color camera may be configured to collect color image data of a photographed object. The two or more cameras may collect depth data of the photographed object by using a stereo vision (stereo vision) technology. The stereo vision technology is based on a principle of a parallax of human eyes. Under a natural light source, two or more cameras are used to photograph an image of a same object from different angles, and then an operation such as a triangulation method is performed to obtain distance information, namely, depth information, between the electronic device 100 and the photographed object.

In some embodiments, the electronic device 100 may include one or more camera modules 193. Specifically, the electronic device 100 may include one front-facing camera module 193 and one rear-facing camera module 193. The front-facing camera module 193 may be usually configured to collect color image data and depth data of a photographer facing the display 194, and the rear-facing camera module may be configured to collect color image data and depth data of a photographed object (such as a character or a scenery) facing the photographer.

In some embodiments, the CPU, the GPU, or the NPU in the processor 110 may process color image data and depth data that are collected by the camera module 193. In some embodiments, the NPU may identify, by using a neural network algorithm based on a skeleton point identification technology, for example, a convolutional neural network (CNN) algorithm, color image data collected by the camera module 193 (specifically, the color camera module), to determine a skeleton point of the photographed character. The CPU or the GPU may also run the neural network algorithm to determine the skeleton point of the photographed character based on the color image data. In some embodiments, the CPU, the GPU, or the NPU may be further configured to: determine a figure (for example, a body proportion and a fatness and thinness degree of a body part between skeleton points) of the photographed character based on the depth data collected by the camera module 193 (which may be the 3D sensing module) and the identified skeleton point, further determine a body beautification parameter for the photographed character, and finally process a photographed image of the photographed character based on the body beautification parameter, so that a body shape of the photographed character in the photographed image is beautified. In a subsequent embodiment, how to perform body shaping processing on an image of a photographed character based on color image data and depth data that are collected by the camera module 193 is described in detail. Details are not described herein.

The digital signal processor is configured to process a digital signal, and may further process another digital signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, voice recognition, and text understanding.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card. Alternatively, files such as music and videos are transmitted from the electronic device to the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (for example, audio data, a phone book, and the like) created in a process of using the electronic device 100, and the like. In addition, the internal memory 121 may include a high-speed random access memory, and may further include a nonvolatile memory, for example, at least one magnetic disk storage device, a flash memory device, or a universal flash storage (universal flash storage, UFS). The processor 110 runs the instructions stored in the internal memory 121 and/or the instructions stored in the memory disposed in the processor, to perform various function methods of the electronic device 100 or data processing.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be configured to listen to music or output an audio signal of a hands-free call by using the speaker 170A.

The receiver 170B, also referred to as an "earpiece", is configured to convert an electrical audio signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending voice information, the user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch position based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on a Messaging application icon, an instruction for viewing an SMS message is performed. When a touch operation whose touch operation intensity is greater than or equal to the first pressure threshold is performed on the Messaging application icon, an instruction for creating a new SMS message is performed.

The gyroscope sensor 180B may be configured to determine a motion posture of the electronic device 100. In some embodiments, an angular velocity of the electronic device 100 around three axes (namely, axes x, y, and z) may be determined through the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and controls the lens to cancel the jitter of the electronic device 100 through reverse motion, to implement image stabilization. The gyroscope sensor 180B may be further used in a navigation scenario and a somatic game scenario.

The barometric pressure sensor 180C is configured to measure barometric pressure. In some embodiments, the electronic device 100 calculates an altitude based on the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. When the electronic device is a foldable electronic device, the magnetic sensor 180D may be configured to detect folding, unfolding, or a folding angle of the electronic device. In some embodiments, when the electronic device 100 is a flip phone, the electronic device 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect magnitude of accelerations in various directions (usually on three axes) of the electronic device 100, and may detect magnitude and a direction of the gravity when the electronic device 100 is still. The acceleration sensor may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light emitting diode (LED) and an optical detector, for example, a photodiode. The light emitting diode may be an infrared light emitting diode. The electronic device 100 emits infrared light through the light-emitting diode. The electronic device 100 detects infrared reflected light from a nearby object through the photodiode. When intensity of the detected reflected light is greater than a threshold, it may be determined that there is an object near the electronic device 100. When intensity of the detected reflected light is less than the threshold, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L may be configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the electronic device 100 is blocked. For example, the electronic device is in a pocket. When it is detected that the electronic device is blocked or in the pocket, some functions (for example, a touch function) may be disabled to avoid a misoperation.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy by using the temperature detected by the temperature sensor 180J. For example, when the temperature detected by the temperature sensor 180J exceeds a threshold, the electronic device 100 performs performance reduction on the processor, to reduce power consumption of the electronic device, so as to implement thermal protection. In some other embodiments, when the temperature detected by the temperature sensor 180J is lower than another threshold, the electronic device 100 heats the battery 142. In some other embodiments, when the temperature is lower than another threshold, the electronic device 100 may boost an output voltage of the battery 142.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the electronic device 100 at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may alternatively be disposed in the headset to form a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 may include a power button, a volume button, and the like. The button 190 may be a mechanical button or a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. The touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or more SIM card interfaces. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 may also be compatible with different types of SIM cards. The SIM card interface 195 may also be compatible with an external storage card. The electronic device 100 interacts with a network through the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In an embodiment of this application, an Android system with a layered architecture is used as an example to describe the software structure of the electronic device 100.

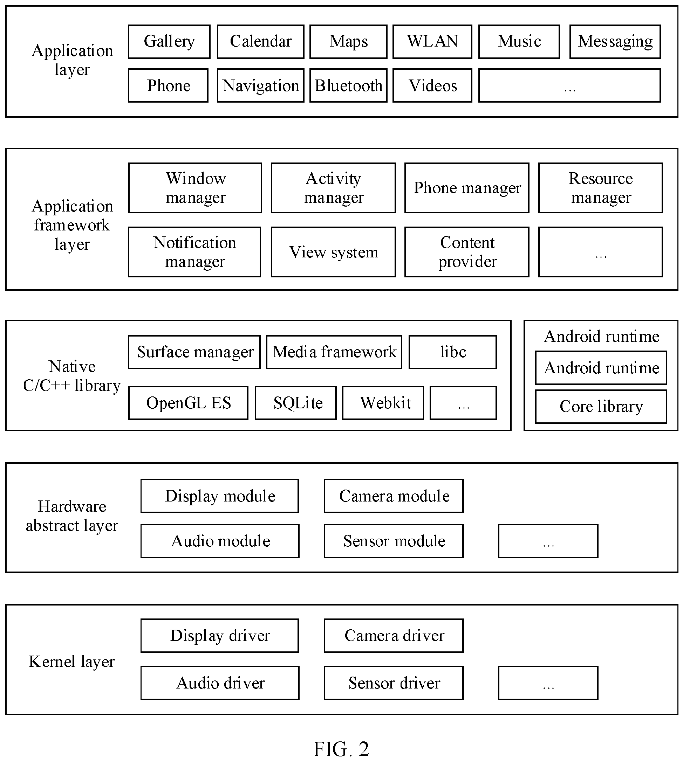

FIG. 2 is a schematic diagram of the software structure of the electronic device 100 according to an embodiment of this application.

In the layered architecture, software is divided into several layers, and each layer has a clear role and task. The layers communicate with each other through a software interface. In some embodiments, the Android system is divided into five layers: an application layer, an application framework layer, an Android runtime (Android runtime, ART) and native C/C++ library, a hardware abstract layer (Hardware Abstract Layer, HAL), and a kernel layer from top to bottom.

The application layer may include a series of application packages.

As shown in FIG. 2, the application packages may include applications such as Camera, Gallery, Calendar, Phone, Maps, Navigation, WLAN, Bluetooth, Music, Videos, and Messaging.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a resource manager, a notification manager, an activity manager, an input manager, and the like.

The window manager provides a window manager service (Window Manager Service, WMS). The WMS may be used for window management, window animation management, surface management, and as a transit station of an input system.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The resource manager provides various resources such as a localized string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application running on the background or a notification that appears on a screen in a form of a dialog window. For example, text information is displayed in the status bar, an announcement is given, the electronic device vibrates, or the indicator light blinks.

The activity manager may provide an activity manager service (Activity Manager Service, AMS), and the AMS may be used to start, switch, and schedule system components (such as activities, services, content providers, and broadcast receivers), and manage and schedule application processes.

The input manager may provide an input manager service (Input Manager Service, IMS), and the IMS may be used to manage a system input, for example, a touchscreen input, a key input, and a sensor input. The IMS obtains an event from an input device node, and allocates the event to an appropriate window by interacting with the WMS.

The Android runtime includes a core library and the Android runtime. The Android runtime is responsible for converting source code into machine code. An ahead of time (ahead of time, AOT) compilation technology and a just in time (just in time, JIT) compilation technology are mainly used for the Android runtime.

The core library is mainly configured to provide basic Java-class libraries, such as a basic data structure, mathematics, I/O, a tool, a database, and a network. The core library provides an API for a user to develop an Android application.

The native C/C++ library may include a plurality of functional modules, for example, a surface manager (surface manager), a media framework (Media Framework), libc, OpenGL ES, SQLite, and Webkit.

The surface manager is configured to manage a display subsystem, and provide fusion of 2D and 3D layers for a plurality of applications. The media framework supports playing and recording of a plurality of commonly used audio and video formats, static image files, and the like. The media library may support a plurality of audio and video coding formats, for example, MPEG-4, H.264, MP3, AAC, AMR, JPG, and PNG. The OpenGL ES draws and operates 2D and 3D graphics in an application. The SQLite provides a lightweight relational database for an application of the electronic device 100.

The hardware abstract layer runs in user space (user space), encapsulates a kernel layer driver, and provides a calling interface for an upper layer.

The kernel layer is a layer between hardware and software. The kernel layer includes at least a display driver, a camera driver, an audio driver, and a sensor driver.

To better understand this application, the following first describes some terms and concepts in this application.

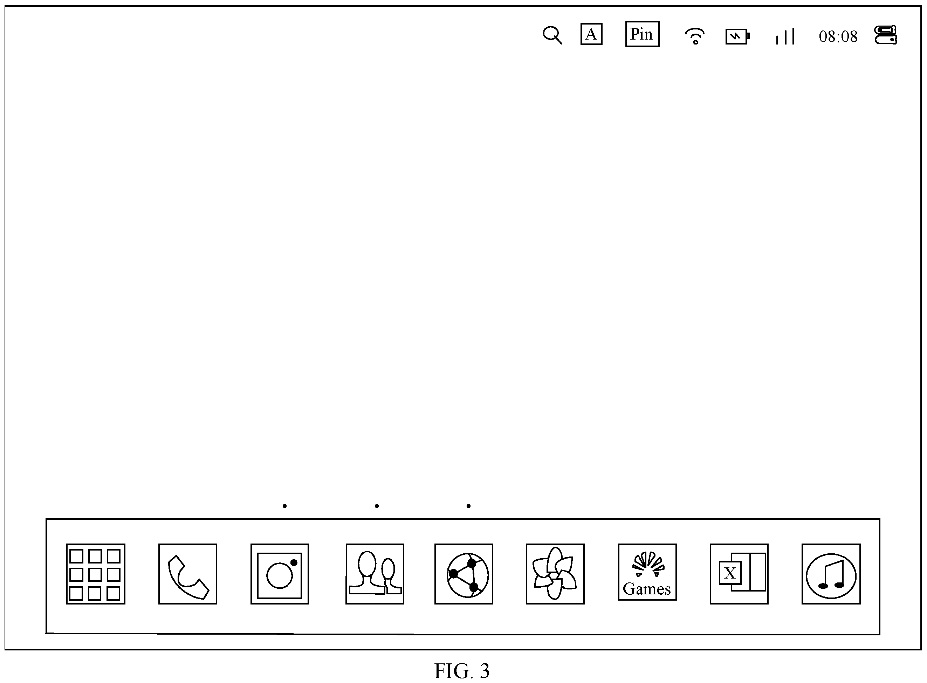

A desktop refers to screen space of a display currently used by an electronic device. FIG. 3 is used as an example. In FIG. 3, three dots are displayed on the screen of the electronic device, indicating that the desktop includes three pages: an interface 1, an interface 2, and an interface 3. Optionally, three boxes and the like may be further displayed on the screen of the electronic device. A page returned by pressing a home button or sliding up from a bottom of the screen by a user is a home screen. For example, when the interface 2 or the interface 3 is displayed on the electronic device, the page returned by pressing the home button or sliding up from the bottom of the screen is the interface 1 (as shown in FIG. 3). In this case, the interface 1 is the home screen of the electronic device. The home screen shown in FIG. 3 may be a home screen of a pad (tablet computer), a computer, a mobile phone, or the like.

A window is a display area, on the display, of an application that is running on the electronic device.

A window type means that windows are classified into a horizontal window and a vertical window based on an orientation.

A placement direction means that the electronic device is placed in a landscape direction or a portrait direction.

The horizontal window is a window whose width is greater than a height of the window in the placement direction of the electronic device, and the horizontal window has an initial window size.

The vertical window is a window whose width is less than a height of the window in the placement direction of the electronic device, and the vertical window has an initial window size. If a width of a window is the same as a height of the window, the window may be a horizontal window or a vertical window.

Available desktop space refers to a display area other than a status bar on the desktop.

For ease of understanding, in the following embodiments of this application, an electronic device having the structures shown in FIG. 1 and FIG. 2 is used as an example to describe in detail, with reference to the accompanying drawings and application scenarios, the display method provided in embodiments of this application.

After the electronic device is turned on or when an operation of returning to a home screen is received, the home screen of the electronic device is displayed on a display of the electronic device. As shown in FIG. 3, the home screen may include a status bar and available desktop space. Optionally, the status bar may be displayed on an upper right of the display. Optionally, the status bar may alternatively be displayed in a top area of the display, and crosses left and right ends of a top of the display. Content including but not limited to a message notification is displayed in the status bar on the left. A plurality of pieces of information are displayed in the status bar, such as a search, capitalization, a language, a network, a battery status, signal strength, time, and a control center. In some embodiments, the control center is an entrance for opening an entire desktop panel. On the desktop panel, an auxiliary function of the electronic device may be adjusted, for example, Wi-Fi enabling/disabling and brightness adjustment. It should be understood that more or less information than that shown in the figure may be displayed in the status bar, and the status bar may further include other information, for example, Bluetooth, a mobile network (for example, 4G), and an alarm clock. This is not limited in this application. Optionally, the home screen further includes a Dock bar, and the Dock bar may be displayed in a lower part of the available desktop space. Based on a requirement, the Dock bar may alternatively be displayed at another position of the available desktop space, for example, a left edge or a right edge. Icons of frequently used applications, such as Phone, Chat, Contacts, Browser, Gallery, Games, Excel, and Music, may be displayed in the Dock bar. It should be understood that more or fewer icons than those shown in the figure may be displayed in the Dock bar. This is not limited in this application. The Dock bar enables a user to select some applications more conveniently and quickly. Optionally, a Huawei application icon may be further displayed in the Dock bar. The Huawei application icon is an entry of all Huawei applications. After the Huawei application icon is tapped by the user, the electronic device displays all application lists of the electronic device.

On the home screen, the electronic device may enter a multi-task multi-window display mode based on an operation of the user. In the multi-task multi-window display mode, a window display mode may include tile displaying, focused displaying, full-screen displaying, and quick retrieval displaying.

The tile displaying, also referred to as a tile mode, means that windows displayed on the display are tiled in the available desktop space, and a plurality of windows do not block each other. A size of each window may be changed, and a position of the window can be moved or cannot be moved. In some embodiments, when a new window needs to be displayed, if the available desktop space is insufficient, a window displayed on a side of the available desktop space is hidden as an icon in the Dock bar, and the new window is inserted and displayed in the available desktop space. In the tile mode, the user may minimize the window, focus on the window, display the window in full screen, retrieve the window, or the like.

The focused displaying, also referred to as a focus mode, means that a focused window obtains a maximum display area. Optionally, another window displayed in the available desktop space is displayed on a side of the focused window in a form of a thumbnail window. A size of the window that obtains the maximum display area may be changed, and a position of the window can be moved, or cannot be moved. The window that obtains the maximum display area and the thumbnail window may be exchanged for display. Optionally, the another window displayed in the available desktop space may alternatively be completely hidden.

The full-screen displaying, also referred to as a full-screen mode, means that a full-screen window is maximized to fill the entire desktop.

The quick retrieval displaying, also referred to as a quick retrieval mode, means that windows displayed on the display are tiled in the available desktop space, the plurality of windows do not block each other, and a floating window of a previously hidden application is displayed at an edge position of a user operation on the desktop. In response to an operation performed on the floating window of the hidden application, a window displayed on another side of the available desktop space is hidden, and a window of the application corresponding to the operated floating window is inserted and displayed in the available desktop space.

It may be understood that, it is not limited to enter the multi-task multi-window display mode from the home screen. The multi-task multi-window display mode may alternatively be entered from another interface displayed in response to a user operation, for example, from a main interface of an application that is displayed after the user performs an operation on an icon in the Dock bar of the home screen, from another interface displayed after the user performs a tap operation on a control on the main interface of the application, or another interface displayed after the user performs a tap operation on a control on a sub-interface of the application. For ease of description, the following describes this application by using an example in which the multi-task multi-window display mode is entered from the home screen.

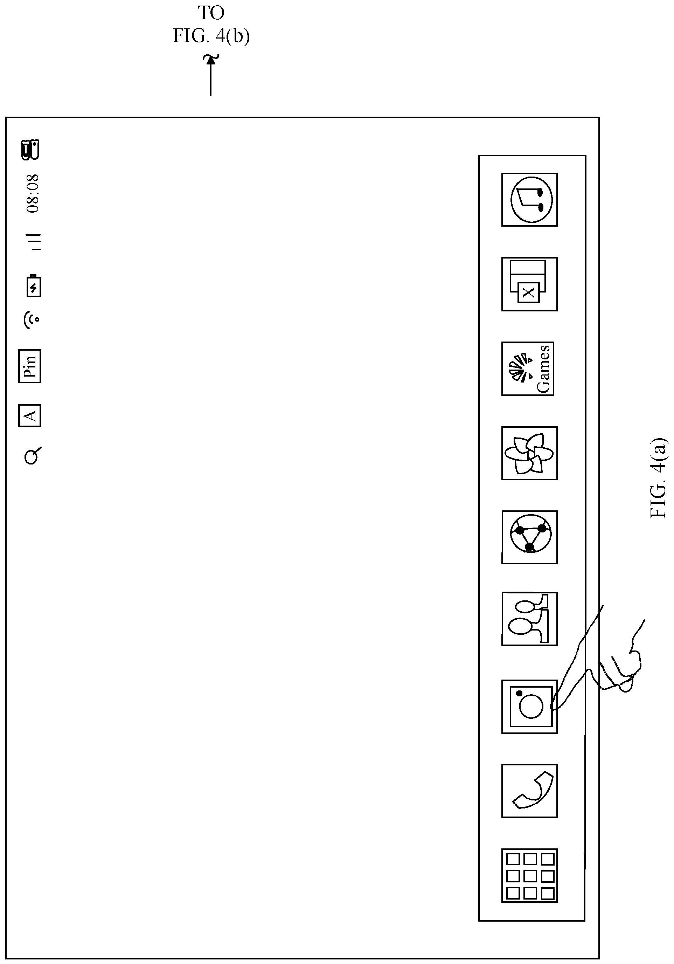

The following describes in detail the display method in this application with reference to some human-computer interaction embodiments in the multi-task multi-window display mode. Although the following schematic diagrams only show that an electronic device is operated by using a touch gesture, this does not constitute a limitation on this application. A person skilled in the art may understand that in this application, the electronic device may alternatively be operated by using a mouse, a keyboard, or the like. A Dock bar is shown in the following accompanying drawings, but it may be understood that the Dock bar in the following accompanying drawings may be hidden. For example, after windows of applications are displayed in available desktop space in a tiled manner, a user may hide the Dock bar. In this case, positions of the windows of the applications that are displayed in the available desktop space in the tiled manner may remain unchanged, or the positions may be moved downward. When the Dock bar needs to be used, the user may invoke the Dock bar by operating the display. In this case, the positions of the windows of the applications that are displayed in the available desktop space in the tiled manner are original positions. Then, the user may perform a tap operation on an application in the Dock bar. FIG. 4(a) to FIG. 4(d) are a schematic diagram of some user interfaces according to an embodiment of this application.

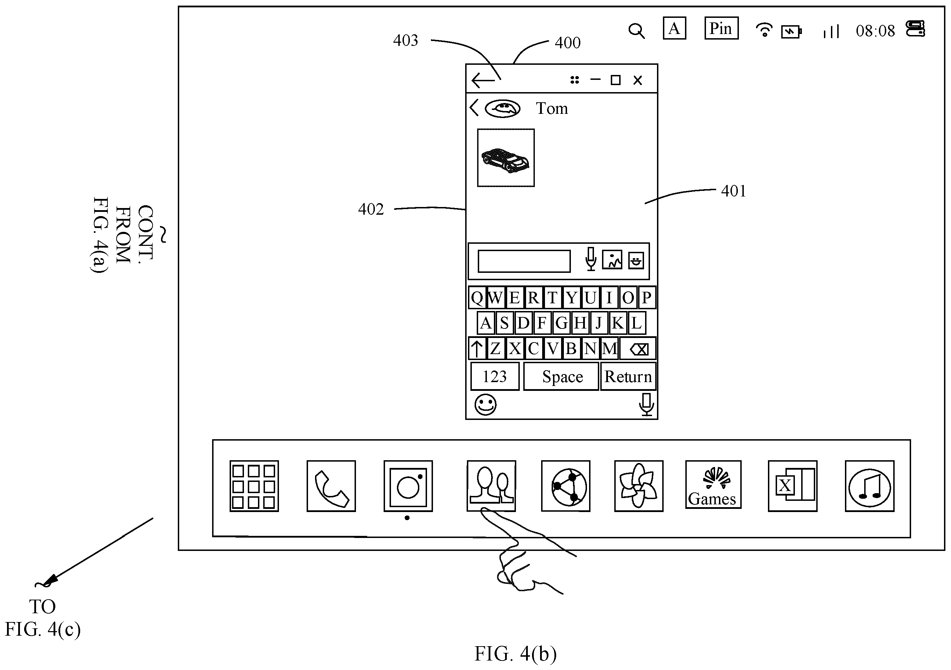

When the electronic device, for example, a pad (tablet computer) or a computer, is turned on, FIG. 4(a) may be displayed on a display of the electronic device. When a mobile phone is connected to the display in a wired or wireless manner, FIG. 4(a) may also be displayed on the display. It may be understood that this application is not limited to the foregoing two manners of displaying FIG. 4(a), and FIG. 4(a) may be further displayed in another case. FIG. 4(a) shows a tap operation performed by the user on an application in the Dock bar on a home screen, for example, a tap operation performed on a chat application. In response to the tap operation, the electronic device further displays a window of the chat application in addition to displaying the Dock bar in the available desktop space. Optionally, on the home screen, the Dock bar is hidden. The user may control, by operating the display, the display to display the Dock bar, and then the user may perform a tap operation on an application in the Dock bar. FIG. 4(b) includes the window of the chat application. The window of the chat application is a vertical window. In FIG. 4(b), the window of the chat application is vertically displayed in the middle of the available desktop space, and occupies upper and lower projection areas of the window. In other words, another window is not allowed to be displayed above/below the window of the chat application. Therefore, the window of the chat application may be as large as possible, and vision of the user may be more intuitive. Optionally, the window of the chat application may be displayed on a left side of the available desktop space. Optionally, the window of the chat application does not occupy the upper and lower projection areas of the window. The window 400 of the chat application may include a window display area 401, a window size control 402, and a title bar 403.

The window display area 401 is used to display content of the chat application, and may receive and respond to an operation performed by the user on the window display area. The window size control 402 is used to adjust a proportion of the window on a desktop. The electronic device may detect an operation performed on the window size control 402, for example, a drag operation on the window size control 402. In response to the operation, the electronic device may move a position of the window size control 402, to change a size of the window 400 of the chat application.

A window processing function is set in the title bar 403. The user may operate the title bar 403 through mouse clicking, keyboard operating, screen touching, or the like, so that a display mode changes from a tile mode to a focus mode. The title bar 403 may include buttons such as "Minimize", "Maximize/Restore", and "Close". Optionally, the title bar 403 may further include buttons such as "Back" and "Window type settings". The user may perform a corresponding operation through mouse clicking, keyboard operating, screen touching, or the like. For example, the user may hide the window 400 of the chat application in the Dock bar by tapping the "Minimize" button in the title bar 403 of the window 400 of the chat application, and may display the window 400 of the chat application in full screen by tapping the "Maximize/Restore" button in the title bar 403 of the window 400 of the chat application, so that the display mode changes form the tile mode to a full-screen mode. For example, alternatively, the user may tap the "Close" button in the title bar 403 of the window 400 of the chat application to close the window 400 of the chat application, tap the "Back" button in the title bar 403 of the window 400 of the chat application to return to an upper-level interface of the chat application, or tap the "Window type settings" button in the title bar 403 of the window 400 of the chat application to set the chat application to be opened and displayed in either a window form or a full screen form.

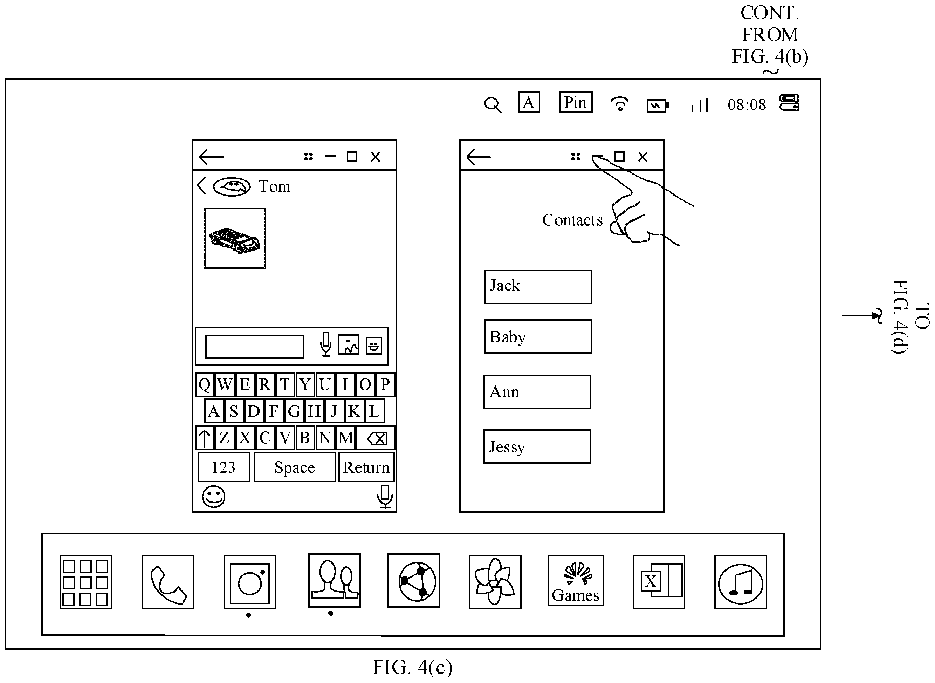

It may be understood that the user may not only perform an operation on the window 400 of the chat application in FIG. 4(b), but also perform a tap operation on an icon of another application in the Dock bar. For example, the user performs a tap operation on an icon of a contacts application shown in FIG. 4(b). In response to the tap operation, the electronic device further displays the window of the chat application and a window of the contacts application in the available desktop space in addition to displaying the Dock bar, as shown in FIG. 4(c). The electronic device tiles the window of the chat application and the window of the contacts application in the available desktop space. The window of the contacts application is a vertical window. In FIG. 4(c), the electronic device evenly tiles the window of the chat application and the window of the contacts application in the available desktop space. In this case, a margin parameter between the window of the chat application and an edge of the display is adjusted, and a display position of the window of the chat application is moved leftward from an original middle position in the available desktop space. In addition, in the available desktop space, the window of the contacts application is inserted on a right side of the window of the chat application. In this case, the window of the chat application and the window of the contacts application may be sequentially displayed in a horizontal row from left to right based on a sequence in which the applications are opened. Therefore, the desktop is more aesthetic and not messy, and user comfort can be improved. Although FIG. 4(c) only shows that the position of the window of the application is moved leftward, it may be understood that FIG. 4(c) and the following accompanying drawings are not limited to moving the position of the window of the application leftward, and the position of the window of the application may alternatively be moved rightward. Alternatively, the windows of the applications may be sequentially displayed from right to left in a sequence in which the applications are opened. For example, in response to the operation in FIG. 4(b), the window of the chat application, the window of the contacts application, and a window of a phone application may be sequentially displayed in a horizontal row from right to left in a sequence in which the applications are opened. When display positions of the windows of the applications are adjusted, a position of a displayed application may be moved rightward. For example, the display position of the window of the chat application is moved rightward, and the window of the contacts application may be inserted on a left side of the window of the chat application.

Optionally, the electronic device may evenly tile the windows in the available desktop space based on a fixed quantity of columns, in a fully dynamic manner, or the like. When the electronic device evenly tiles the windows in the available desktop space based on the fixed quantity of columns, an initial window size is fixed size information. When the electronic device evenly tiles the windows in the available desktop space in the full dynamic manner, an initial window size is unfixed size information. For example, the initial window size may be reduced as a quantity of tiled windows. For example, if two vertical windows are tiled in the available desktop space, sizes of the two vertical windows each are a size A. If four vertical windows are tiled in the available desktop space, sizes of the four vertical windows each are a size B. The size B is less than the size A.

The following describes this application by using an example in which the electronic device evenly tiles the windows in the available desktop space based on the fixed quantity of columns.

The electronic device may evenly tile the windows in the available desktop space based on a type of a window, a width of the window of the type, a minimum margin between a window and the edge of the display, and a minimum distance between windows. Details are provided below.

The desktop is divided into X columns. It is assumed that a column width is Y, and a column spacing is Z. In this case, an area occupied by the available desktop space is $X \times Y + (X + 1) \times Z$. It is assumed that a quantity of columns for vertical windows is a and a quantity of columns for horizontal windows is b. In this case, an area occupied by the vertical window in the available desktop space is $a \times Y + (a - 1) \times Z$, and an area occupied by the horizontal window in the available desktop space is $b \times Y + (b - 1) \times Z$. It is assumed that the minimum margin between the window and the edge of the display is p, and the minimum distance between the windows is q. Therefore, a margin between the window and the edge of the display is $x = \frac{X \times Y + (X+1) \times Z - 2a \times Y - 2(a-1) \times Z - y}{2}$, and $x \geq p$; and a distance between the windows is $y = X \times Y + (X + 1) \times Z - 2a \times Y - 2(a - 1) \times Z - 2x$, and $y \geq q$. The margin between the window and the edge of the display and the distance between the windows may be collectively referred to as a margin. The electronic device evenly tiles the window of the chat application and the window of the contacts application in the available desktop space based on the margin x between the window and the edge of the display, the distance y between the windows, and the area occupied by the vertical window in the available desktop space. In this embodiment, a window height may be a height of the available desktop space x 80%, and the margin between the window and the edge of the display may be equal to the distance between the windows.

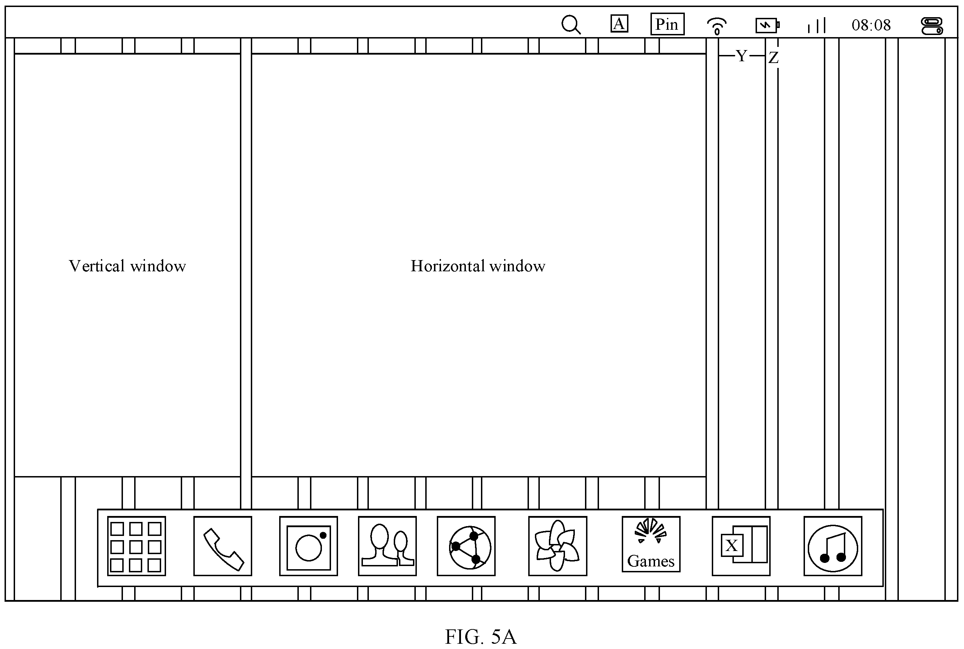

For example, as shown in FIG. 5A, the desktop is divided into 16 columns, a column width is Y, a column spacing is Z, an area occupied by the available desktop space is 16Y + 17Z, a quantity of columns for vertical windows is 4, an area occupied by the vertical window in the available desktop space is 4Y + 3Z, a quantity of columns for horizontal windows is 8, an area occupied by the horizontal window in the available desktop space is 8Y + 7Z, the minimum margin between the window and the edge of the display is Z, and the minimum distance between the windows is Z. In this case, in FIG. 4(c), a margin between the window of the chat application and the edge of the display is $x = \frac{8Y + 11Z}{3}$, a margin between the window of the contacts application and the edge of the display is $x = \frac{8Y + 11Z}{3}$, and

a distance between the window of the chat application and the window of the contacts application is $y = \frac{8Y+11Z}{3}$.

Optionally, that the electronic device evenly tiles the windows in the available desktop space based on the type of the window, the width of the window of the type, the minimum margin between the window and the edge of the display, and the minimum distance between the windows may alternatively be specifically as follows:

It is assumed that a width of the desktop of the electronic device is $W_{scr}$, a width of the vertical window is $W_1$, a width of the horizontal window is $W_2$, the minimum distance between the windows of the electronic device is $M_{min}$, the margin between the window of the electronic device and the edge of the display is $N_{min}$, the distance between the windows of the electronic device is $M_{1-cur}$, the margin between the window of the electronic device and the edge of the display is $M_{2-cur}$, a quantity of vertical windows displayed on the electronic device is m, and a quantity of horizontal windows displayed on the electronic device is n. Therefore, a width of the desktop of the electronic device is $W_{scr}$ = m $\times$ $W_1$ + n $\times$ $W_2$ + (m + n - 1) $\times$ $M_{1-cur}$ + 2 $\times$ $M_{2-cur}$. A window size is a fixed value. For example, the width $W_1$ of the vertical window and the width $W_2$ of the horizontal window are fixed values. It is assumed that the margin between the window and the edge of the display is equal to the distance between the windows. In this case, the width of the desktop of the electronic device is $W_{scr}$ = m $\times$ $W_1$ + n $\times$ $W_2$ + (m + n + 1) $\times$ $M_{1-cur}$. $M_{1-cur} = M_{2-cur} = \frac{W_{scr}-m\times W_1-n\times W_2}{m+n+1}$, $M_{1-cur} > M_{min}$, and $M_{2-cur} > N_{min}$. The electronic device may evenly tile the windows in the available desktop space based on the calculated distance $M_{1-cur}$ between the windows and the calculated margin $M_{2-cur}$ between the window and the edge of the display. In this case, the window size is fixed, and the margin between the window and the edge of the display and the distance between the windows vary based on displayed windows.

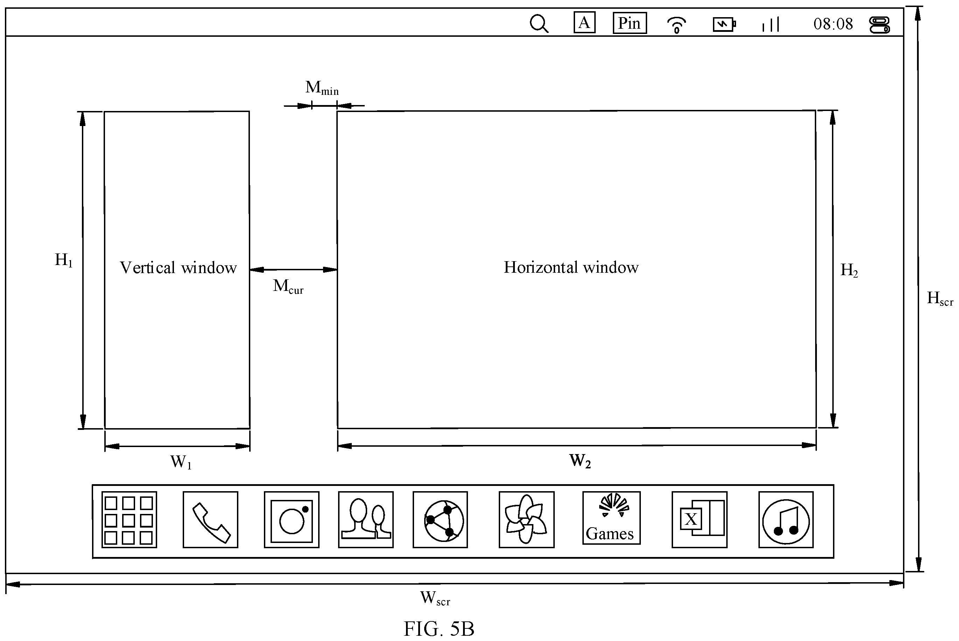

For example, as shown in FIG. 5B, the width of the desktop of the electronic device is $W_{scr}$, the width of the vertical window is $W_1$, the width of the horizontal window is $W_2$, and the margin between the window and the edge of the display is equal to the distance between the windows, where both are $M_{cur}$. The quantity of vertical windows displayed on the electronic device is 1, and the quantity of horizontal windows displayed on the electronic device is 1. Therefore, the width of the desktop of the electronic device is $W_{scr}$ = $W_1$ + $W_2$ + 3 $\times$ $M_{cur}$, and $M_{cur}$ = $\frac{W_{scr}-W_1-W_2}{3}$ is obtained. The electronic device evenly tiles the windows in the available desktop space based on the calculated margin $\frac{W_{scr}-W_1-W_2}{3}$ between the window and the edge of the display and the calculated distance $\frac{W_{scr}-W_1-W_2}{3}$ between the windows.

Optionally, to meet a visual requirement of the user, the electronic device further calculates an optimal window size. The window size includes the width of the vertical window, a height of the vertical window, the width of the horizontal window, and a height of the horizontal window. Calculation of the window size may be specifically as follows:

It is assumed that a width of a desktop of a terminal (for example, a mobile phone) is $W_{phone}$, and a height of the desktop of the terminal is $H_{phone}$. In this case, a screen ratio of the terminal is $R_{phone} = \frac{W_{phone}}{H_{phone}}$. It is assumed that the width of the vertical window is $W_1$, the height of the vertical window is $H_1$, and a window ratio of the vertical window is the same as the screen ratio of the terminal. In this case, the window ratio of the vertical window is $R_{phone} = \frac{W_1}{H_1}$.

It is assumed that the width of the desktop of the electronic device is $W_{scr}$, and the height of the desktop of the electronic device is $H_{scr}$. In this case, a screen ratio of the electronic device is $R_{scr} = \frac{W_{scr}}{H_{scr}}$. It is assumed that the width of the horizontal window is $W_2$, the height of the horizontal window is $H_2$, and a window ratio of the horizontal window is the same as the screen ratio of the electronic device. In this case, the window ratio of the horizontal window is $R_{scr} = \frac{W_2}{H_2}$.

It is assumed that a minimum ratio of the minimum distance between the windows of the electronic device to the width of the desktop is $R_{1-margin}$. In this case, the minimum distance between the windows of the electronic device is $M_{1-min} = W_{scr} \times R_{1-margin}$. It is assumed that a minimum ratio of the minimum margin between the window of the electronic device and the edge of the display to the width of the desktop is $R_{2-margin}$. In this case, the minimum margin between the window of the electronic device and the edge of the display is $M_{2-min} = W_{scr} \times R_{2-margin}$. The minimum ratio

$R_{1\text{-}margin}$ of the minimum distance between the windows of the electronic device to the width of the desktop and the minimum ratio $R_{2\text{-}margin}$ of the minimum margin between the window of the electronic device and the edge of the display to the width of the desktop are percentage constants. Because the user may have different requirements on a visual effect of an interface at different time and in different external environments, the minimum ratio $R_{1\text{-}margin}$ of the minimum distance between the windows of the electronic device to the width of the desktop and the minimum ratio $R_{2\text{-}margin}$ of the minimum margin between the window of the electronic device and the edge of the display to the width of the desktop may be adjusted based on a visual requirement of the user.

It is assumed that a maximum quantity of vertical windows that can be simultaneously displayed on the electronic device is m, and a quantity of horizontal windows that can be simultaneously displayed on the electronic device is n. In this case, the width of the desktop of the electronic device is $W_{scr} = m \times W_1 + n \times W_2 + (m + n - 1) \times M_{min} + 2 \times N_{min}$ $= m \times H_1 \times R_{phone} + n \times H_2 \times R_{scr} + (m + n - 1) \times W_{scr} \times R_{1\text{-}margin} + 2 \times W_{scr} \times R_{2\text{-}margin}$.

Because the height of the vertical window $H_1$ = the height of the horizontal window $H_2$, the following is obtained:

$$H_1 = H_2 = \frac{W_{scr} \times [1 - (m+n-1) \times R_{1-margin} - 2 \times R_{2-margin}]}{m \times R_{phone} + n \times R_{scr}}.$$

The width of the vertical window is $W_1 = H_1 \times R_{phone} = \frac{W_{scr} \times [1 - (m+n-1) \times R_{1-margin} - 2 \times R_{2-margin}]}{m \times R_{phone} + n \times R_{scr}} \times R_{phone}$.

The width of the horizontal window is $W_2 = H_2 \times R_{scr} = \frac{W_{scr} \times [1 - (m+n-1) \times R_{1-margin} - 2 \times R_{2-margin}]}{m \times R_{phone} + n \times R_{scr}} \times R_{scr}$.

The maximum quantity of vertical windows that can be simultaneously displayed on the electronic device and the maximum quantity of horizontal windows that can be simultaneously displayed on the electronic device may be default quantities in a system, quantities set by the user, quantities automatically set by the system according to a preset rule, or the like. The preset rule may be that the window size meets any one or any combination of a minimum width of the vertical window, a minimum height of the vertical window, a maximum width of the vertical window, a maximum height of the vertical window, a minimum width of the horizontal window, a minimum height of the horizontal window, a maximum width of the horizontal window, and a maximum height of the horizontal window. For example, the window size is greater than the minimum width of the vertical window and less than the maximum width of the vertical window.

Therefore, the initial window size may be automatically determined based on different resolutions of different displays under the condition that the visual requirement of the user is met.

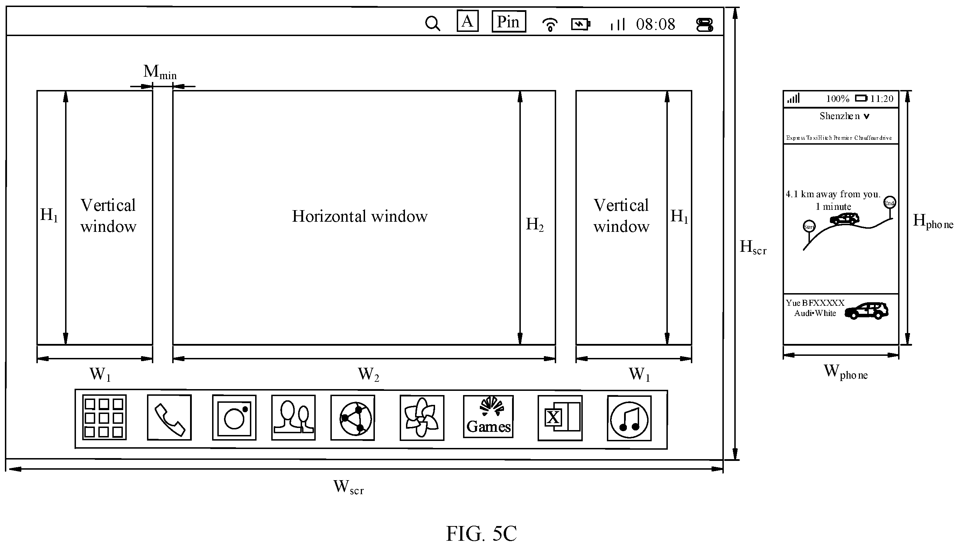

For example, as shown in FIG. 5C, the maximum quantity of vertical windows that can be simultaneously displayed on the electronic device is 2, the maximum quantity of horizontal windows that can be simultaneously displayed on the electronic device is 1, and the margin between the window and the edge of the display is equal to the distance between the windows, where both are $M_{min} = W_{scr} \times R_{margin}$. In this case, $W_{scr} = 2 \times W_1 + W_2 + 4 \times M_{min} = 2 \times H_1 \times R_{phone} + H_2 \times R_{scr} + 4 \times W_{scr} \times R_{margin}$. Because the height of the vertical window $H_1$ = the height of the horizontal window $H_2$, $H_1 = H_2 = \frac{W_{scr} \times (1 - 4 \times R_{margin})}{2 \times R_{phone} + R_{scr}}$. The width of the vertical window is $W_1 = H_1 \times R_{phone} = \frac{W_{scr} \times (1 - 4 \times R_{margin})}{2 \times R_{phone} + R_{scr}} \times R_{phone}$, and the width of the horizontal window $W_2 = H_2 \times R_{scr} = \frac{W_{scr} \times (1 - 4 \times R_{margin})}{2 \times R_{phone} + R_{scr}} \times R_{scr}$. The electronic device determines that the width of the vertical window is $\frac{W_{scr} \times (1 - 4 \times R_{margin})}{2 \times R_{phone} + R_{scr}} \times R_{phone}$, the height of the vertical window is $\frac{W_{scr} \times (1 - 4 \times R_{margin})}{2 \times R_{phone} + R_{scr}}$, the width of the horizontal window is $\frac{W_{scr} \times (1 - 4 \times R_{margin})}{2 \times R_{phone} + R_{scr}} \times R_{scr}$, and the height of the horizontal window is $\frac{W_{scr} \times (1 - 4 \times R_{margin})}{2 \times R_{phone} + R_{scr}}$.

Optionally, the window ratio of the vertical window may alternatively be a preset ratio of the screen ratio of the terminal, for example, 9/10. The window ratio of the horizontal window may alternatively be a preset ratio of the screen ratio of the electronic device, for example, 9/10. Optionally, the window ratio of the horizontal window may alternatively be the same as a screen ratio of a tablet computer, a desktop computer, a laptop computer, a handheld computer, a notebook computer, an ultra-mobile personal computer (ultra-mobile personal computer, UMPC), a netbook, a personal digital assistant (personal digital assistant, PDA), or a smart television.

Optionally, there are two manners in which the electronic device evenly tiles the windows in the available desktop space in the fully dynamic manner. The following first describes a first manner in which the electronic device evenly tiles the windows in the available desktop space in the fully dynamic manner. In the first manner, at least one of the displayed windows does not support free scaling. In other words, at least one of the displayed windows can only be scaled proportionally. In this case, a margin between the displayed window and the edge of the display and a distance between the displayed windows remain unchanged. In other words, the windows continue to be displayed by using a minimum margin between the window and the edge of the display and a minimum distance between the windows. However, a width and a height of the displayed window vary with a quantity of tiled windows, and the initial window size is unfixed size information.

The foregoing manner of calculating a window size is still used as an example to describe the first manner in which the electronic device evenly tiles the windows in the available desktop space in the fully dynamic manner. A window ratio of a vertical window is $R_{phone} = \frac{W_{phone}}{H_{phone}} = \frac{W_1}{H_1}$, a window ratio of a horizontal window is $R_{scr} = \frac{W_{scr}}{H_{scr}} = \frac{W_2}{H_2}$, a minimum distance between windows of the electronic device is $M_{1\text{-}min} = W_{scr} \times R_{1\text{-}margin}$, and a minimum margin between a window of the electronic device and the edge of the display is $M_{2\text{-}min} = W_{scr} \times R_{2\text{-}margin}$. It is assumed that a quantity of vertical windows displayed on the electronic device is c, and a quantity of horizontal windows displayed on the electronic device is d. In this case, a width of the desktop of the electronic device is $W_{scr} = c \times W_1 + d \times W_2 + (c + d - 1) \times M_{1\text{-}min} + 2 \times M_{2\text{-}min} = c \times H_1 \times R_{phone} + d \times H_2 \times R_{scr} + (c + d - 1) \times W_{scr} \times R_{1\text{-}margin} + 2 \times W_{scr} \times R_{2\text{-}margin}$.

Because the height of the vertical window $H_1$ = the height of the horizontal window $H_2$, the following is obtained:

$$H_1 = H_2 = \frac{W_{scr} \times [1 - (c+d-1) \times R_{1-margin} - 2 \times R_{2-margin}]}{c \times R_{phone} + d \times R_{scr}}.$$

A width of the vertical window is $W_1 = H_1 \times R_{phone} = \frac{W_{scr} \times [1 - (c+d-1) \times R_{1-margin} - 2 \times R_{2-margin}]}{c \times R_{phone} + d \times R_{scr}} \times R_{phone}$.

A width of the horizontal window is $W_2 = H_2 \times R_{scr} = \frac{W_{scr} \times [1 - (c+d-1) \times R_{1-margin} - 2 \times R_{2-margin}]}{c \times R_{phone} + d \times R_{scr}} \times R_{scr}$.

The electronic device may evenly tile the windows in the available desktop space based on the calculated width $W_1$ of the vertical window, a calculated height $H_1$ of the vertical window, the calculated width $W_2$ of the horizontal window, and a calculated height $H_2$ of the horizontal window. In the first manner in which the electronic device evenly tiles the windows in the available desktop space in the fully dynamic manner, the distance between the windows of the electronic device and the margin between the window of the electronic device and the edge of the display remain unchanged, and the width of the vertical window $W_1$, the height of the vertical window $H_1$, the width of the horizontal window $W_2$, and the height of the horizontal window $H_2$ vary based on displayed windows. Therefore, the electronic device may scale a window proportionally, that is, both a height of the window and a width of the window change, so that the width of the desktop of the electronic device can be used to a maximum extent.

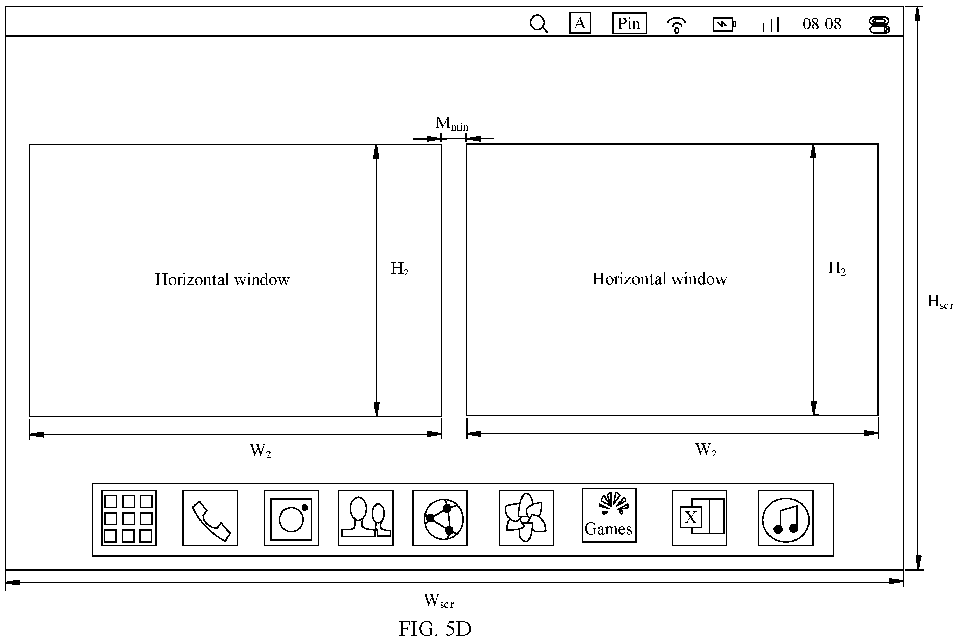

For example, as shown in FIG. 5D, a quantity of horizontal windows simultaneously displayed on the electronic device is 2, and the margin between the window and the edge of the display is equal to the distance between the windows, where both are $M_{min} = W_{scr} \times R_{margin}$. Therefore, the width of the desktop of the electronic device is $W_{scr} = 2 \times W_2 + 3 \times M_{min} = 2 \times H_2 \times R_{scr} + 3 \times W_{scr} \times R_{margin}$. In this case, the height of the horizontal window is $H_2 = \frac{W_{scr} \times (1 - 3 \times R_{margin})}{2 \times R_{scr}}$, and the width of the horizontal window is $W_2 = H_2 \times R_{scr} = \frac{W_{scr} \times (1 - 3 \times R_{margin})}{2 \times R_{scr}} \times R_{scr}$. The electronic device determines that the width of the horizontal window is $\frac{W_{scr} \times (1 - 3 \times R_{margin})}{2 \times R_{scr}} \times R_{scr}$ and the height of the horizontal window is $\frac{W_{scr} \times (1 - 3 \times R_{margin})}{2 \times R_{scr}}$. The electronic device evenly tiles the two horizontal windows in the available desktop space based on the calculated width $\frac{W_{scr}\times(1-3\times R_{margin})}{2\times R_{scr}} \times R_{scr}$ of the horizontal window, the calculated height $\frac{W_{scr}\times(1-3\times R_{margin})}{2\times R_{scr}}$ of the horizontal window, the fixed minimum distance $W_{scr} \times R_{margin}$ between the windows of the electronic device, and the fixed minimum margin $W_{scr} \times R_{margin}$ between the window of the electronic device and the edge of the display.

The following describes a second manner in which the electronic device evenly tiles the windows in the available desktop space in the fully dynamic manner. In the second manner, all of the displayed windows support free scaling. In other words, all of the displayed windows can be scaled disproportionally. In this case, a margin between the displayed window and the edge of the display and a distance between the displayed windows remain unchanged. In other words, the windows continue to be displayed by using a minimum margin between the window and the edge of the display and a minimum distance between the windows, and a height of the displayed window remains unchanged. However, a width the displayed window varies with a quantity of tiled windows, and the initial window size is unfixed size information.

The foregoing manner of calculating a window size is still used as an example to describe the second manner in which the electronic device evenly tiles the windows in the available desktop space in the fully dynamic manner. A window ratio of a vertical window is $R_{phone} = \frac{W_{phone}}{H_{phone}} = \frac{W_1}{H_1}$, a window ratio of a horizontal window is $R_{scr} = \frac{W_{scr}}{H_{scr}} = \frac{W_2}{H_2}$, a minimum distance between windows of the electronic device is $M_{1\text{-}min} = W_{scr} \times R_{1\text{-}margin}$, and a minimum margin between a window of the electronic device and the edge of the display is $M_{2\text{-}min} = W_{scr} \times R_{2\text{-}margin}$. It is assumed that a quantity of vertical windows displayed on the electronic device is e, and a quantity of horizontal windows displayed on the electronic device is f. In this case, a width of the desktop of the electronic device is $W_{scr} = e \times W_1 + f \times W_2 + (e + f - 1) \times M_{1\text{-}min} + 2 \times M_{2\text{-}min} = e \times H_1 \times R_{phone} + f \times H_2 \times R_{scr} + (e + f - 1) \times W_{scr} \times R_{1\text{-}margin} + 2 \times W_{scr} \times R_{2\text{-}margin}$.

Because a height $H_2$ of the horizontal window remains unchanged, a width of the vertical window is

$$W_1 = \frac{W_{scr}\times[1-(e+f-1)\times R_{1-margin}-2\times R_{2-margin}]-f\times H_2\times R_{scr}}{e}.$$

Because a height $H_1$ of the vertical window remains unchanged, a width of the horizontal window is

$$W_2 = \frac{W_{scr}\times[1-(e+f-1)\times R_{1-margin}-2\times R_{2-margin}]-e\times H_1\times R_{phone}}{f}.$$

The electronic device may evenly tile the windows in the available desktop space based on the calculated width $W_1$ of the vertical window and the calculated width $W_2$ of the horizontal window. In the second manner in which the electronic device evenly tiles the windows in the available desktop space in the fully dynamic manner, the distance between the windows of the electronic device, the margin between the window of the electronic device and the edge of the display, the height $H_1$ of the vertical window, and the height $H_2$ of the horizontal window remain unchanged, and the width $W_1$ of the vertical window and the width $W_2$ of the horizontal window vary based on displayed windows. Therefore, the electronic device may disproportionally scale a window, that is, a height of the window remains unchanged and a width of the window changes, so that the width of the desktop of the electronic device can be used to a maximum extent.

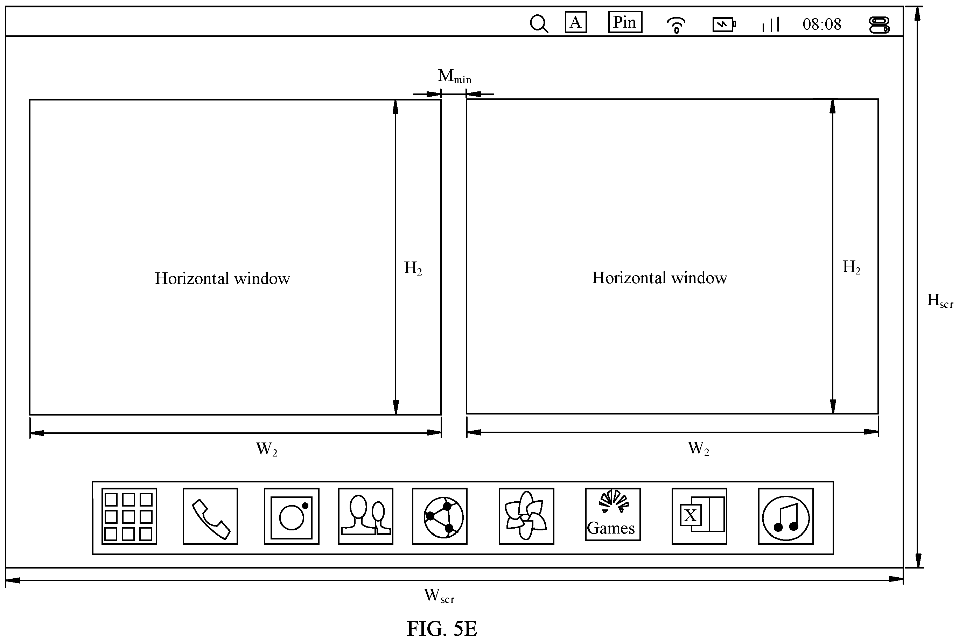

For example, as shown in FIG. 5E, a quantity of horizontal windows simultaneously displayed on the electronic device is 2, and the margin between the window and the edge of the display is equal to the distance between the windows, where both are $M_{min} = W_{scr} \times R_{margin}$, and $R_{margin} = R_{1\text{-}margin} = R_{2\text{-}margin}$. Therefore, the width of the desktop of the electronic device is $W_{scr} = 2 \times W_2 + 3 \times M_{min} = 2 \times H_2 \times R_{scr} + 3 \times W_{scr} \times R_{margin}$. In this case, the width of the horizontal window is $W_2 = \frac{W_{scr}\times(1-3\times R_{margin})}{2}$. The electronic device evenly tiles the two horizontal windows in the available desktop space based on the calculated width $\frac{W_{scr}\times(1-3\times R_{margin})}{2}$ of the horizontal window, the fixed minimum distance $W_{scr} \times R_{margin}$ between the windows of the electronic device, and the fixed minimum margin $W_{scr} \times R_{margin}$ between the window of the electronic device and the edge of the display.

The following continues to describe this application by using the example in which the electronic device evenly tiles the windows in the available desktop space based on the fixed quantity of columns.

Optionally, the window of the chat application and the window of the contacts application may alternatively be vertically displayed, a margin between the window of the chat application and a left edge of the display may alternatively be different from a margin between the window of the contacts application and a right edge of the display, and a margin between the window and the edge of the display may alternatively be different from a distance between the windows.

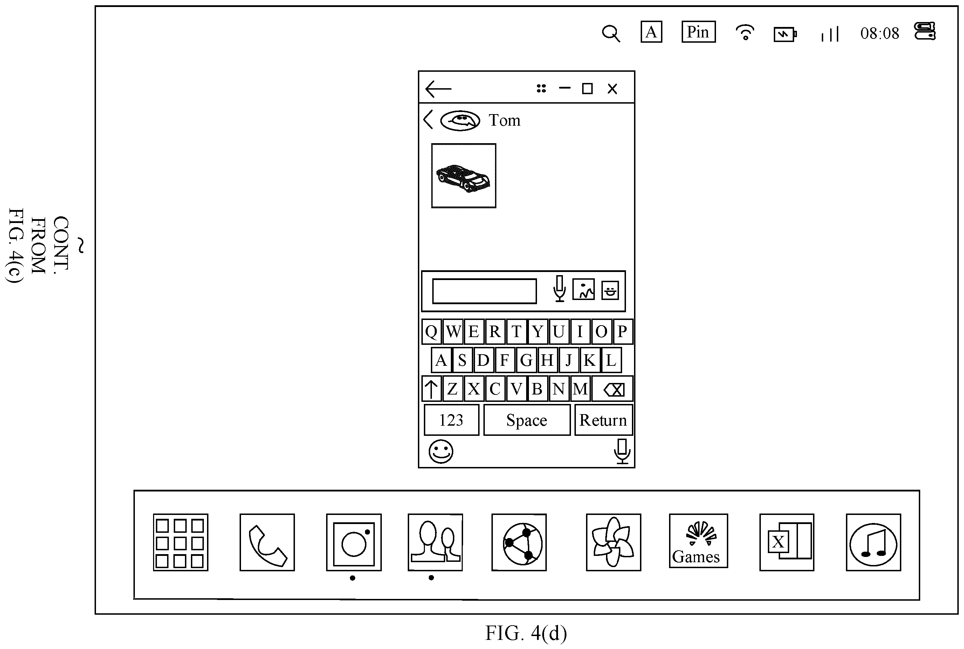

Same as the window of the chat application, the window of the contacts application may also include a window display area, a window size control, and a title bar. The title bar may also include buttons such as "Minimize", "Maximize/Restore", and "Close". Optionally, the title bar may further include buttons such as "Back" and "Window type settings". The user may perform a tap operation on the "Minimize" button in the title bar of the window of the contacts application shown in FIG. 4(c), and in response to the tap operation, the electronic device may hide the window of the contacts application to a contacts icon in the Dock bar, as shown in FIG. 4(d). In FIG. 4(d), the display position of the window of the chat application returns to the middle position in the available desktop space from a position at which the window is located after being leftward moved. Optionally, the display position of the window of the chat application may alternatively be retained at the original position when the contacts application is minimized. In other words, the display position of the window of the chat application remains unchanged before and after the contacts application is minimized. Optionally, in this solution, the user may alternatively tap a corresponding icon of application software in the Dock bar to hide a displayed window of the application software to the icon in the Dock bar. For example, the user taps a contacts icon in the Dock bar to hide the displayed window of the contacts application to the contacts icon in the Dock bar.

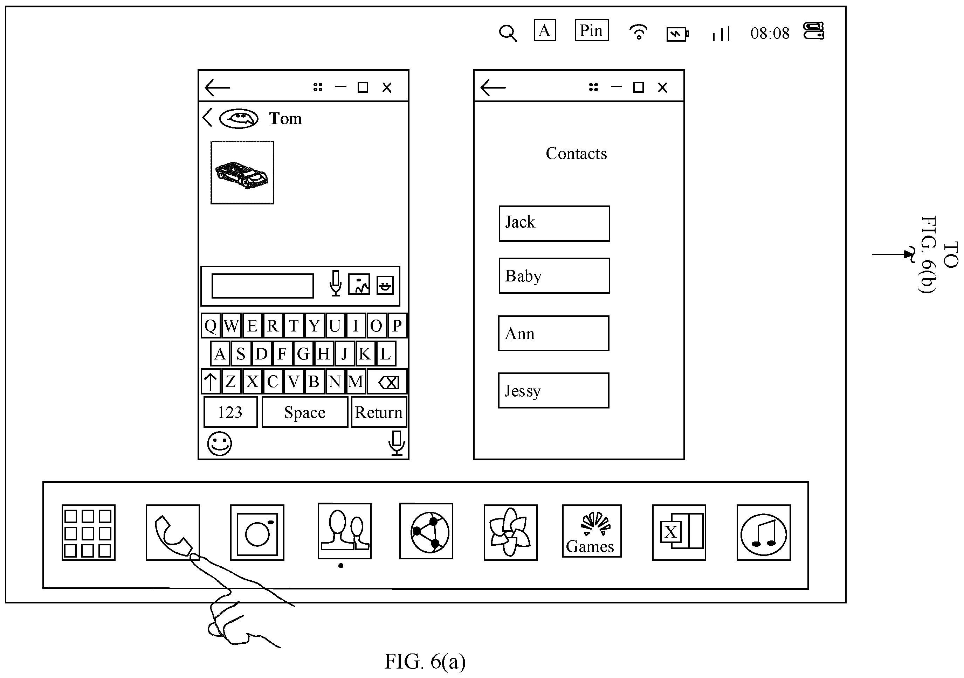

In FIG. 4(a) to FIG. 4(d), only an example in which the electronic device simultaneously runs and displays two applications is used to describe the display method. With continuous development of electronic device technologies, a size of the display of the electronic device is increasingly large, and more applications, for example, three or four applications, are installed on the electronic device. For ease of understanding of this solution, the following embodiments describe this solution by using an example in which the electronic device simultaneously runs and displays three or more applications. FIG. 6(a) to FIG. 6(c) are a schematic diagram of some other user interfaces according to an embodiment of this application.

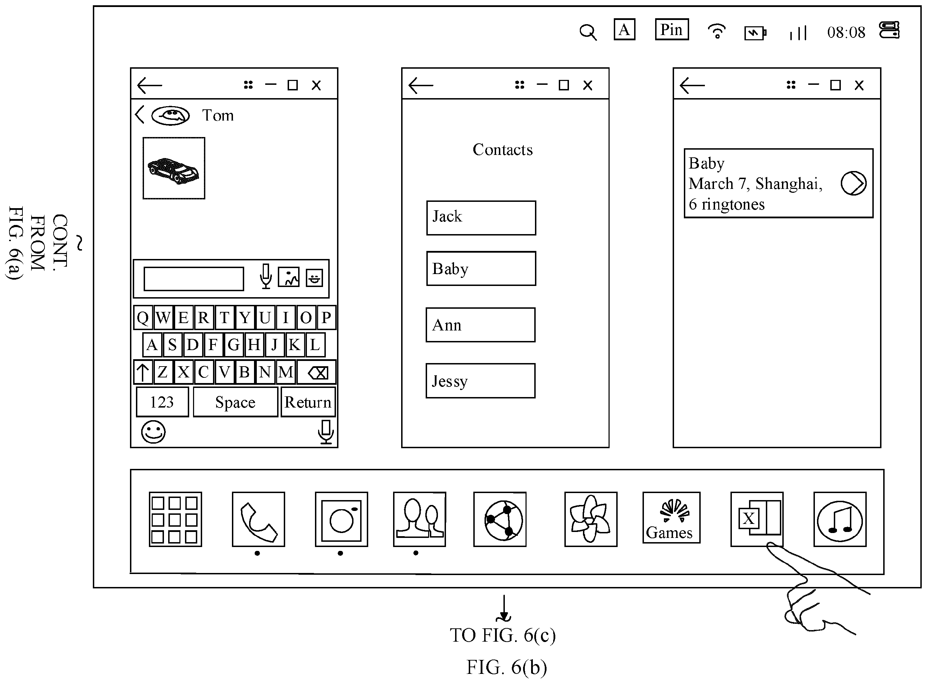

FIG. 6(a) shows the window of the chat application and the window of the contacts application that are evenly tiled in the available desktop space, and the user performs a tap operation on an icon of an application in the Dock bar, for example, performs a tap operation on an icon of a phone application. In response to the tap operation, the electronic device further displays the window of the chat application, the window of the contacts application, and the window of the phone application in the available desktop space in addition to displaying the Dock bar, as shown in FIG. 6(b). The electronic device tiles the window of the chat application, the window of the contacts application, and the window of the phone application in the available desktop space. The window of the phone application is a vertical window. In FIG. 6(b), the electronic device evenly tiles the window of the chat application, the window of the contacts application, and the window of the phone application in the available desktop space. In this case, display positions of the window of the chat application and the window of the contacts application are moved leftward from positions in FIG. 4(c). To be specific, a margin parameter between the window of the chat application and the edge of the display is adjusted, and a distance parameter between the window of the chat application and the window of the contacts application is adjusted. In addition, in the available desktop space, the window of the phone application is inserted on a right side of the window of the contacts application. In this case, the window of the chat application, the window of the contacts application, and the window of the phone application may be sequentially displayed in a horizontal row from left to right based on a sequence in which the applications are opened. Therefore, the desktop is more aesthetic and not messy, and user comfort can be improved. The division in FIG. 5A to FIG. 5E is still used as an example to determine how to tile the window of the chat application, the window of the contacts application, and the window of the phone application in the available desktop space. Specifically, in FIG. 6(b), after the window of the chat application and the window of the contacts application are excluded, a remaining display area of the desktop is $8Y + 11Z$. Further, a minimum margin Z between the window and the edge of the display and a minimum distance Z between the windows, which are 4Z in total, are excluded, an available display area of the desktop is $8Y + 7Z$, and is greater than an area occupied by the vertical window in the available desktop space. Therefore, in this case, the margin may be adjusted, to directly insert the window of the phone application on the right side of the window of the contacts application. In this case, in FIG. 6(b), a margin between the window of the chat application and the edge of the display and a margin between the window of the phone application and the edge of the display are $x = Y + 2Z$, and a distance between the window of the chat application, the window of the contacts application, and the window of the phone application is $y = Y + 2Z$.

Optionally, in the example, if the window of the chat application and/or the window of the contacts application are/is operated by the user, a size of the window of the chat application and/or a size of the window of the contacts application may be adjusted, so that the available display area of the desktop is less than a size of the window of the phone application. In this case, the electronic device may first restore the initial window size of the window, and then determine whether the window of the phone application can be further displayed on the desktop. In this case, the window of the phone application may be further displayed on the desktop, and the electronic device may directly insert the window of the phone application on the right side of the window of the contacts application by adjusting the margin.

Optionally, when a window of an application is displayed on the desktop, a display size may be the initial window size, or the window may be displayed based on a size of the available desktop space, to facilitate viewing by the user. For example, if a window of an application is displayed in the available desktop space, a wider window of the application may be displayed.

Optionally, windows of opened applications, such as the window of the chat application, the window of the contacts application, and the window of the phone application, may be displayed in one vertical column. Alternatively, windows of opened applications, such as the window of the chat application, the window of the contacts application, and the window of the phone application, may be displayed in two horizontal rows. Optionally, the margin between the window of the chat application and the left edge of the display may alternatively be different from a margin between the window of the phone application and the right edge of the display, and the margin between the window and the edge of the display may alternatively be different from the distance between the windows.

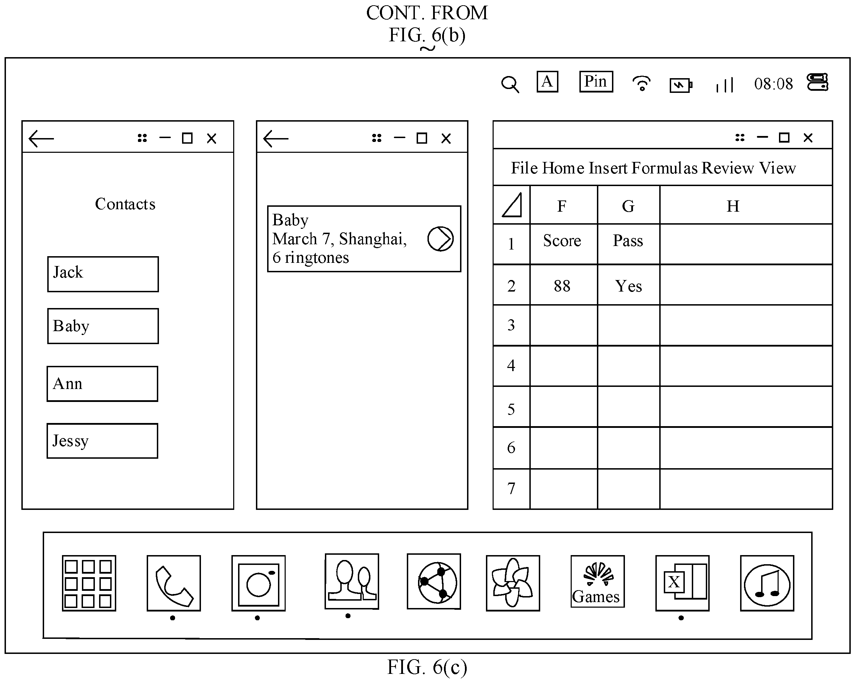

The user may further perform a tap operation on another application in the Dock bar shown in FIG. 6(b). For example, the user performs a tap operation on an excel application shown in FIG. 6(b). In response to the tap operation, the electronic device determines, based on one or more of the following factors, whether a window of the excel application can be further displayed on the current desktop: the remaining display area of the desktop, the minimum margin between the window and the edge of the display, and the minimum distance between the windows. The window of the excel application is a horizontal window. The division in FIG. 5A to FIG. 5E is still used as an example. After the window of the chat application, the window of the contacts application, and the window of the phone application are excluded from the available desktop space, the remaining display area of the desktop is 4Y + 8Z. After the minimum margin Z between the window and the edge of the display and the minimum distance Z between the windows, which are 5Z in total, are excluded, the available display area of the desktop is 4Y + 3Z, and is less than an area occupied by the horizontal window in the available desktop space. Therefore, the window of the excel application cannot be inserted on a right side of the window of the phone application by adjusting the margin. In this case, the electronic device hides the window of the chat application that is on a leftmost side. In this case, the available display area of the desktop is 8Y + 7Z, and is equal to the area occupied by the horizontal window in the available desktop space. In this case, the window of the chat application on the leftmost side may be hidden, and the margin may be adjusted, to directly insert the window of the excel application on the right side of the window of the phone application, as shown in FIG. 6(c).

As described above, more applications, for example, three or four applications, are installed on the electronic device, and a window display manner is accordingly diversified. The division in FIG. 5A to FIG. 5E is still used as an example. The following lists in detail ten window display manners.

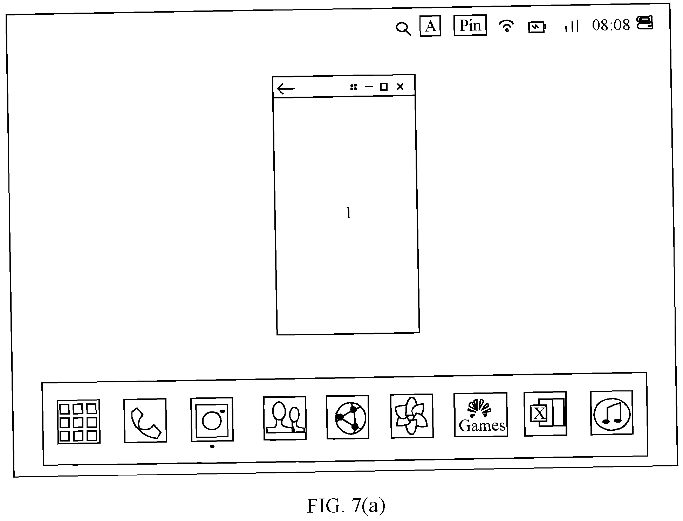

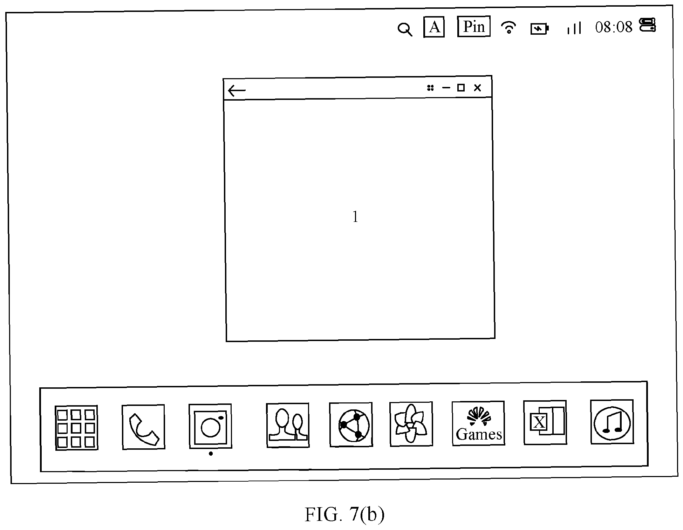

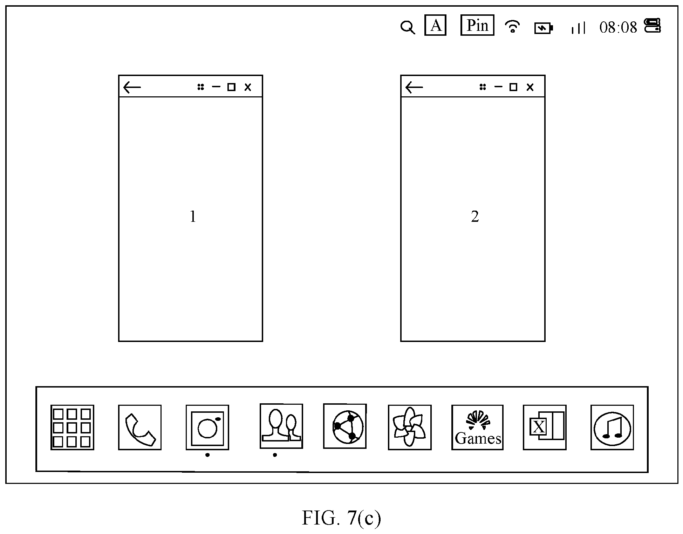

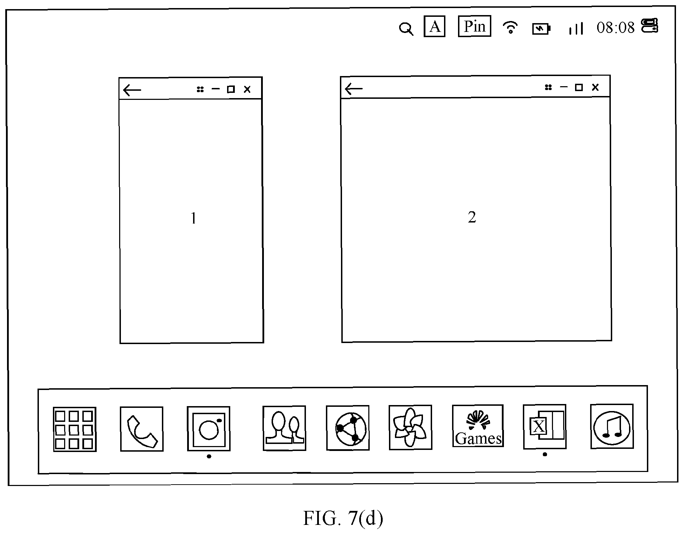

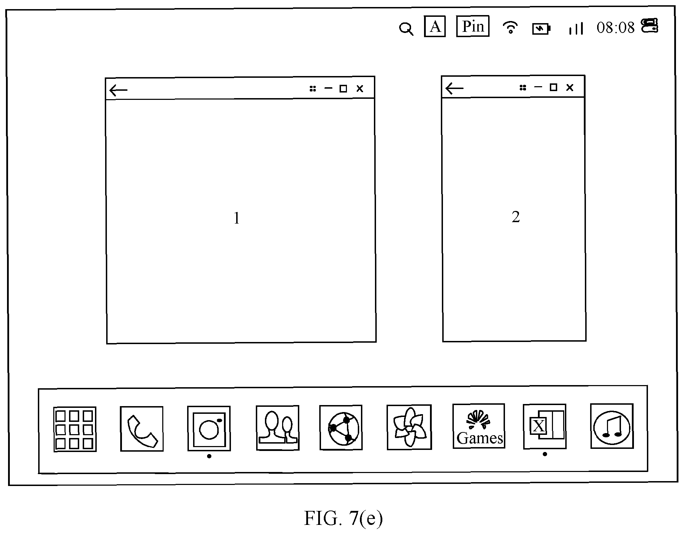

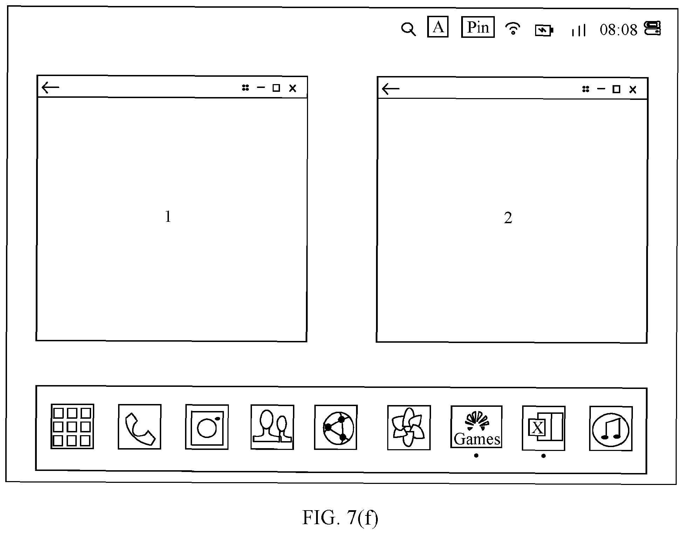

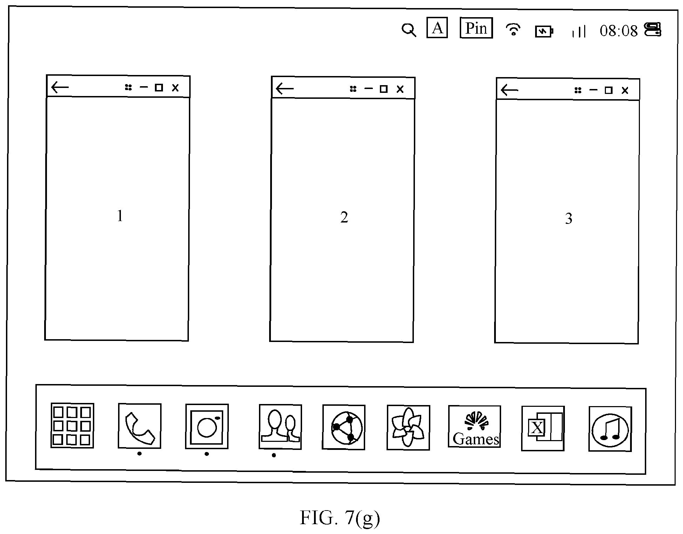

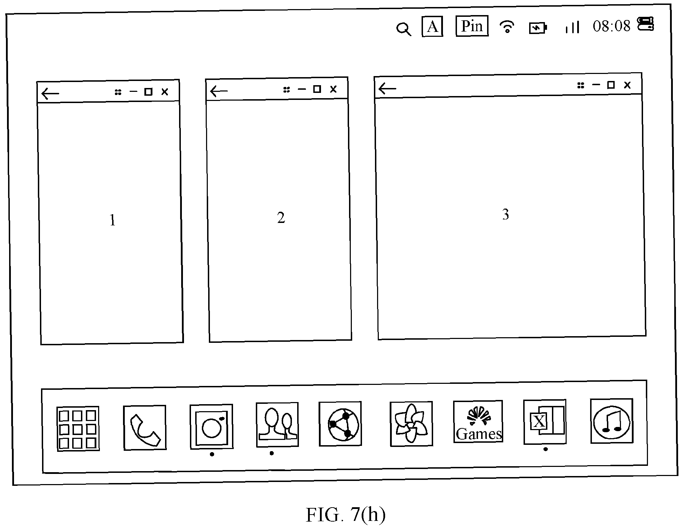

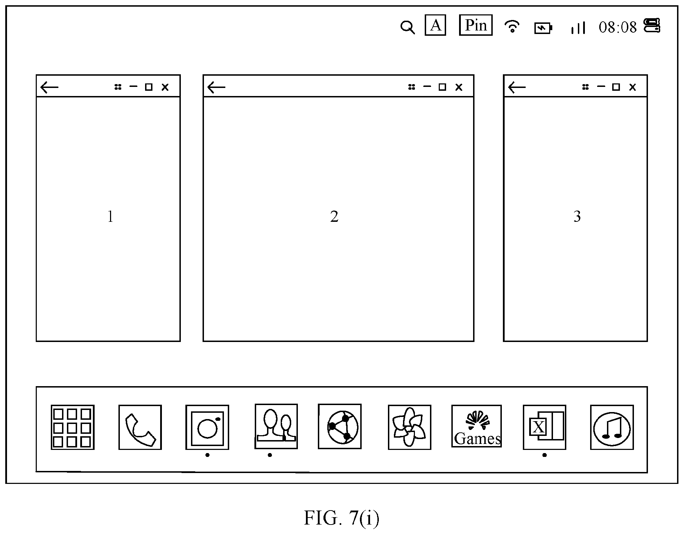

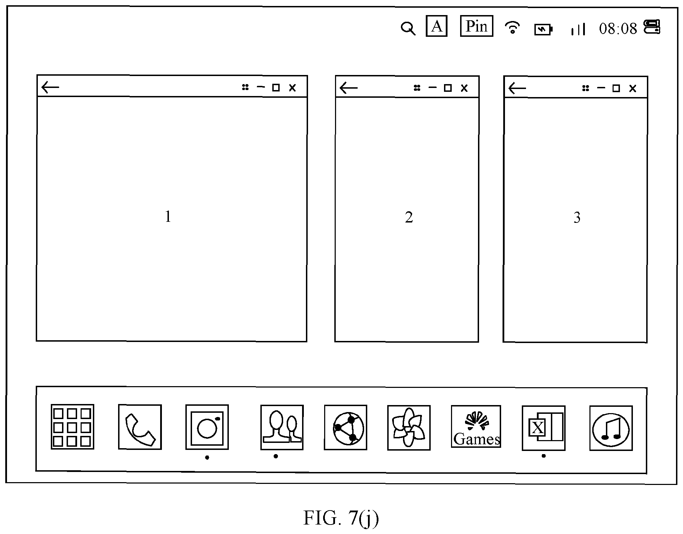

Refer to FIG. 7(a) to FIG. 7(j). FIG. 7(a) shows a first window display manner. In the first window display manner, one vertical window is vertically displayed in the center of the available desktop space, and occupies upper and lower projection areas of the vertical window. A window opening sequence in FIG. 7(a) is opening one vertical window. FIG. 7(b) shows a second window display manner. In the second window display manner, one horizontal window is vertically displayed in the center of the available desktop space, and occupies upper and lower projection areas of the horizontal window. A window opening sequence in FIG. 7(b) is opening one horizontal window. FIG. 7(c) shows a third window display manner. In the third window display manner, two vertical windows are evenly tiled in the available desktop space, and each vertical window occupies upper and lower projection areas of the vertical window. A window opening sequence in FIG. 7(c) is that the two windows are opened in a sequence of a vertical window and a vertical window. FIG. 7(d) shows a fourth window display manner. In the fourth window display manner, one vertical window and one horizontal window are evenly tiled in the available desktop space, and the vertical window and the horizontal window each occupy upper and lower projection areas thereof. A window opening sequence in FIG. 7(d) is that the two windows are opened in a sequence of a vertical window and a horizontal window. FIG. 7(e) shows a fifth window display manner. In the fifth window display manner, one horizontal window and one vertical window are evenly tiled in the available desktop space, and the horizontal window and the vertical window each occupy upper and lower projection areas thereof. A window opening sequence in FIG. 7(e) is that the two windows are opened in a sequence of a horizontal window and a vertical window. FIG. 7(f) shows a sixth window display manner. In the sixth window display manner, one horizontal window and one horizontal window are evenly tiled in the available desktop space, and each horizontal window occupies upper and lower projection areas of the horizontal window. A window opening sequence in FIG. 7(f) is that the two windows are opened in a sequence of a horizontal window and a horizontal window. FIG. 7(g) shows a seventh window display manner. In the seventh window display manner, three vertical windows are evenly tiled in the available desktop space, and each vertical window occupies upper and lower projection areas of the vertical window. A window opening sequence in FIG. 7(g) is that the three windows are opened in a sequence of a vertical window, a vertical window, and a vertical window. FIG. 7(h) shows an eighth window display manner. In the eighth window display manner, two vertical windows and one horizontal window are evenly tiled in the available desktop space, and the vertical windows and the horizontal window each occupy upper and lower projection areas thereof. A window opening sequence in FIG. 7(h) is that the three windows are opened in a sequence of a vertical window, a vertical window, and a horizontal window. FIG. 7(i) shows a ninth window display manner. In the ninth window display manner, one vertical window, one horizontal window, and one vertical window are evenly tiled in the available desktop space, and the vertical windows and the horizontal window each occupy upper and lower projection areas thereof. A window opening sequence in FIG. 7(i) is that the three windows are opened in a sequence of a vertical window, a horizontal window, and a vertical window. FIG. 7(j) shows a tenth window display manner. In the tenth window display manner, one horizontal window, one vertical window, and one vertical window are evenly tiled in the available desktop space, and the horizontal window and the vertical windows each occupy upper and lower projection areas thereof. A window opening sequence in FIG. 7(j) is that the three windows are opened in a sequence of a horizontal window, a vertical window, and a vertical window.

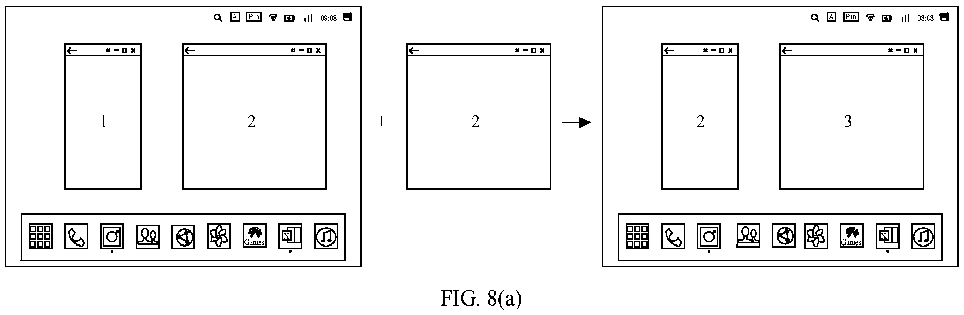

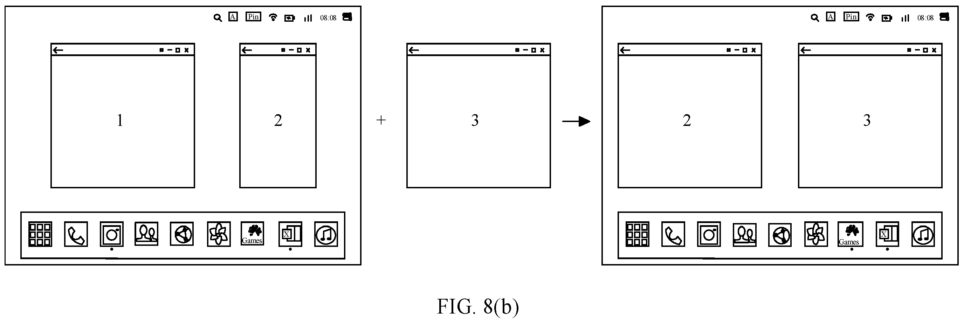

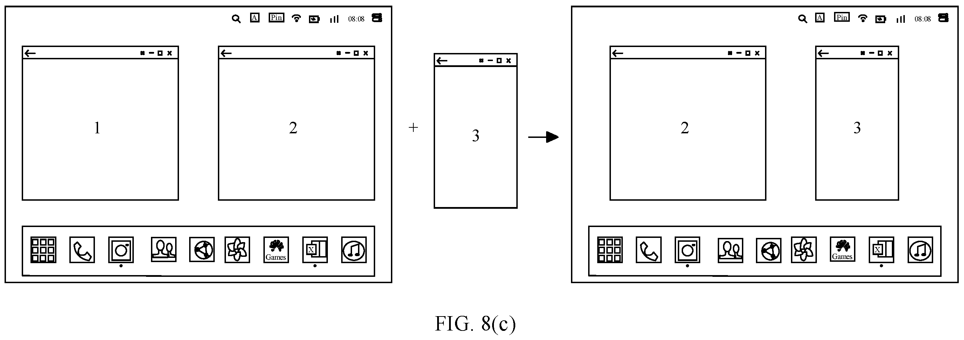

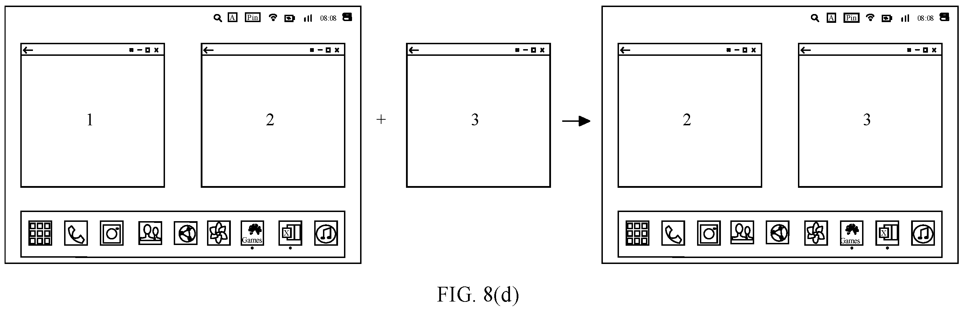

The window opening sequence is not limited to the foregoing opening sequences, and may alternatively be another opening sequence, for example, another opening sequence of three windows or an opening sequence of four windows. However, only two or three windows can be displayed in the available desktop space, and a window display manner is still one of the ten display manners. The another opening sequence of three windows may be as follows: For example, a first opening sequence is: first opening a vertical window, then opening a horizontal window, and then opening a horizontal window. Alternatively, a second opening sequence is: first opening a horizontal window, then opening a vertical window, and then opening a horizontal window. Alternatively, a third opening sequence is: first opening a horizontal window, then opening a horizontal window, and then opening a vertical window. Alternatively, a fourth opening sequence is: first opening a horizontal window, then opening a horizontal window, and then opening a horizontal window. In the first opening sequence, as shown in FIG. 8(a), only two windows are displayed on the desktop, and a window display manner is switched from the fourth display manner to the sixth display manner. In the second opening sequence, as shown in FIG. 8(b), only two windows are displayed on the desktop, and a window display manner is switched from the fifth display manner to the fourth display manner. In the third opening sequence, as shown in FIG. 8(c), only two windows are displayed on the desktop, and a window display manner is switched from the sixth display manner to the fifth display manner. In the fourth opening sequence, as shown in FIG. 8(d), only two windows are displayed on the desktop, and a window display manner is switched from the sixth display manner to the sixth display manner. The opening sequence of four windows may be as follows: For example, when the four windows are opened in a sequence of a vertical window, a vertical window, a horizontal window, and a vertical window, only three windows are displayed on the desktop, and a window display manner is switched from the eighth display manner to the ninth display manner.

It may be understood that the window display manner also varies based on the area occupied by the available desktop space, the area occupied by the vertical window in the available desktop space, and the area occupied by the horizontal window in the available desktop space. For example, when the available desktop space occupies a larger area, the window display manner may be that four or more windows are simultaneously displayed in the available desktop space. Definitely, a window display manner is accordingly different.

It may be understood that the window display manner also varies based on a window display type (for example, the foregoing one-row display). For example, when windows are displayed in two rows, a window display manner may be that four or more windows are simultaneously displayed in the available desktop space.

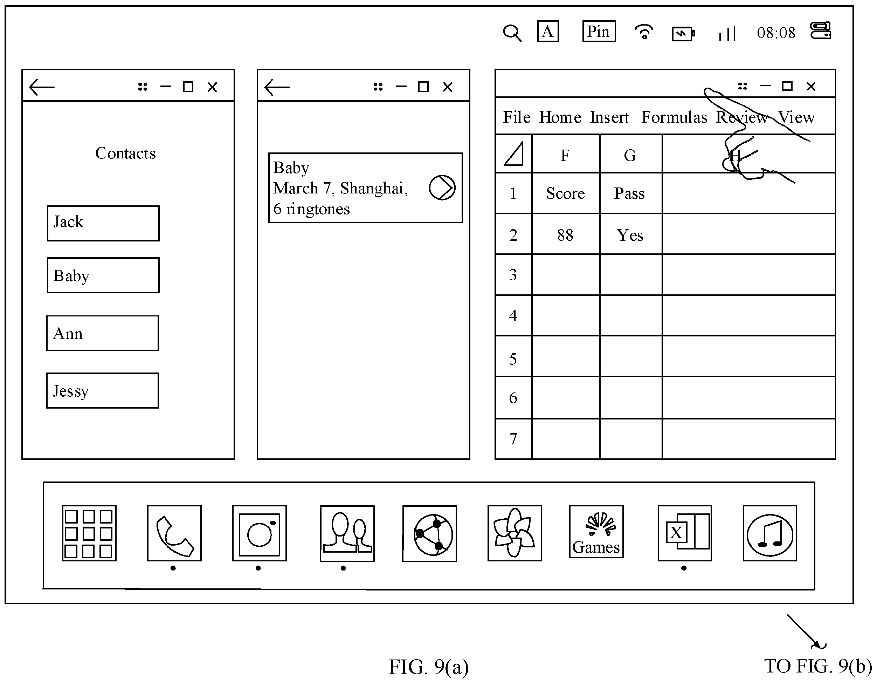

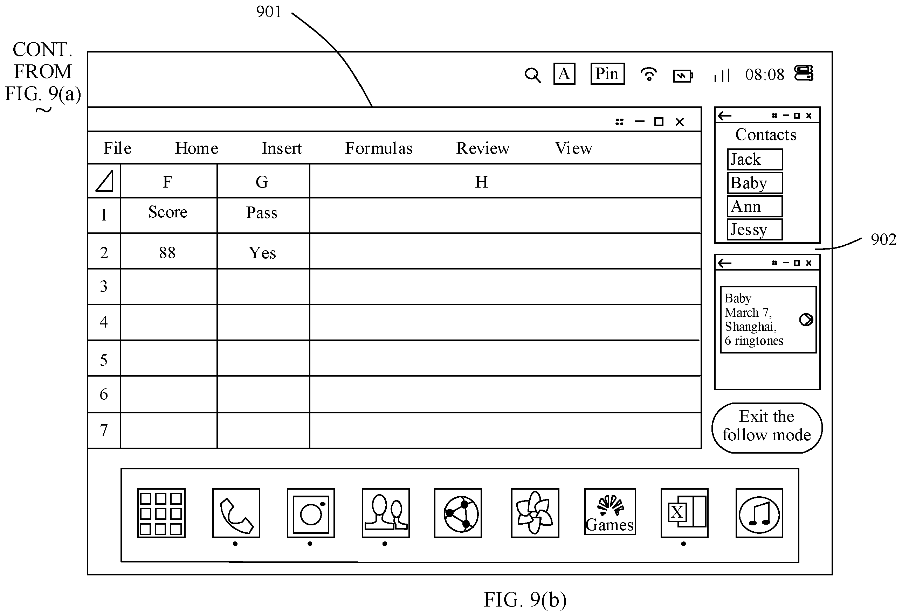

FIG. 9(a) and FIG. 9(b) are a schematic diagram of an application interface when the application interface is switched to the focus mode according to an embodiment of this application. FIG. 9(a) shows the window of the contacts application, the window of the phone application, and the window of the excel application that are evenly tiled in the available desktop space in a sequence from left to right, and an operation performed by the user on a title bar of a window displayed on the desktop, for example, a double-tap operation on a title bar of the window of the excel application. In response to the double-tap operation, a window display mode is switched from the tile mode to the focus mode. In this case, the application interface is accordingly switched from an application interface in the tile mode to an application interface in the focus mode in FIG. 9(b). FIG. 9(b) may not only include a status bar and a Dock bar, but also include a main area 901 and a sidebar area 902. Optionally, FIG. 9(b) may not include a status bar and a Dock bar. A size of the main area 901 is greater than a size of the sidebar area 902. The main area 901 is used to display the window of an excel application. The sidebar area 902 is used to display the window of the contacts application and the window of the phone application. The sidebar area 902 may be a left sidebar area or a right sidebar area. Optionally, the window of the contacts application and the window of the phone application are displayed in parallel in the sidebar area 902 in a top-bottom manner, that is, are displayed in the sidebar area 902 in a vertical display manner. Optionally, the window of the contacts application and the window of the phone application are displayed in parallel above or below the window of the excel application in a left-right manner, that is, are displayed in the sidebar area 902 in a horizontal display manner. The window of the contacts application and the window of the phone application each may include a window display area, but do not include a title bar. Optionally, the window of the contacts application and the window of the phone application each may include a window display area, a window size control, and a title bar. Optionally, the window of the excel application includes a window display area, a window size control, and a title bar. Functions of the window display area and the window size control of the excel application are the same as those of the window display area and the window size control of the chat application, and details are not described herein again. Optionally, the user may exit the focus mode by double-tapping the title bar, and switch from the focus mode to the tile mode. Optionally, FIG. 9(b) further includes an exit virtual button, for example, a virtual button "Exit the follow mode". The user may alternatively exit the focus mode by tapping the exit virtual button, to switch from the focus mode to the tile mode. After the focus mode is exited, the window of the contacts application, the window of the phone application, and the window of the excel application are evenly tiled in the available desktop space from left to right.

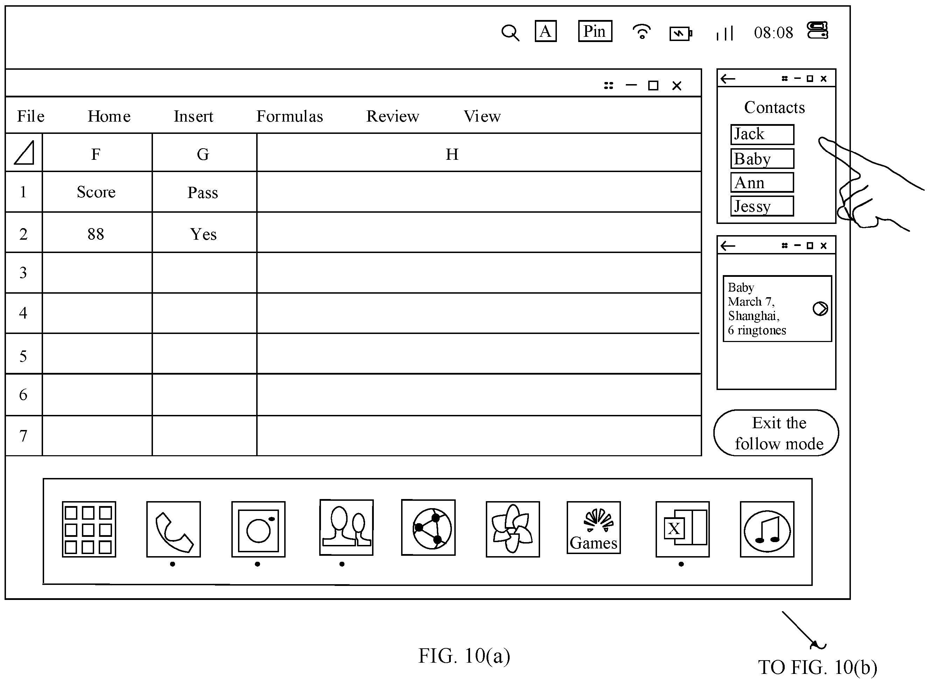

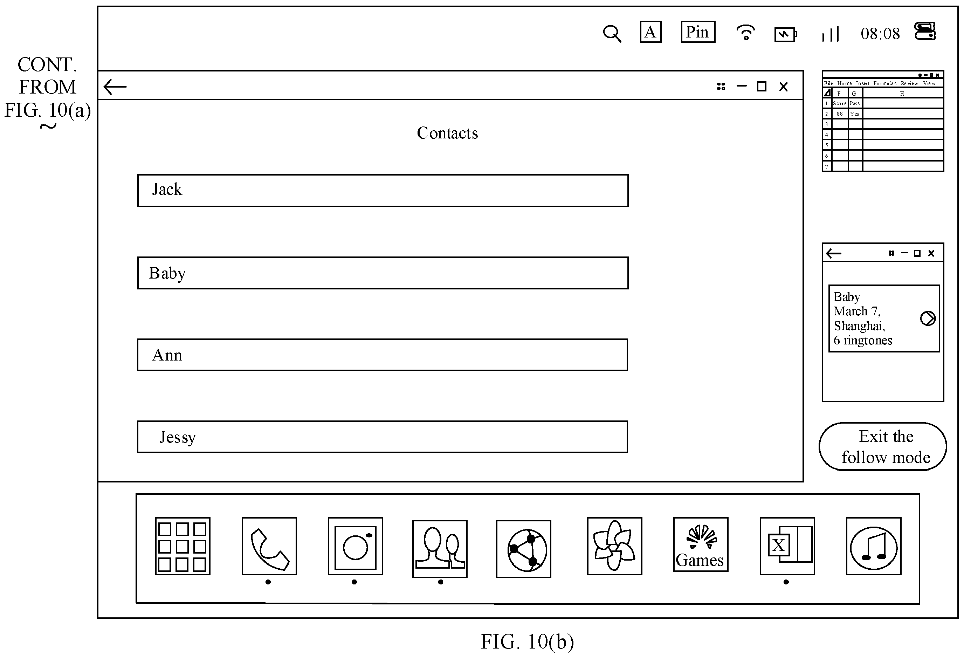

In some embodiments, after the window of the excel application is displayed in the main area for a period of time, the user may need to operate another window, for example, the window of the contacts application. In this case, the window of the contacts application needs to be displayed in the main area There are two manners for switching the window of the contacts application from the sidebar area to the main area. The following describes in detail a first manner of switching the window of the contacts application from the sidebar area to the main area. FIG. 10(a) and FIG. 10(b) are a schematic diagram of some other application interfaces according to an embodiment of this application. FIG. 10(a) shows the window of the excel application that is displayed in the main area, the window of the contacts application and the window of the phone application that are displayed in the sidebar area, and a touch operation, for example, a tap or a double-tap, performed by the user on the window of the contacts application. In response to the tap operation, the electronic device switches windows displayed in the main area and the sidebar area. To be specific, the window of the contacts application is displayed in the main area, and the window of the excel application and the window of the phone application are displayed in the sidebar area, as shown in FIG. 10(b). In FIG. 10(b), the window of the excel application and the window of the phone application are displayed in parallel in the sidebar area in a top-bottom manner, that is, are displayed in the sidebar area in a vertical display manner.

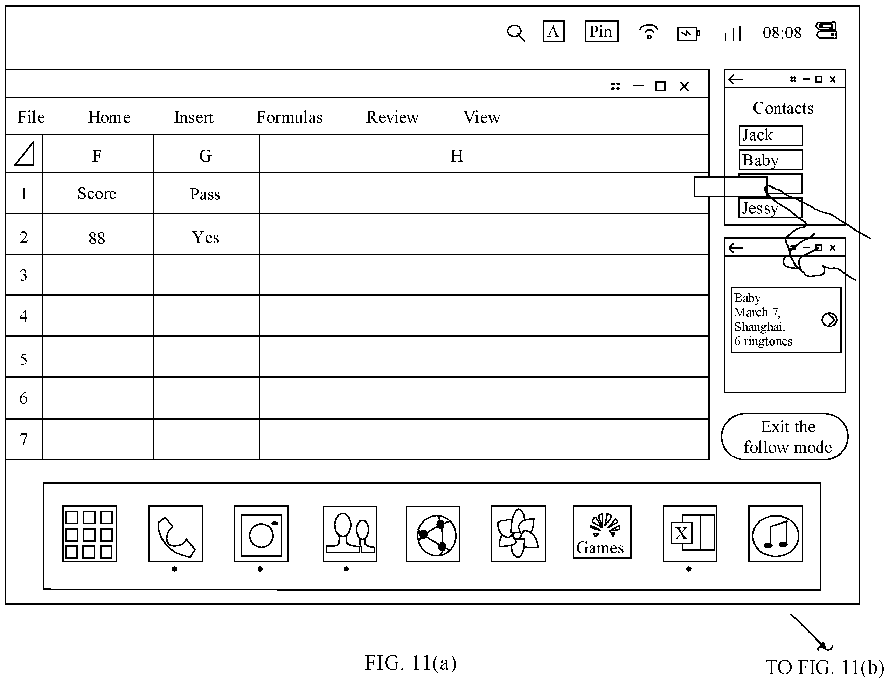

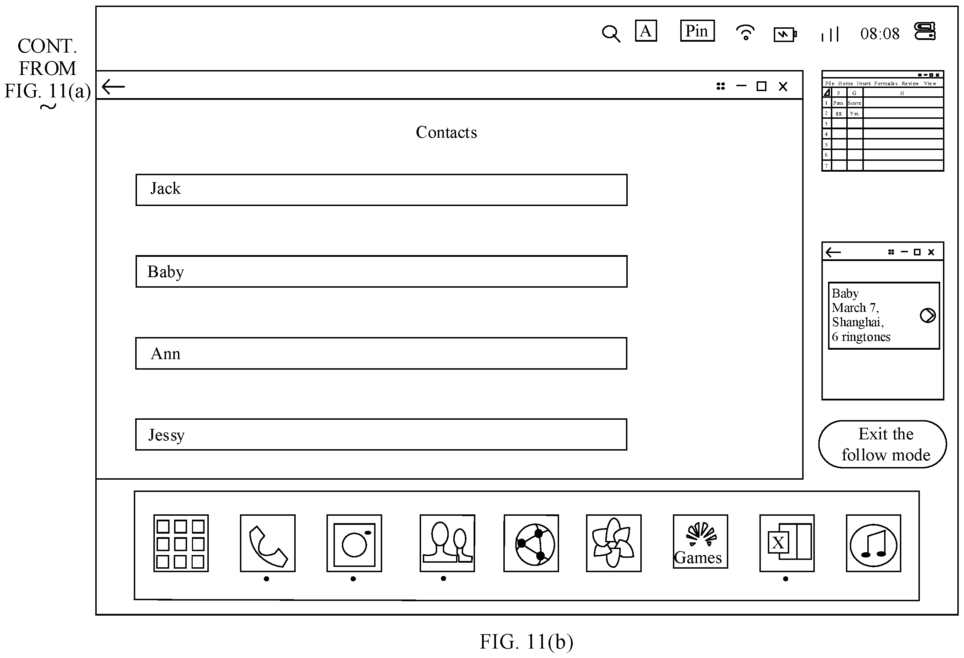

The following describes in detail a second manner of switching the window of the contacts application from the sidebar area to the main area. FIG. 11(a) and FIG. 11(b) are a schematic diagram of some other application interfaces according to an embodiment of this application. FIG. 11(a) shows the window of the excel application that is displayed in the main area, the window of the contacts application and the window of the phone application that are displayed in the sidebar area, and an operation, performed by the user, of dragging the window of the contacts application from the sidebar area to the main area. In response to the dragging operation, the electronic device switches windows displayed in the main area and the sidebar area. To be specific, the window of the contacts application is displayed in the main area, and the window of the excel application and the window of the phone application are displayed in the sidebar area, as shown in FIG. 11(b). In FIG. 11(b), the window of the excel application and the window of the phone application are displayed in parallel in the sidebar area in a top-bottom manner, that is, are displayed in the sidebar area in a vertical display manner.

It may be understood that the user may alternatively switch the windows in the main area and the sidebar area by dragging the window of the excel application from the main area to the sidebar area. Alternatively, the user may switch the windows in the main area and the sidebar area by dragging the window of the contacts application from the sidebar area to the main area. Alternatively, the user may switch the windows in the main area and the sidebar area by dragging the window of the excel application from the main area to the sidebar area.

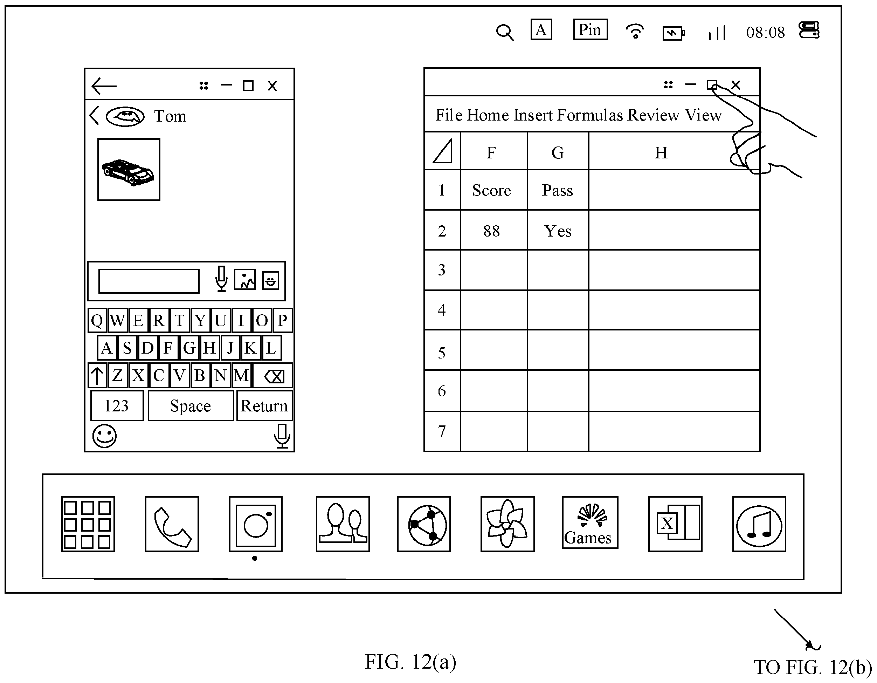

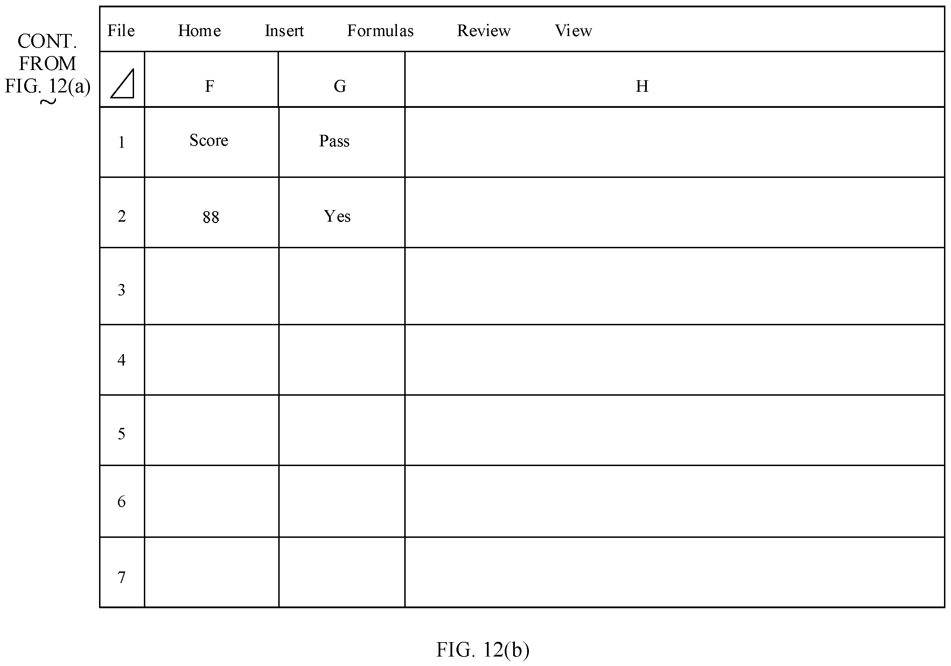

FIG. 12(a) and FIG. 12(b) are a schematic diagram of switching an application interface to a full-screen mode according to an embodiment of this application. The full-screen mode may be switched from any interface in FIG. 7(a) to FIG. 7(j). In other words, the application interface may be any interface in FIG. 7(a) to FIG. 7(j). FIG. 12(a) in this application uses a style of FIG. 7(d) as an example. FIG. 12(a) shows the window of the chat application and the window of the excel application that are evenly tiled in the available desktop space in a sequence from left to right, and a tap operation performed by the user on a "Maximize/Restore" button of a window, for example, a tap operation performed on the "Maximize/Restore" button of the window of the excel application. In an embodiment, in response to the tap operation, a window display mode is switched from the tile mode to the full-screen mode. In this case, the application interface is accordingly switched from an application interface in the tile mode to an application interface in the full-screen mode in FIG. 12(b). In FIG. 12(b), the window of the excel application is maximized to fill the entire desktop, and no other content is displayed on the entire desktop.

Optionally, maximizing the window of the excel application may alternatively be that the window of the excel application occupies only a part of the display area of the desktop. For example, when the display is a notch screen (Notch screen), the window of the excel application is displayed in a middle part of the notch screen, and one side edge or both side edges are black. Optionally, maximizing the window of the excel application may alternatively be that when displaying the window of the excel application on the desktop, the status bar and the Dock bar may also be displayed. Optionally, the operation of switching the application interface to the focus mode and the operation of switching the application interface to the full-screen mode may be respectively a tap operation performed by the user on a "Maximize/Restore" button of a window and a tap operation performed by the user on a title bar of a window displayed on the desktop.

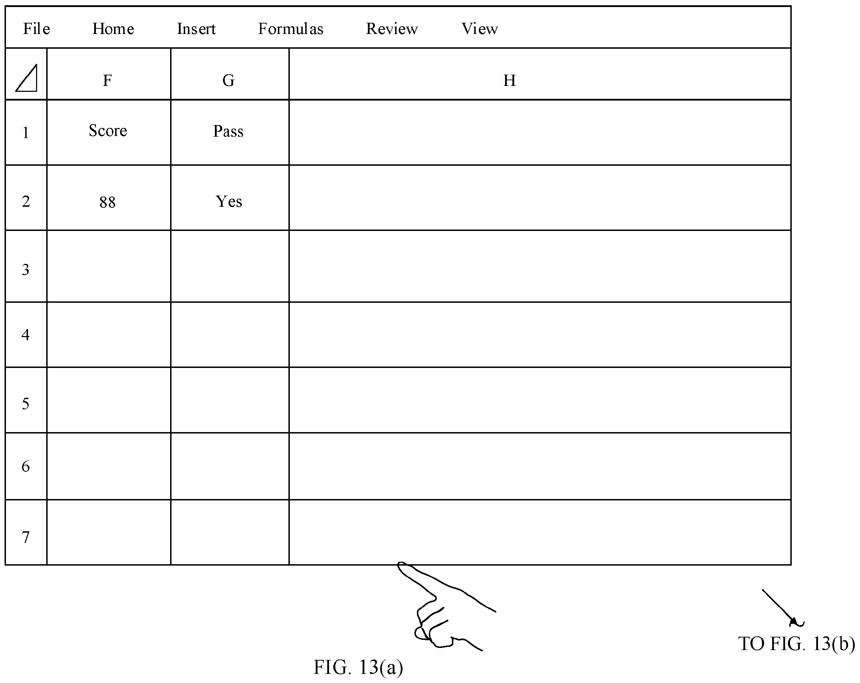

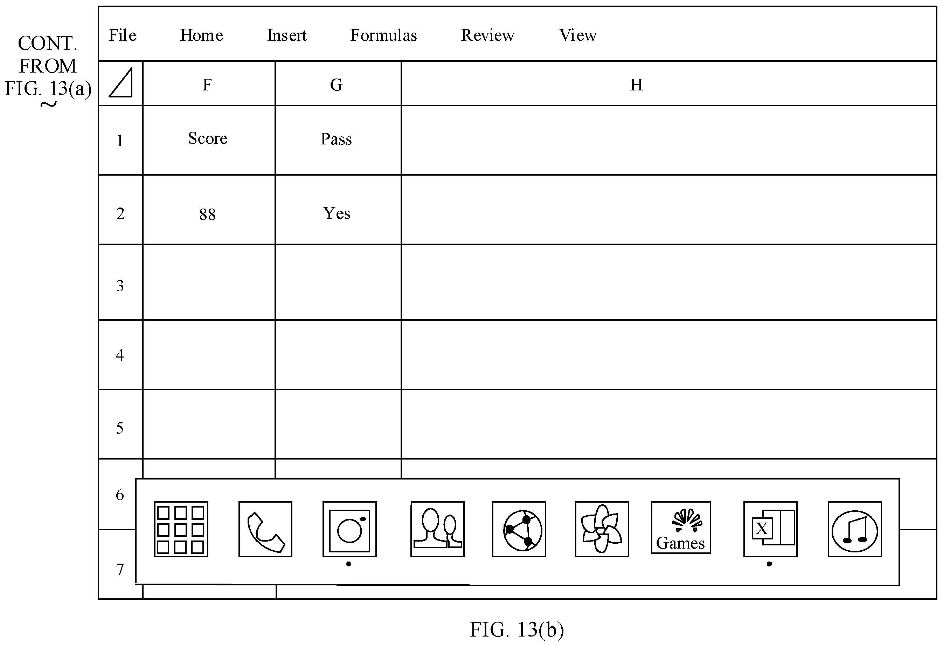

In some embodiments, after the window of the excel application is maximized for a period of time, the user may need to operate another application, for example, the contacts application. In this case, the Dock bar needs to be displayed to start the contacts application. FIG. 13(a) and FIG. 13(b) show a manner of displaying the Dock bar. FIG. 13(a) shows that the window of the excel application is maximized to fill the entire desktop, no other content is displayed on the entire desktop, and the user performs a stay operation on a lower edge of the desktop. In response to the stay operation, the electronic device displays the Dock bar on the maximized window of the excel application, as shown in FIG. 13(b). Therefore, the user may start another application, for example, the contacts application, by operating the Dock bar. In this case, the window of the started contacts application is displayed as a floating window. Optionally, the user may alternatively display the Dock bar by sliding down on the desktop or pulling down an upper edge by using a touch gesture. A size of the floating window of the contacts application is smaller than a size of the maximized window of the excel application. The floating window of the contacts application may be a proportionally scaled-down version, an equal-proportion version, or a proportionally scaled-up version of the window of the contacts application in the tile mode. The floating window of the contacts application includes a window display area and a title bar. Optionally, the floating window of the contacts application further includes a window size control. A function of the window display area of the floating window of the contacts application is the same as a function of the window display area of the window of the chat application in FIG. 4(b), and details are not described herein again. The title bar of the floating window of the contacts application may include buttons such as "Minimize", "Maximize/Restore", and "Close". Optionally, the title bar may further include buttons such as "Back" and "Window type settings". The user may hide the floating window of the contacts application to the Dock bar by tapping the "Minimize" button in the title bar of the floating window of the contacts application. The user may switch between the window of the excel application and the window of the contacts application by tapping the "Maximize/Restore" button in the title bar of the floating window of the contacts application. To be specific, the window of the contacts application is maximized to fill the entire desktop, and the window of the excel application is hidden to the Dock bar. The user may completely exit the program by tapping the "Close" button in the title bar of the floating window of the contacts application. Optionally, the user may further hide the floating window of the contacts application to the Dock bar by performing an operation on the maximized window of the excel application.

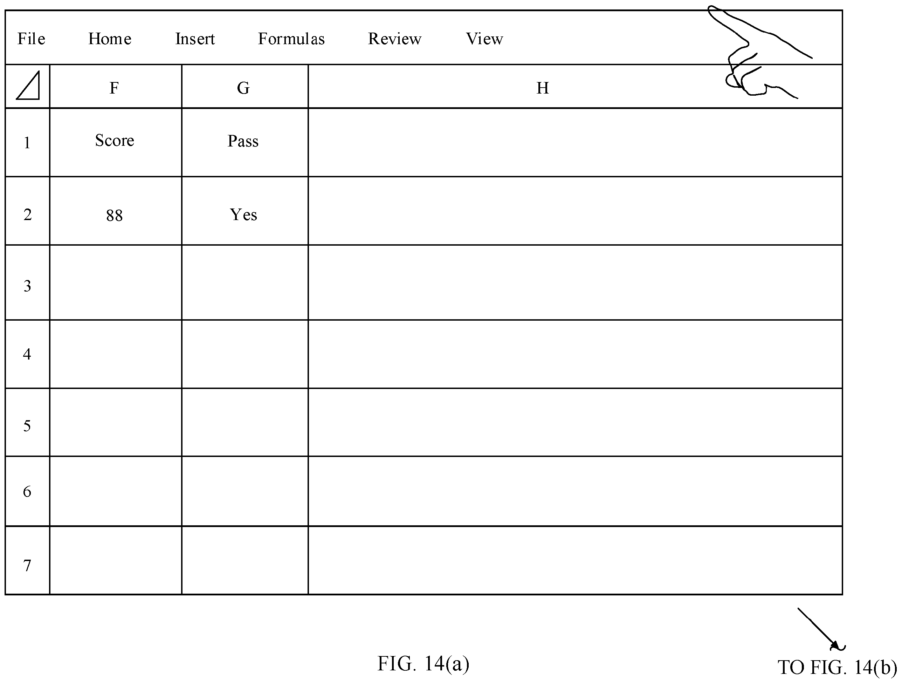

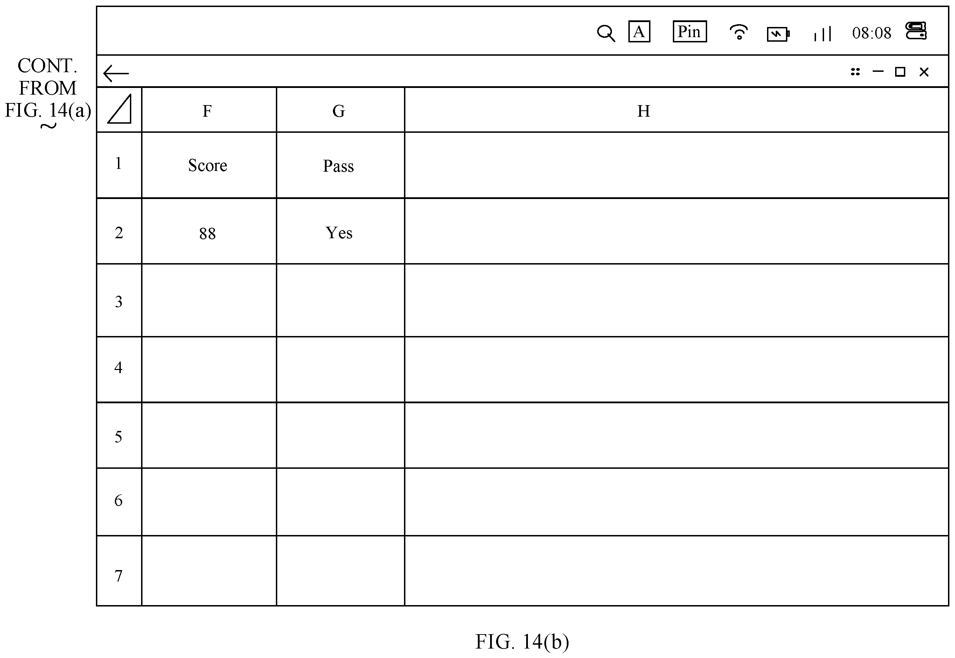

In some embodiments, after the window of the excel application is maximized for a period of time, the user may need to use the status bar and the title bar of the maximized window. For example, the user needs to tap a button in a title bar of the maximized window to exit the full-screen mode. In this case, the status bar and the title bar of the maximized window need to be displayed. FIG. 14(a) and FIG. 14(b) show a manner of displaying the status bar and the title bar of the maximized window. FIG. 14(a) shows that the window of the excel application is maximized to fill the entire desktop, no other content is displayed on the entire desktop, and the user performs a stay operation on the upper edge of the desktop. In response to the stay operation, the electronic device displays the status bar and the title bar of the maximized window on the maximized window of the excel application, as shown in FIG. 14(b). The title bar of the maximized window may include buttons such as "Minimize", "Maximize/Restore", and "Close". Optionally, the title bar of the maximized window may further include buttons such as "Back" and "Window type settings". The user may exit the full-screen mode by tapping the "Maximize/Restore" button in the title bar of the window of the excel application, and switch from the full-screen mode to the tile mode. A display sequence of a current full-screen application in the full-screen mode is retained, and when the full-screen mode is exited and switched to the tile mode, displaying is performed in the sequence of the current full-screen application in the full-screen mode. The excel application and the chat application are still used as an example. The retained display sequence of the current full-screen application is displaying the excel application and the chat application. When the excel application is switched from the full-screen mode to the tile mode, the window of the excel application and the window of the chat application are evenly tiled in the available desktop space in a sequence from left to right. If the full-screen window of the excel application and the window of the contacts application are switched, that is, the window of the contacts application is maximized, the retained display sequence of the current full-screen application is displaying the contacts application. When the contacts application is switched from the full-screen mode to the tile mode, the window of the contacts application is displayed. Even when the window of the contacts application is maximized, a floating window of another application, for example, a floating window of the chat application, is displayed by operating the Dock bar. When the contacts application is switched from the full-screen mode to the tile mode, the window of the contacts application is also displayed. Optionally, the user may alternatively exit the full-screen mode by tapping an ESC button, and switch from the full-screen mode to the tile mode. Optionally, the user may alternatively display the status bar and the title bar of the maximized window by sliding up on the desktop or pulling up the lower edge by using a touch gesture.

Optionally, in another embodiment, in response to the tap operation in FIG. 12(a), the window of the excel application is maximized to fill the entire desktop, the window of the chat application is displayed on the window of the excel application in a form of a floating ball, and no other content is displayed on the entire desktop. The floating ball may display an icon or a name of the chat application. The floating ball may be displayed on the upper left, the upper right, the lower left, the lower right, and the like. If three or more windows are included in FIG. 12(a), a plurality of floating balls are displayed. The plurality of floating balls are displayed in a superposition manner, and each floating ball may display an icon or a name of an application corresponding to a window displayed in FIG. 12(a). Optionally, the floating ball may further be a floating ball of an opened application in FIG. 12(a). In other words, the floating ball not only includes a floating ball of an application corresponding to a window displayed in FIG. 12(a), but also includes a floating ball of an application corresponding to a hidden window. Each floating ball may further display an icon or a name of an opened application in FIG. 12(a).

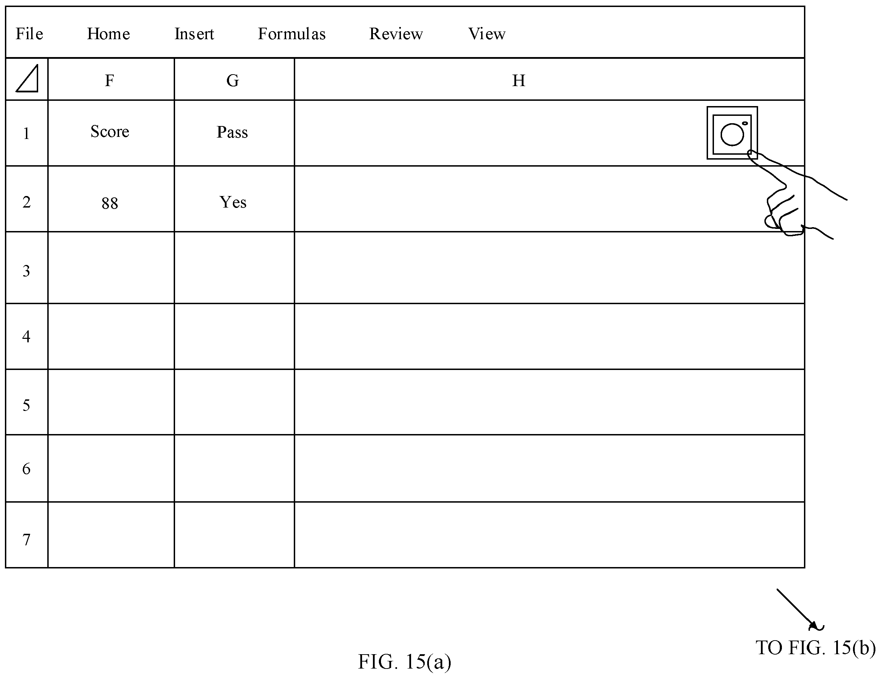

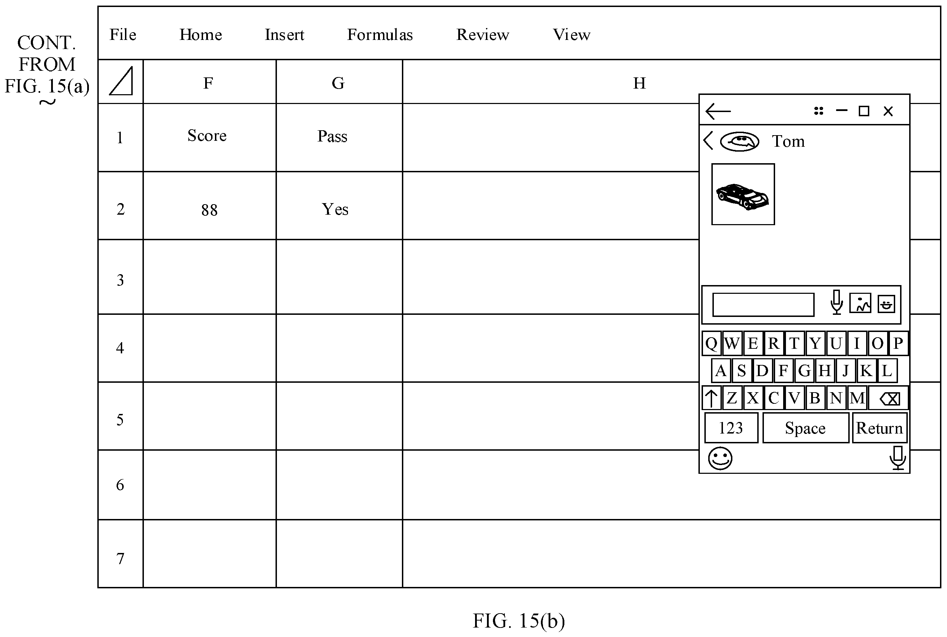

In some embodiments, after the window of the excel application is maximized for a period of time, the user may need to operate a window of an application corresponding to a floating ball, for example, the window of the chat application. In this case, the window of the chat application needs to be displayed. FIG. 15(a) and FIG. 15(b) show a manner of displaying the window of the chat application. FIG. 15(a) shows that the window of the excel application is maximized to fill the entire desktop, the window of the chat application is displayed on the window of the excel application in a form of a floating ball, no other content is displayed on the entire desktop, and the user performs a tap operation on a floating ball, for example, a tap operation on the floating ball of the chat application. In response to the tap operation, the electronic device displays the floating window of the chat application on the maximized window of the excel application, as shown in FIG. 15(b). A size of the floating window of the chat application is smaller than the size of the maximized window of the excel application. The floating window of the chat application is a proportionally scaled-down version, an equal-proportion version, or a proportionally scaled-up version of the window of the chat application in the tile mode. The floating window of the chat application includes a window display area and a title bar. Optionally, the floating window of the chat application further includes a window size control. A function of the window display area of the floating window of the chat application in FIG. 15(b) is the same as the function of the window display area in the window of the chat application in FIG. 4(b), and details are not described herein again. The title bar of the floating window of the chat application may include buttons such as "Minimize", "Maximize/Restore", and "Close". Optionally, the title bar may further include buttons such as "Back" and "Window type settings". The user may convert the floating window of the chat application into the floating ball of the chat application by taping the "Minimize" button in the title bar of the floating window of the chat application. The user may switch between the window of the excel application and the window of the chat application by tapping the "Maximize/Restore" button in the title bar of the floating window of the chat application. To be specific, the window of the chat application is maximized to fill the entire desktop, and the window of the excel application is displayed on the window of the chat application in a form of a floating ball. The user may completely exit the program by tapping the "Close" button in the title bar of the floating window of the chat application. Optionally, the user may further convert the floating window of the chat application into the floating ball of the chat application by performing an operation on the maximized window of the excel application.

When the contacts application is started by using the Dock bar, the user may convert the floating window of the contacts application into the floating ball of the contacts application by tapping the "Minimize" button in the title bar of the floating window of the contacts application. The user may switch between the window of the excel application and the window of the contacts application by tapping the "Maximize/Restore" button in the title bar of the floating window of the contacts application. To be specific, the window of the contacts application is maximized to fill the entire desktop, and the window of the excel application is displayed on the window of the contacts application in a form of a floating ball. Optionally, the user may further convert the floating window of the contacts application into the floating ball of the contacts application by performing an operation on the maximized window of the excel application.

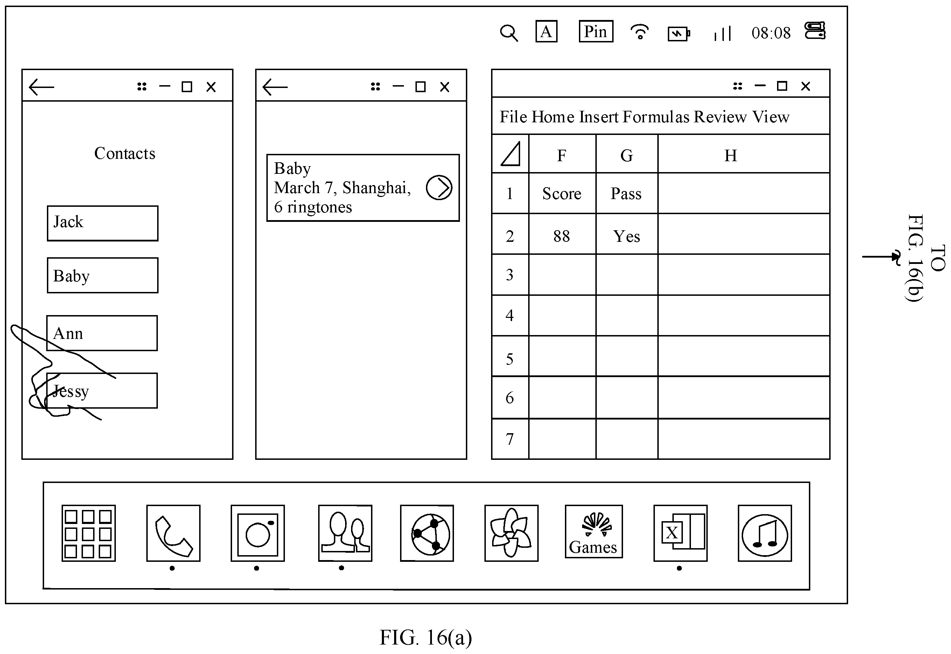

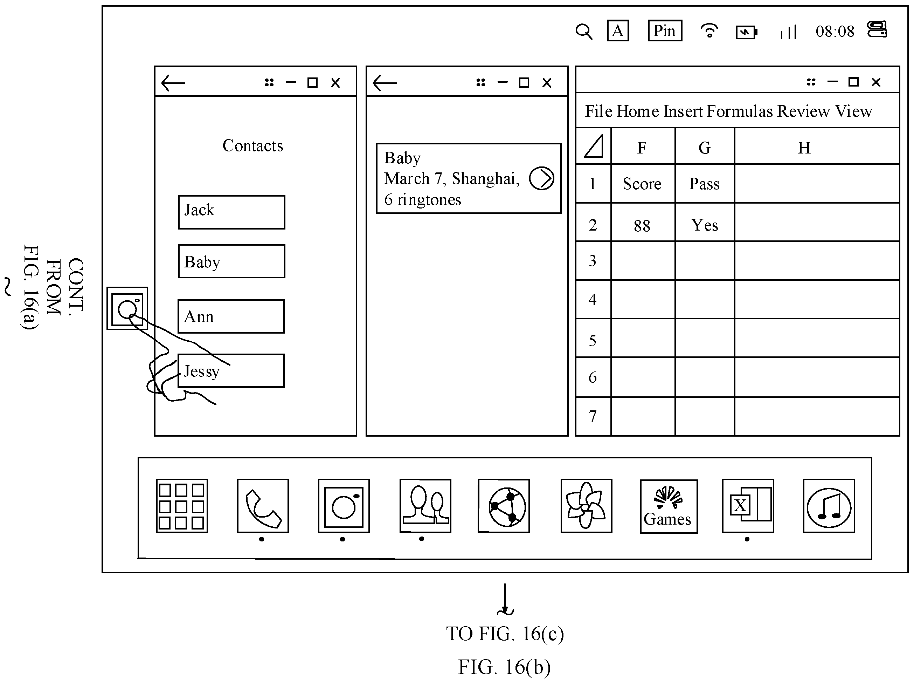

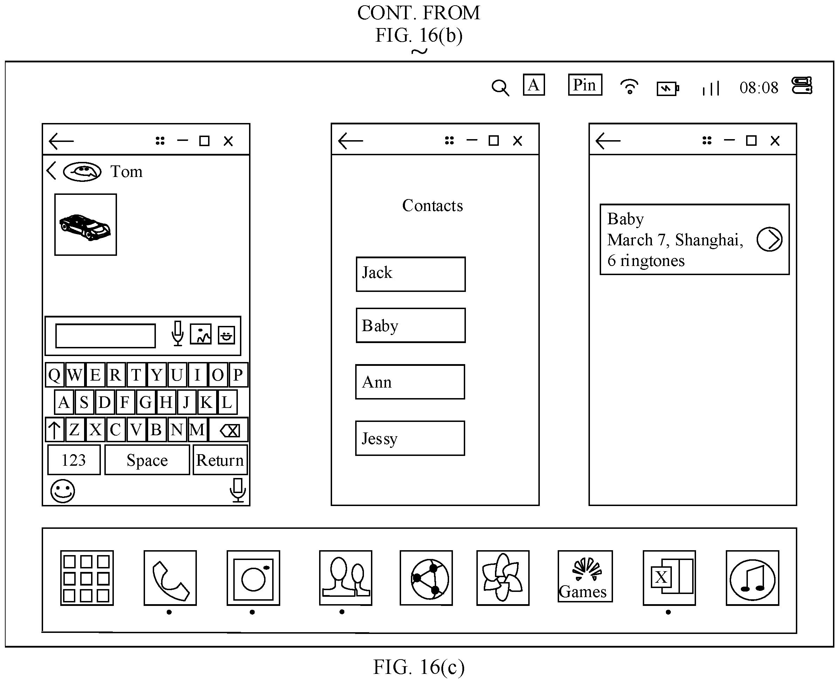

FIG. 16(a) to FIG. 16(c) are a schematic diagram of switching an application interface to a retrieval mode according to an embodiment of this application. FIG. 16(a) shows that the window of the contacts application, the window of the phone application, and the window of the excel application are evenly tiled in the available desktop space in a sequence from left to right, and a mouse of the user stays at an edge of the desktop, for example, stays at a left edge of the desktop. Before the window of the excel application is opened, the window of the chat application, the window of the contacts application, and the window of the phone application are evenly tiled in the available desktop space. In response to the operation, the electronic device may display, at a position of the user operation on the desktop, a floating ball of a previously hidden application, for example, the floating ball of the chat application, where the icon of the chat application is displayed in the floating ball, as shown in FIG. 16(b). Optionally, the electronic device may further display floating balls of all previously hidden applications at the position of the user operation on the desktop. The floating balls of all the previously hidden applications may be displayed in a horizontal or vertical row. FIG. 16(b) further shows a tap operation performed by the user on the floating ball of the chat application. In response to the tap operation, the electronic device may hide the window of the excel application that is on a rightmost side, adjust the margin, and directly insert the window of the chat application on a left side of the window of the contacts application. In this case, the window of the chat application, the window of the contacts application, and the window of the phone application are evenly tiled in the available desktop space, that is, the previously hidden window of the chat application is retrieved, as shown in FIG. 16(c). Optionally, in FIG. 16(b), the floating ball of the chat application may be hidden when the mouse of the user leaves the edge of the desktop. Optionally, the floating ball of the previously hidden application may alternatively be displayed at the position of the user operation on the desktop by using an operation of sliding from left to right performed by the user on the desktop. Optionally, when the mouse of the user stays at the right edge of the desktop, a floating ball of an application that is hidden on the rightmost side may be displayed at the position of the user operation on the desktop. Optionally, the user may alternatively retrieve a window of an application hidden on the right side by tapping a floating ball of the application hidden on the rightmost side by using the mouse.

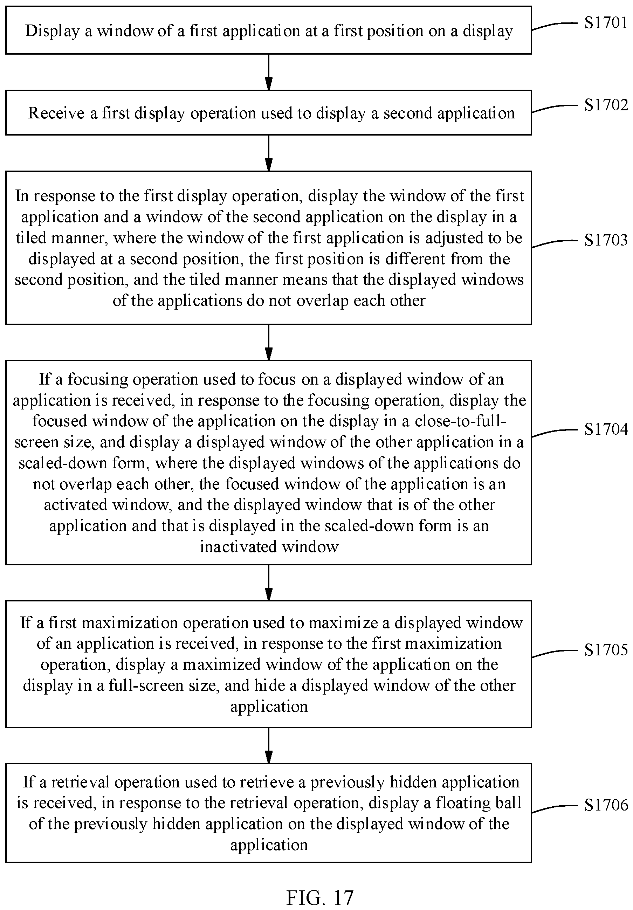

With reference to the accompanying drawings, a procedure of a display method provided in embodiments of this application is described, as shown in FIG. 17. Although it is only described, in the following descriptions, that windows of applications are sequentially displayed from left to right based on a sequence in which the applications are opened, and positions of the windows of the applications are moved leftward, it may be understood that this application is not limited to that the windows of the applications are sequentially displayed from left to right based on the sequence in which the applications are opened and the positions of the windows of the applications are moved leftward. The windows of the applications may alternatively be sequentially displayed from right to the left based on the sequence in which the applications are opened, and the positions of the windows of the applications may alternatively be moved rightward.

The method specifically includes the following steps.

S1701: Display a window of a first application at a first position on a display.

The window of the first application may be a window of an application that is being displayed on the display before a second application is displayed. In a possible implementation, displaying the window of the first application at the first position on the display may be displaying one first application. For example, as shown in FIG. 4(b), the window of the chat application is displayed. In another possible implementation, displaying the window of the first application at the first position on the display may be displaying windows of a plurality of first applications. For example, as shown in FIG. 6(a), the window of the chat application and the window of the contacts application are displayed; and as shown in FIG. 6(b), the window of the chat application, the window of the contacts application, and the window of the phone application are displayed. The displayed first application is not limited in this embodiment of this application. The first application may be the chat application, the contacts application, or the phone application, or may be another application. For example, the another application is a gallery application, a music application, a games application, or a word application.

S1702: Receive a first display operation used to display the second application.

In a possible implementation, the first display operation used to display the second application may be a tap operation performed on the icon of the contacts application shown in FIG. 4(b). In another possible implementation, the first display operation used to display the second application may be a tap operation performed on the icon of the phone application shown in FIG. 6(a). In another possible implementation, the first display operation used to display the second application may be a tap operation performed on the excel application shown in FIG. 6(b). An operated icon is not limited in this embodiment of this application. The operated icon may be the icon of the contacts application, the phone application, or the excel application, or may be an icon of another application. For example, the another application is the gallery application, the music application, the games application, or the word application. The first display operation is not limited in this embodiment of this application. The first display operation may be tapping, or may be one or more other operations, such as dragging and sliding.

S1703: In response to the first display operation, display the window of the first application and a window of the second application on the display in a tiled manner, where the window of the first application is adjusted to be displayed at a second position, the first position is different from the second position, and the tiled manner means that the displayed windows of the applications do not overlap each other.

The displaying the window of the first application and a window of the second application on the display in a tiled manner, where the window of the first application is adjusted to be displayed at a second position, and the first position is different from the second position includes: if remaining space on the display meets a display condition of the second application, adjusting a first margin parameter between the window of the first application and an edge of the display, and displaying the window of the first application and the window of the second application based on an adjusted first margin parameter, where the remaining space on the display is space in which no window is displayed on the display.

The space in which no window is displayed on the display is determined by using a size of the display and a size of the window of the first application. That the remaining space on the display meets the display condition of the second application is determined by using the remaining space and a size of the window of the second application. If the remaining space is greater than or equal to the size of the window of the second application, the remaining space on the display meets the display condition of the second application. In this embodiment, if the remaining space is greater than or equal to the size of the window of the second application and a minimum distance parameter between the window of the second application and the edge of the display, the remaining space on the display meets the display condition of the second application.

In a possible implementation, the adjusting a first margin parameter between the window of the first application and an edge of the display, and displaying the window of the first application and the window of the second application based on an adjusted first margin parameter may be as follows: In FIG. 4(c), a first margin parameter between the window of the first application, namely, the chat application, and the edge of the display is adjusted to $\frac{8Y+11Z}{3}$. In addition, the window of the first application, namely, the chat application, may be moved leftward based on the first margin parameter, and the window of the second application, namely, the contacts application, is inserted on the display.

In another possible implementation, the adjusting a first margin parameter between the window of the first application and an edge of the display, and displaying the window of the first application and the window of the second application based on an adjusted first margin parameter may be as follows: In FIG. 6(b), a first margin parameter between the window of the first application, namely, the chat application, and the edge of the display is adjusted from $\frac{8Y+11Z}{3}$ to $Y + 2Z$, and a first margin parameter between the window of the first application, namely, the contacts application, and the edge of the display is also adjusted. In addition, the windows of the first applications, namely, the chat application and the contacts application, may be moved leftward based on the first margin parameters, and the window of the second application, namely, the phone application, may be inserted on the display.

In another possible implementation, a distance parameter between the windows of the first applications is adjusted, and the windows of the first applications and the window of the second application are displayed based on the adjusted first margin parameter and an adjusted distance parameter. That a distance parameter between the windows of the first applications is adjusted may be as follows: In FIG. 6(b), a distance parameter between the window of the first application, namely, the chat application, and the window of the first application, namely, the contacts application, is adjusted to $Y + 2Z$. That the window of the first application and the window of the second application are displayed based on the adjusted first margin parameter and an adjusted distance parameter may be as follows: In FIG. 6(b), based on the adjusted first margin parameter $Y + 2Z$ and the adjusted distance parameter $Y + 2Z$, the window of the first application, namely, the chat application, and the window of the first application, namely, the contacts application, are moved leftward, and the window of the second application, namely, the phone application, is inserted on the display.

In a possible implementation, that the window of the first application and the window of the second application are evenly tiled on the display may as follows: In FIG. 4(c), a first margin parameter between the window of the contacts application and the edge of the display and a first margin parameter between the window of the chat application and the edge of the display are both $x = \dfrac{8Y + 11Z}{3}$ . In FIG. 6(b), a first margin parameter between the window of the phone application and the edge of the display and the first margin parameter between the window of the chat application and the edge of the display are both $x = Y + 2Z$, and a distance parameter between the window of the phone application and the window of the contacts application and a distance parameter between the window of the chat application and the window of the contacts application are both $Y + 2Z$.

In a possible implementation, that the window of the first application and the window of the second application are displayed in a specific arrangement sequence based on an opening sequence of the applications, where the arrangement sequence includes one of a left-to-right sequence and a right-to-left sequence is as follows: As shown in FIG. 4(c), the window of the chat application and the window of the contacts application are displayed on the display from left to right in the opening sequence.

In another possible implementation, that the window of the first application and the window of the second application are displayed in a specific arrangement sequence based on an opening sequence of the applications, where the arrangement sequence includes one of a left-to-right sequence and a right-to-left sequence may be as follows: As shown in FIG. 6(b), the window of the chat application, the window of the contacts application, and the window of the phone application are displayed on the display from left to right in the opening sequence.

A displayed window of an application is not limited in this embodiment of this application. The displayed window may be the window of the chat application, the contacts application, or the phone application, or may be a window of another application. For example, the another application is the gallery application, the music application, the games application, or the word application.

In this embodiment, the method further includes: if the remaining space on the display does not meet the display condition of the second application, hiding a window of a first application that is first displayed in the windows of the first applications, adjusting a second margin parameter between a window of another first application and the edge of the display, and displaying the window of the another first application and the window of the second application based on an adjusted second margin parameter, where the displayed windows of the applications do not overlap each other.

That the remaining space on the display does not meet the display condition of the second application is determined by using the remaining space and a size of the window of the second application. If the remaining space is less than the size of the window of the second application, the remaining space on the display does not meet the display condition of the second application. In this embodiment, if the remaining space is less than the size of the window of the second application and a minimum distance parameter between the window of the second application and the edge of the display, the remaining space on the display does not meet the display condition of the second application.

In a possible implementation, the hiding a window of a first application that is first displayed in the windows of the first applications may be as follows: As shown in FIG. 6(c), the window of the first application, namely, the chat application, that is displayed on a leftmost side is hidden. In a possible implementation, the adjusting a second margin parameter between a window of another first application and an edge of the display may be as follows: As shown in FIG. 6(c), a second margin parameter between the window of the contacts application and the edge of the display and a second margin parameter between the window of the phone application and the edge of the display are adjusted. The displaying the window of the another first application and the window of the second application based on an adjusted second margin parameter may be as follows: As shown in FIG. 6(c), the window of the contacts application and the window of the phone application are respectively moved leftward from the middle and the right side of the display to the left side and the middle of the display, and the window of the second application, namely, the excel application, is inserted on the display.

A displayed window of an application is not limited in this embodiment of this application. The displayed window may be the window of the chat application, the contacts application, the phone application, or the excel application, or may be a window of another application. For example, the another application is the gallery application, the music application, the games application, or the word application.

In this embodiment, if the remaining space on the display does not meet the display condition of the second application, the method further includes: switching a display manner of the displayed windows of the applications from a first display manner to a second display manner, where the first display manner and the second display manner each are any one of a plurality of display manners, and the first display manner is different from the second display manner.

The window of the application includes a horizontal window and a vertical window, and the displayed windows of the applications on the display have a plurality of display manners based on different arrangements of the horizontal window and the vertical window on the display. As shown in FIG. 7(a) to FIG. 7(j), this application shows ten display manners, an arrangement in each display manner is from left to right, and the ten display manners are respectively displaying one vertical window shown in FIG. 7(a), displaying one horizontal window shown in FIG. 7(b), displaying two vertical windows shown in FIG. 7(c), displaying one vertical window and one horizontal window shown in FIG. 7(d), displaying one horizontal window and one vertical window shown in FIG. 7(e), displaying one horizontal window and one horizontal window shown in FIG. 7(f), displaying three vertical windows shown in FIG. 7(g), displaying two vertical windows and one horizontal window shown in FIG. 7(h), displaying one vertical window, one horizontal window, and one vertical window shown in FIG. 7(i), and displaying one horizontal window, one vertical window, and one vertical window shown in FIG. 7(j).

In a possible implementation, if the remaining space on the display does not meet the display condition of the second application, when the second application is displayed, the display manner of the displayed windows of the applications may be further switched from the first display manner to the second display manner. As shown in FIG. 8(a), the display manner is switched from displaying one vertical window and one horizontal window to displaying one horizontal window and one horizontal window. In a possible implementation, if the remaining space on the display does not meet the display condition of the second application, when the second application is displayed, the display manner of the displayed windows of the applications may be further switched from the first display manner to the second display manner. As shown in FIG. 8(b), the display manner is switched from displaying one horizontal window and one vertical window to displaying one vertical window and one horizontal window.

In a possible implementation, if the remaining space on the display does not meet the display condition of the second application, when the second application is displayed, the display manner of the displayed windows of the applications may be further switched from the first display manner to the second display manner. As shown in FIG. 8(c), the display manner is switched from displaying one horizontal window and one horizontal window to displaying one horizontal window and one vertical window.

A quantity of display manners is not limited in this embodiment of this application. The quantity of display manners may vary with a quantity of windows that can be displayed on the display. For example, when the quantity of windows that can be displayed on the display is four, the quantity of display manners is greater than 10. An example of switching the display manner from the first display manner to the second display manner is not limited to the foregoing examples, and there may be another example. For example, a manner of displaying two vertical windows and one horizontal window is switched to a manner of displaying one vertical window, one horizontal window, and one vertical window.

S1704: If a focusing operation used to focus on a displayed window of an application is received, in response to the focusing operation, display the focused window of the application on the display in a close-to-full-screen size, and display a displayed window of the other application in a scaled-down form, where the displayed windows of the applications do not overlap each other, the focused window of the application is an activated window, and the displayed window that is of the other application and that is displayed in the scaled-down form is an inactivated window.

In a possible implementation, the focusing operation used to focus on the displayed window of the application may be a double-tap operation performed on the title bar of the window of the excel application shown in FIG. 9(a). The focusing operation is not limited in this embodiment of this application. The focusing operation may be double-tapping, or may be one or more other operations, such as tapping, dragging, and sliding. An operated application is not limited in this embodiment of this application. The operated application may be the excel application, or may be another application. For example, the another application is the contacts application, the phone application, the gallery application, the music application, the games application, or the word application.

"The close-to-full-screen size" means at least 80% or more of the size of the display. A ratio of the close-to-full-screen size to the size of the display is not limited in this embodiment of this application, and the ratio may alternatively be less than 80%, for example, 75%.

In a possible implementation, the displaying the focused window of the application in the close-to-full-screen size on the display, and displaying the displayed window of the other application in the scaled-down form may be as follows: As shown in FIG. 9(b), the window of the application, namely, the excel application, is displayed in the main area of the display, and the window of the contacts application and the window of the phone application are displayed in the sidebar area of the display. The size of the main area is at least 80% or more of the size of the display. Optionally, the window of the contacts application and the window of the phone application are displayed in parallel in the sidebar area in a top-bottom manner, that is, are displayed in the sidebar area in a vertical display manner. The user may edit the excel application in the main area, but cannot edit the contacts application and the phone application in the sidebar area.

In a possible implementation, the method further includes: receiving an activation operation used to activate the window that is of the application and that is displayed in the scaled-down form; and in response to the activation operation, enabling the focused window of the application and the activated window of the application to exchange relative positions on the display.

In a possible implementation, the activation operation used to activate the window that is of the application and that is displayed in the scaled-down form may be a tap operation performed on the window of the contacts application in FIG. 10(a). In another possible implementation, the activation operation used to activate the window that is of the application and that is displayed in the scaled-down form may be an operation of dragging the window of the contacts application from the sidebar area to the main area in FIG. 11(a). It may be understood that the activation operation is not limited in this application, and the activation operation may alternatively be another operation, for example, dragging the window of the contacts application from the sidebar area to the main area, dragging the window of the excel application from the main area to the window of the contacts application in the sidebar area, or dragging the window of the excel application from the main area to the window of the contacts application in the sidebar area. An operated application is not limited in this embodiment of this application. The operated application may be the excel application or the contacts application, or may be another application. For example, the another application is the phone application, the gallery application, the music application, the games application, or the word application.

In a possible implementation, that the relative positions of the focused window of the application and the activated window of the application are exchanged on the display may be that the activated window of the application is displayed in a close-to-full-screen size, and the displayed window of the other application is displayed in a scaled-down form. In a possible implementation, that the relative positions of the focused window of the application and the activated window of the application are exchanged on the display may be as follows: For example, in FIG. 10(b), the window of the contacts application is displayed in the main area, and the window of the excel application and the window of the phone application are displayed in the sidebar area. In another possible implementation, that the relative positions of the focused window of the application and the activated window of the application are exchanged on the display may be as follows: For example, in FIG. 11(b), the window of the contacts application is displayed in the main area, and the window of the excel application and the window of the phone application are displayed in the sidebar area. A displayed application is not limited in this embodiment of this application. The displayed application may be the excel application, the contacts application, or the phone application, or may be another application. For example, the another application is the gallery application, the music application, the games application, or the word application.

S1705: If a first maximization operation used to maximize a displayed window of an application is received, in response to the first maximization operation, display a maximized window of the application on the display in a full-screen size, and hide a displayed window of the other application.

In a possible implementation, the first maximization operation used to maximize the displayed window of the application may be a tap operation performed on the "Maximize/Restore" button of the window of the excel application shown in FIG. 12(a). The first maximization operation is not limited in this embodiment of this application. The first maximization operation may be tapping, or may be one or more other operations, such as double-tapping, dragging, and sliding. An operated application is not limited in this embodiment of this application. The operated application may be the excel application, or may be another application. For example, the another application is the contacts application, the phone application, the gallery application, the music application, the games application, or the word application.

In a possible implementation, displaying the maximized window of the application on the display in the full-screen size, and hiding the displayed window of the other application may be as follows: As shown in FIG. 12(b), the window of the excel application is maximized to fill the entire desktop, and no other content is displayed on the entire desktop.

In a possible implementation, the method further includes: receiving a second display operation used to display a current application; and in response to the second display operation, displaying the current application on the maximized window of the application in a form of a floating window. In a possible implementation, the second display operation used to display the current application may be an operation performed on an icon of an application in the Dock bar shown in FIG. 13(b).

In a possible implementation, when the current application is displayed on the maximized window of the application in the form of a floating window, the method further includes: receiving an operation performed on the displayed maximized window of the application; and in response to the operation, hiding the displayed floating window of the current application. The current application is an application that needs to be displayed after the second application is displayed. The current application and the second application may be a same application or different applications. In a possible implementation, the operation may be an editing operation in any window or any operation that is not performed on the floating window. The hiding the displayed floating window of the current application may be not displaying the displayed floating window of the current application on a current interface.

In a possible implementation, when the current application is displayed on the maximized window of the application in the form of a floating window, the method further includes: receiving a second maximization operation used to maximize the displayed floating window of the current application; and in response to the second maximization operation, displaying the maximized floating window of the current application on the display in a full-screen size, and hiding the displayed window of the other application. The second maximization operation used to maximize the displayed floating window of the current application may be an operation such as tapping the "Maximize/Restore" button in the title bar of the floating window of the contacts application. This is not limited in this application.

In a possible implementation, the hiding the displayed window of the other application includes: displaying a floating ball of the other displayed application on the maximized window of the application. The hiding the displayed window of the other application may be as follows: As shown in FIG. 15(a), the window of the chat application is displayed on the window of the excel application in a form of a floating ball. A displayed application is not limited in this embodiment of this application. The displayed application may be the chat application or the excel application, or may be another application. For example, the another application is the contacts application, the phone application, the gallery application, the music application, the games application, or the word application.

S1706: If a retrieval operation used to retrieve a previously hidden application is received, in response to the retrieval operation, display a floating ball of the previously hidden application on a displayed window of an application.

In a possible implementation, the retrieval operation used to retrieve the previously hidden application may be staying at the edge of the desktop in FIG. 16(a), for example, staying at the left edge of the desktop. The retrieval operation is not limited in this embodiment of this application. The retrieval operation may be staying, or may be one or more other operations, such as tapping, double-tapping, dragging, and sliding. A position is not limited in this embodiment of this application. The position may be the edge of the desktop, the middle of the desktop, a side of the screen, or the like.

In a possible implementation, displaying the floating ball of the previously hidden application on the displayed window of the application may be as follows: As shown in FIG. 16(b), the floating ball of the chat application is displayed, and the icon of the chat application is displayed in the floating ball. Optionally, the electronic device may further display floating balls of all previously hidden applications. The floating balls of all the previously hidden applications may be displayed in a horizontal or vertical row. A displayed floating ball is not limited in this embodiment of this application. The displayed floating ball may be the floating ball of the chat application, or may be a floating ball of another application. For example, the floating ball of the another application is the floating ball of the contacts application, the floating ball of the phone application, a floating ball of the gallery application, a floating ball of the music application, a floating ball of the games application, or a floating ball of the word application.

In a possible implementation, the method further includes: receiving a selection operation used to select a floating ball of an application; and in response to the selection operation, hiding a last displayed window of an application in the displayed windows of the applications, adjusting a third margin parameter between the displayed window of the other application and the edge of the display, and displaying, based on an adjusted third margin parameter, the window of the other application and a window of the application corresponding to the selected floating ball, where the displayed windows of the application do not overlap each other.

In a possible implementation, the selection operation used to select a floating ball of an application may be a tap operation performed on the floating ball of the chat application in FIG. 16(b). The selection operation is not limited in this embodiment of this application. The selection operation may be tapping, or may be one or more other operations, such as double-tapping, dragging, and sliding.

In a possible implementation, the hiding a last displayed window of an application in the displayed windows of the applications, adjusting a third margin parameter between the displayed window of the other application and the edge of the display, and displaying, based on an adjusted third margin parameter, the window of the other application and a window of the application corresponding to the selected floating ball may be as follows: As shown in FIG. 16(c), the window of the excel application on the rightmost side is hidden, the margin is adjusted, the window of the chat application is inserted on the left side of the window of the contacts application. An application of the floating ball and a displayed application are not limited in this embodiment of this application. The application may be the excel application, the contacts application, or the chat application, or may be another application. For example, the another application is the phone application, the gallery application, the music application, the games application, or the word application.

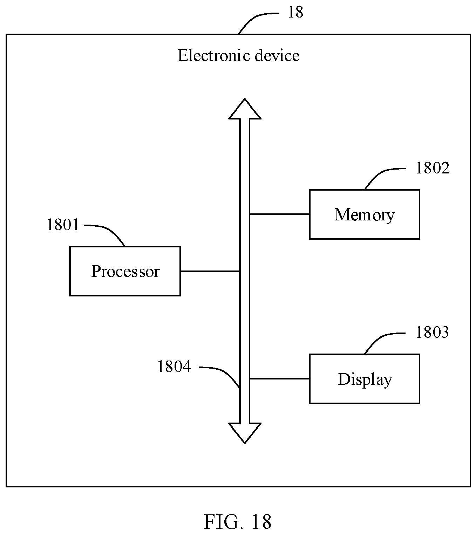

FIG. 18 is a schematic block diagram of an electronic device according to an embodiment of this application. The electronic device 18 may include a processor 1801, a memory 1802, and a display 1803. The memory 1802 is configured to store computer-executable instructions. When the electronic device 18 runs, the processor 1801 executes the computer-executable instructions stored in the memory 1802, so that the electronic device 18 performs the method shown in FIG. 17. The processor 1801 is configured to display a window of a first application at a first position on the display. The processor 1801 is configured to receive a first display operation used to display a second application. The processor 1801 is configured to: in response to the first display operation, display the window of the first application and a window of the second application on the display in a tiled manner, where the window of the first application is adjusted to be displayed at a second position, the first position is different from the second position, and the tiled manner means that the displayed windows of the applications do not overlap each other.

In some embodiments, the electronic device 18 further includes a communication bus 1804. The processor 1801 may be connected to the memory 1802 through the communication bus 1804, to obtain the computer-executable instructions stored in the memory 1802, and execute the computer-executable instructions.

For specific implementations of the parts/components of the electronic device 18 in this embodiment of this application, refer to the implementations of the method embodiments shown in FIG. 17. Details are not described herein again.

Therefore, the windows may be managed based on the window of the first application, the window of the second application, and remaining space on the display, to move the position of the displayed window of the first application on the display, so that the displayed windows of the applications do not overlap each other, thereby avoiding desktop disorder and a window cascade. In addition, the windows are appropriately organized and displayed on the display, so that the windows are displayed more flexibly, a desktop is more aesthetic and not messy, and user comfort is improved.

The method steps in embodiments of this application may be implemented in a hardware manner, or may be implemented in a manner of executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted through the computer-readable storage medium. The computer instructions may be transmitted from a website, computer, server, or data center to another website, computer, server, or data center in a wired (for example, a coaxial cable, an optical fiber, or a digital subscriber line DSL) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Based on the descriptions of the implementations, a person skilled in the art may clearly understand that for the purpose of convenient and brief descriptions, division into the foregoing functional modules is merely used as an example for descriptions. During actual application, the functions may be allocated to different functional modules for implementation based on a requirement. In other words, an inner structure of an apparatus is divided into different functional modules to implement all or some of the functions described above.

In the several embodiments provided in this application, it should be understood that the disclosed apparatuses and methods may be implemented in another manner. For example, the described apparatus embodiments are merely examples. For example, division into the modules or units is merely logical function division, and may be other division in an actual implementation. For example, a plurality of units or components may be combined or may be integrated into another apparatus, or some features may be ignored or not performed.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

Finally, it should be noted that the foregoing embodiments are merely intended for describing the technical solutions of this application, but not for limiting the technical solutions of this application. Although this application is described in detail with reference to the example embodiments, a person of ordinary skill in the art should understand that modifications or equivalent replacements may be made to the technical solutions of this application, without departing from the spirit and scope of the technical solutions of this application.

**Claims**

1. A display method, wherein the method comprises:

   displaying a window of a first application at a first position on a display;receiving a first display operation used to display a second application; and
   in response to the first display operation, displaying the window of the first application and a window of the second application on the display in a tiled manner, wherein the window of the first application is adjusted to be displayed at a second position, the first position is different from the second position, and the tiled manner means that the displayed windows of the applications do not overlap each other.

2. The display method according to claim 1, wherein the method further comprises:
   if a focusing operation used to focus on a displayed window of an application is received, in response to the focusing operation, displaying the focused window of the application on the display in a close-to-full-screen size, and displaying a displayed window of the other application in a scaled-down form, wherein the displayed windows of the applications do not overlap each other, the focused window of the application is an activated window, and the displayed window that is of the other application and that is displayed in the scaled-down form is an inactivated window.

3. The display method according to claim 2, wherein the method further comprises:

   receiving an activation operation used to activate the window that is of the application and that is displayed in the scaled-down form; and
   in response to the activation operation, enabling the focused window of the application and the activated window of the application to exchange relative positions on the display.

4. The display method according to claim 1, wherein the method further comprises:
   if a first maximization operation used to maximize a displayed window of an application is received, in response to the first maximization operation, displaying a maximized window of the application on the display in a full-screen size, and hiding a displayed window of the other application.

5. The display method according to claim 4, wherein the method further comprises:

   receiving a second display operation used to display a current application; and
   in response to the second display operation, displaying the current application on the maximized window of the application in a form of a floating window.

6. The display method according to claim 5, wherein the method further comprises:

   receiving an operation performed on the displayed maximized window of the application; and
   in response to the operation, hiding the displayed floating window of the current application.

7. The display method according to claim 5, wherein the method further comprises:

   receiving a second maximization operation used to maximize the displayed floating window of the current application; and
   in response to the second maximization operation, displaying a maximized floating window of the current application on the display in the full-screen size, and hiding the displayed window of the other application.

8. The display method according to claim 4, wherein the hiding a displayed window of the other application comprises:
   displaying a floating ball of the other displayed application on the maximized window of the application.

9. The display method according to claim 1, wherein the method further comprises:
   if a retrieval operation used to retrieve a previously hidden application is received, in response to the retrieval operation, displaying a floating ball of the previously hidden application on a displayed window of an application.

10. The display method according to claim 9, wherein the method further comprises:

    receiving a selection operation used to select a floating ball of an application; and

in response to the selection operation, hiding a last displayed window of an application in the displayed windows of the applications, and displaying, on the display in a tiled manner, a displayed window of the other application and a window of the application corresponding to the selected floating ball, wherein a position of the window of the other application is adjusted for display.

11. The display method according to claim 1, wherein the displaying the window of the first application and a window of the second application on the display in a tiled manner, wherein the window of the first application is adjusted to be displayed at a second position, and the first position is different from the second position comprises:
if remaining space on the display meets a display condition of the second application, adjusting a first margin parameter between the window of the first application and an edge of the display, and displaying the window of the first application and the window of the second application based on an adjusted first margin parameter, wherein the remaining space on the display is space in which no window is displayed on the display.

12. The display method according to claim 11, wherein the method further comprises:

adjusting a distance parameter between the windows of the first applications; and
the displaying the window of the first application and the window of the second application based on an adjusted first margin parameter comprises:
displaying the windows of the first applications and the window of the second application based on the adjusted first margin parameter and an adjusted distance parameter.

13. The display method according to claim 11, wherein the displaying the window of the first application and the window of the second application comprises:
displaying the window of the first application and the window of the second application in a specific arrangement sequence based on an opening sequence of the applications, wherein the arrangement sequence comprises one of a left-to-right sequence and a right-to-left sequence.

14. The display method according to claim 11, 12, or 13, wherein the method further comprises:
if the remaining space on the display does not meet the display condition of the second application, hiding a window of a first application that is first displayed in the windows of the first applications, adjusting a second margin parameter between a window of another first application and the edge of the display, and displaying the window of the another first application and the window of the second application based on an adjusted second margin parameter, wherein the displayed windows of the applications do not overlap each other.

15. The display method according to claim 14, wherein the window of the application comprises a horizontal window and a vertical window, the displayed windows of the applications on the display have a plurality of display manners based on different arrangements of the horizontal window and the vertical window on the display, and the method further comprises:
switching a display manner of the displayed windows of the applications from a first display manner to a second display manner, wherein the first display manner and the second display manner each are any one of the plurality of display manners, and the first display manner is different from the second display manner.

16. An electronic device, comprising a processor, a memory, and a display, wherein the memory is configured to store computer-executable instructions, and when the electronic device runs, the processor executes the computer-executable instructions, so that the electronic device performs the following operations:

displaying a window of a first application at a first position on the display;
receiving a first display operation used to display a second application; and
in response to the first display operation, displaying the window of the first application and a window of the second application on the display in a tiled manner, wherein the window of the first application is adjusted to be displayed at a second position, the first position is different from the second position, and the tiled manner means that the displayed windows of the applications do not overlap each other.

17. The electronic device according to claim 16, wherein the processor executes the computer instructions, so that the electronic device further performs the following operations:
if a focusing operation used to focus on a displayed window of an application is received, in response to the focusing operation, displaying the focused window of the application on the display in a close-to-full-screen size, and displaying a displayed window of the other application in a scaled-down form, wherein the displayed windows of the applications do not overlap each other, the focused window of the application is an activated window, and the displayed window that is of the other application and that is displayed in the scaled-down form is an inactivated window.

18. The electronic device according to claim 17, wherein the processor executes the computer instructions, so that the electronic device further performs the following operations:

   receiving an activation operation used to activate the window that is of the application and that is displayed in the scaled-down form; and
   in response to the activation operation, enabling the focused window of the application and the activated window of the application to exchange relative positions on the display.

19. The electronic device according to claim 16, wherein the processor executes the computer instructions, so that the electronic device further performs the following operations:
   if a first maximization operation used to maximize a displayed window of an application is received, in response to the first maximization operation, displaying a maximized window of the application on the display in a full-screen size, and hiding a displayed window of the other application.

20. The electronic device according to claim 19, wherein the processor executes the computer instructions, so that the electronic device further performs the following operations:

   receiving a second display operation used to display a current application; and
   in response to the second display operation, displaying the current application on the maximized window of the application in a form of a floating window.

21. The electronic device according to claim 20, wherein the processor executes the computer instructions, so that the electronic device further performs the following operations:

   receiving an operation performed on the displayed maximized window of the application; and
   in response to the operation, hiding the displayed floating window of the current application.

22. The electronic device according to claim 20, wherein the processor executes the computer instructions, so that the electronic device further performs the following operations:

   receiving a second maximization operation used to maximize the displayed floating window of the current application; and
   in response to the second maximization operation, displaying a maximized floating window of the current application on the display in the full-screen size, and hiding the displayed window of the other application.

23. The electronic device according to claim 19, wherein the processor executes the computer instructions, so that the electronic device further performs the following operation:
   displaying a floating ball of the other displayed application on the maximized window of the application.

24. The electronic device according to claim 16, wherein the processor executes the computer instructions, so that the electronic device further performs the following operation:
   if a retrieval operation used to retrieve a previously hidden application is received, in response to the retrieval operation, displaying a floating ball of the previously hidden application on a displayed window of an application.

25. The electronic device according to claim 24, wherein the processor executes the computer instructions, so that the electronic device further performs the following operations:

   receiving a selection operation used to select a floating ball of an application; and
   in response to the selection operation, hiding a last displayed window of an application in the displayed windows of the applications, and displaying, on the display in a tiled manner, a displayed window of the other application and a window of the application corresponding to the selected floating ball, wherein a position of the window of the other application is adjusted for display.

26. The electronic device according to claim 16, wherein the processor executes the computer instructions, so that the electronic device further performs the following operations:

if remaining space on the display meets a display condition of the second application, adjusting a first margin parameter between the window of the first application and an edge of the display, and displaying the window of the first application and the window of the second application based on an adjusted first margin parameter, wherein the remaining space on the display is space in which no window is displayed on the display.

27. The electronic device according to claim 26, wherein the processor executes the computer instructions, so that the electronic device further performs the following operations:

adjusting a distance parameter between the windows of the first applications; and
displaying the windows of the first applications and the window of the second application based on the adjusted first margin parameter and an adjusted distance parameter.

28. The electronic device according to claim 26, wherein the processor executes the computer instructions, so that the electronic device further performs the following operation:
displaying the window of the first application and the window of the second application in a specific arrangement sequence based on an opening sequence of the applications, wherein the arrangement sequence comprises one of a left-to-right sequence and a right-to-left sequence.

29. The electronic device according to claim 26, 27, or 28, wherein the processor executes the computer instructions, so that the electronic device further performs the following operations:
if the remaining space on the display does not meet the display condition of the second application, hiding a window of a first application that is first displayed in the windows of the first applications, adjusting a second margin parameter between a window of another first application and the edge of the display, and displaying the window of the another first application and the window of the second application based on an adjusted second margin parameter, wherein the displayed windows of the applications do not overlap each other.

30. The electronic device according to claim 29, wherein the window of the application comprises a horizontal window and a vertical window, the displayed windows of the applications on the display have a plurality of display manners based on different arrangements of the horizontal window and the vertical window on the display, and the processor executes the computer instructions, so that the electronic device further performs the following operation:
switching a display manner of the displayed windows of the applications from a first display manner to a second display manner, wherein the first display manner and the second display manner each are any one of the plurality of display manners, and the first display manner is different from the second display manner.

31. A computer storage medium, wherein the computer storage medium comprises computer instructions, and when the computer instructions are run on an electronic device, the electronic device is enabled to perform the method according to any one of claims 1 to 15.

32. A computer program product, wherein when program code comprised in the computer program product is executed by a processor in an electronic device, the method according to any one of claims 1 to 15 is implemented.

FIG. 1

| Application layer | Gallery | Calendar | Maps | WLAN | Music | Messaging |
|---|---|---|---|---|---|---|
| | Phone | Navigation | Bluetooth | Videos | ... | |

| Application framework layer | Window manager | Activity manager | Phone manager | Resource manager |
|---|---|---|---|---|
| | Notification manager | View system | Content provider | ... |

| Native C/C++ library | Surface manager | Media framework | libc | Android runtime |
|---|---|---|---|---|
| | OpenGL ES | SQLite | Webkit | ... | Android runtime |
| | | | | | Core library |

| Hardware abstract layer | Display module | Camera module |
|---|---|---|
| | Audio module | Sensor module | ... |

| Kernel layer | Display driver | Camera driver |
|---|---|---|
| | Audio driver | Sensor driver | ... |

FIG. 2

FIG. 3

EP 4 321 978 A1

FIG. 4(a)

EP 4 321 978 A1

EP 4 321 978 A1

403 400

401

402

Tom

Q W E R T Y U I O P
A S D F G H J K L
↑ Z X C V B N M ⊗
123 | Space | Return

Games

FIG. 4(b)

EP 4 321 978 A1

08:08

Pin

Contacts

Jack

Baby

Ann

Jessy

Tom

Q W E R T Y U I O P
A S D F G H J K L
↑ Z X C V B N M ⌫
123 Space Return
☺

Games

FIG. 4(c)

44

EP 4 321 978 A1

CONT.
FROM
FIG. 4(c)

FIG. 4(d)

EP 4 321 978 A1

Vertical window

Horizontal window

—Y—Z

08:08

Games

FIG. 5A

FIG. 5B

Q  [A]  [Pin]  📶  08:08

$M_{min}$

$H_1$  Vertical window

Horizontal window  $H_2$

Vertical window  $H_1$

$H_{scr}$

$W_1$  $W_2$  $W_1$

$W_{scr}$

Games

100%  11:20
Shenzhen ⌄
Express Taxi Hitch Premier Chauffeur drive

4.1 km away from you.
1 minute  End
Start

$H_{phone}$

Yue B FXXXXX
Audi·White

$W_{phone}$

FIG. 5C

FIG. 5D

Q | A | Pin | 📶 | 🔋 | ⌇‖ | 08:08

$M_{min}$

Horizontal window     $H_2$

Horizontal window     $H_2$

$W_2$

$W_2$

Games

X

$H_{scr}$

$W_{scr}$

FIG. 5E

EP 4 321 978 A1

FIG. 6(a)

EP 4 321 978 A1

EP 4 321 978 A1

CONT.
FROM
FIG. 6(a)

Q A Pin 08:08

Tom

Contacts

Jack

Baby

Ann

Jessy

Baby
March 7, Shanghai,
6 ringtones

Q W E R T Y U I O P
A S D F G H J K L
Z X C V B N M
123 Space Return

Games

TO FIG. 6(c)

FIG. 6(b)

EP 4 321 978 A1

| ◻ | F | G | H |
|---|---|---|---|
| 1 | Score | Pass | |
| 2 | 88 | Yes | |
| 3 | | | |
| 4 | | | |
| 5 | | | |
| 6 | | | |
| 7 | | | |

**Contacts**

Jack

Baby

Ann

Jessy

Baby
March 7, Shanghai,
6 ringtones

File Home Insert Formulas Review View

Games

FIG. 6(c)

FIG. 7(a)

FIG. 7(b)

FIG. 7(c)

FIG. 7(d)

FIG. 7(e)

FIG. 7(f)

FIG. 7(g)

FIG. 7(h)

FIG. 7(i)

FIG. 7(j)

FIG. 8(a)

FIG. 8(b)

FIG. 8(c)

FIG. 8(d)

FIG. 9(a)

TO FIG. 9(b)

901

EP 4 321 978 A1

🔍 | A | | Pin | 📶 📲 📶 08:08 🖥

:: — □ ✕

| | F | G | H |
|---|---|---|---|
| 1 | Score | Pass | |
| 2 | 88 | Yes | |
| 3 | | | |
| 4 | | | |
| 5 | | | |
| 6 | | | |
| 7 | | | |

File   Home   Insert   Formulas   Review   View

← | | # — □ ✕

Contacts

| Jack |
| Baby |
| Ann |
| Jessy |

902

← | | # — □ ✕

Baby
March 7,
Shanghai,
6 ringtones ◉

Exit the
follow mode

FIG. 9(b)

| | Q | A | Pin | 🛜 | 🔋 | ıll | 08:08 | 🗔 |

| | | | | :: — □ × |
|---|---|---|---|---|
| File | Home | Insert | Formulas | Review | View |

| ◺ | F | G | H |
|---|---|---|---|
| 1 | Score | Pass | |
| 2 | 88 | Yes | |
| 3 | | | |
| 4 | | | |
| 5 | | | |
| 6 | | | |
| 7 | | | |

← :: — □ ×

Contacts

Jack

Baby

Ann

Jessy

← :: — □ ×

Baby
March 7,
Shanghai,
6 ringtones

Exit the
follow mode

FIG. 10(a)

TO FIG. 10(b)

EP 4 321 978 A1

Q  [A]  [Pin]  🛜  🔋  ıl|  08:08  📇

←                                    ⠿ − ☐ ✕

| File | Home | Insert | Formulas | Review | View |
|---|---|---|---|---|---|
| | F | G | H | | |
| 1 | Score | Pass | | | |
| 2 | 88 | Yes | | | |
| 3 | | | | | |
| 4 | | | | | |
| 5 | | | | | |
| 6 | | | | | |
| 7 | | | | | |

Contacts

Jack

Baby

Ann

Jessy

←                        ⠿ − ☐ ✕

Baby
March 7,
Shanghai,
6 ringtones                    ◑

Exit the
follow mode

FIG. 10(b)

FIG. 11(a)

TO FIG. 11(b)

Q  [A]  [Pin]  🛜  🔋  ılı  08:08  🗒

← :: — □ ×

File Home Insert Formulas Review View

| F | G | H |
|---|---|---|
| Pass | Score | |
| 88 | Yes | |
| | | |
| | | |
| | | |
| | | |

Contacts

Jack

Baby

Ann

Jessy

← :: — □ ×

Baby
March 7,
Shanghai,
6 ringtones  ◉

Exit the
follow mode

Games  [X]  ♫

EP 4 321 978 A1

FIG. 11(b)

EP 4 321 978 A1

Q  [A]  [Pin]  📶  🔋  ,ıll  08:08  📚

← :: — □ ✕

< 😊 Tom

🚗

▯ 🎙 🖼 ☺

| Q | W | E | R | T | Y | U | I | O | P |

| A | S | D | F | G | H | J | K | L |

↑ | Z | X | C | V | B | N | M | ⌫

| 123 | Space | Return |

☺  🎙

:: — □ ✕

File Home Insert Formulas Review View

| ◸ | F | G | H |
|---|---|---|---|
| 1 | Score | Pass | |
| 2 | 88 | Yes | |
| 3 | | | |
| 4 | | | |
| 5 | | | |
| 6 | | | |
| 7 | | | |

⊞  📞  📷  👥  🔵  🌸  Games  X⊞  🎵

FIG. 12(a)

EP 4 321 978 A1

| File | Home | Insert | Formulas | Review | View |
|------|------|--------|----------|--------|------|
| ◹ | F | G | H | | |
| 1 | Score | Pass | | | |
| 2 | 88 | Yes | | | |
| 3 | | | | | |
| 4 | | | | | |
| 5 | | | | | |
| 6 | | | | | |
| 7 | | | | | |

FIG. 12(b)

EP 4 321 978 A1

| File | Home | Insert | Formulas | Review | View |

| ◿ | F | G | H |
|---|---|---|---|
| 1 | Score | Pass | |
| 2 | 88 | Yes | |
| 3 | | | |
| 4 | | | |
| 5 | | | |
| 6 | | | |
| 7 | | | |

TO FIG. 13(b)

FIG. 13(a)

CONT.
FROM
FIG. 13(a)

| File | Home | Insert | Formulas | Review | View |
|---|---|---|---|---|---|

| ◺ | F | G | H |
|---|---|---|---|
| 1 | Score | Pass | |
| 2 | 88 | Yes | |
| 3 | | | |
| 4 | | | |
| 5 | | | |
| 6 | | | |
| 7 | | | |

FIG. 13(b)

EP 4 321 978 A1

| File | Home | Insert | Formulas | Review | View |

| ◸ | F | G | H |
|---|---|---|---|
| 1 | Score | Pass | |
| 2 | 88 | Yes | |
| 3 | | | |
| 4 | | | |
| 5 | | | |
| 6 | | | |
| 7 | | | |

FIG. 14(a)

TO FIG. 14(b)

Q A Pin 08:08

| ◸ | F | G | H |
|---|---|---|---|
| 1 | Score | Pass | |
| 2 | 88 | Yes | |
| 3 | | | |
| 4 | | | |
| 5 | | | |
| 6 | | | |
| 7 | | | |

FIG. 14(b)

EP 4 321 978 A1

EP 4 321 978 A1

| | F | G | H |
|---|---|---|---|
| 1 | Score | Pass | |
| 2 | 88 | Yes | |
| 3 | | | |
| 4 | | | |
| 5 | | | |
| 6 | | | |
| 7 | | | |

File　　　　Home　　　　Insert　　　　Formulas　　　　Review　　　　View

TO FIG. 15(b)

FIG. 15(a)

| File | Home | Insert | Formulas | Review | View |
|------|------|--------|----------|--------|------|

| | F | G | H |
|---|---|---|---|
| 1 | Score | Pass | |
| 2 | 88 | Yes | |
| 3 | | | |
| 4 | | | |
| 5 | | | |
| 6 | | | |
| 7 | | | |

Tom

Q W E R T Y U I O P
A S D F G H J K L
↑ Z X C V B N M ⌫
123    Space    Return

FIG. 15(b)

EP 4 321 978 A1

EP 4 321 978 A1

Q [A] [Pin] 08:08

Contacts

Jack

Baby

Ann

Jessy

Baby
March 7, Shanghai,
6 ringtones

File Home Insert Formulas Review View

|  | F | G | H |
|---|---|---|---|
| 1 | Score | Pass |  |
| 2 | 88 | Yes |  |
| 3 |  |  |  |
| 4 |  |  |  |
| 5 |  |  |  |
| 6 |  |  |  |
| 7 |  |  |  |

Games

FIG. 16(a)

EP 4 321 978 A1

CONT.
FROM
FIG. 16(a)

Q  [A]  [Pin]  08:08

**Contacts**

Jack

Baby

Ann

Jessy

Baby
March 7, Shanghai,
6 ringtones

File Home Insert Formulas Review View

| ◿ | F | G | H |
|---|---|---|---|
| 1 | Score | Pass | |
| 2 | 88 | Yes | |
| 3 | | | |
| 4 | | | |
| 5 | | | |
| 6 | | | |
| 7 | | | |

Games

FIG. 16(b)

Q  [A]  [Pin]  🔊  🔋  ᵢ|ᵢ  08:08

←    :: − □ ✕

‹ 👁 Tom

QWERTYUIOP
ASDFGHJKL
↑ ZXCVBNM ⌫
123  Space  Return
☺  🎤

←    :: − □ ✕

Contacts

Jack

Baby

Ann

Jessy

←    :: − □ ✕

Baby
March 7, Shanghai,  ❯
6 ringtones

Games  X  ♫

FIG. 16(c)

EP 4 321 978 A1

Display a window of a first application at a first position on a display — S1701

Receive a first display operation used to display a second application — S1702

In response to the first display operation, display the window of the first application and a window of the second application on the display in a tiled manner, where the window of the first application is adjusted to be displayed at a second position, the first position is different from the second position, and the tiled manner means that the displayed windows of the applications do not overlap each other — S1703

If a focusing operation used to focus on a displayed window of an application is received, in response to the focusing operation, display the focused window of the application on the display in a close-to-full-screen size, and display a displayed window of the other application in a scaled-down form, where the displayed windows of the applications do not overlap each other, the focused window of the application is an activated window, and the displayed window that is of the other application and that is displayed in the scaled-down form is an inactivated window — S1704

If a first maximization operation used to maximize a displayed window of an application is received, in response to the first maximization operation, display a maximized window of the application on the display in a full-screen size, and hide a displayed window of the other application — S1705

If a retrieval operation used to retrieve a previously hidden application is received, in response to the retrieval operation, display a floating ball of the previously hidden application on the displayed window of the application — S1706

FIG. 17

FIG. 18

## INTERNATIONAL SEARCH REPORT

| International application No. |
| --- |
| **PCT/CN2022/085006** |

**A.  CLASSIFICATION OF SUBJECT MATTER**

G06F 3/0481(2022.01)i

According to International Patent Classification (IPC) or to both national classification and IPC

**B.  FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, WPI, EPODOC, IEEE, ISI, CNKI: 显示, 应用, 程序, 重叠, 平铺, 调整, 第二, 缩小, 最大化, show, apply, program, overlap, tile, resize, second, shrink, maximize

**C.  DOCUMENTS CONSIDERED TO BE RELEVANT**

| Category* | Citation of document, with indication, where appropriate, of the relevant passages | Relevant to claim No. |
| --- | --- | --- |
| X | CN 109151581 A (BEIJING QIYI CENTURY SCIENCE & TECHNOLOGY CO., LTD.) 04 January 2019 (2019-01-04)<br>abstract, and description, paragraphs [0045]-[0206] | 1-32 |
| A | CN 112269515 A (OPPO GUANGDONG MOBILE TELECOMMUNICATIONS CO., LTD.) 26 January 2021 (2021-01-26)<br>entire document | 1-32 |
| A | CN 104063128 A (LENOVO (BEIJING) LTD.) 24 September 2014 (2014-09-24)<br>entire document | 1-32 |
| A | CN 105094499 A (QINGDAO HISENCE MOBILE COMMUNICATIONS TECHNOLOGY CO., LTD.) 25 November 2015 (2015-11-25)<br>entire document | 1-32 |

☐ Further documents are listed in the continuation of Box C.  ☑ See patent family annex.

\*    Special categories of cited documents:
"A"  document defining the general state of the art which is not considered to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
| --- | --- |
| **18 April 2022** | **26 April 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/085006**

| Patent document cited in search report | | | Publication date (day/month/year) | Patent family member(s) | | | Publication date (day/month/year) |
|---|---|---|---|---|---|---|---|
| CN | 109151581 | A | 04 January 2019 | None | | | |
| CN | 112269515 | A | 26 January 2021 | None | | | |
| CN | 104063128 | A | 24 September 2014 | None | | | |
| CN | 105094499 | A | 25 November 2015 | US | 2015309668 | A1 | 29 October 2015 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110483897

- CN 202110540296